(19) Europäisches Patentamt
European Patent Office
Office européen des brevets

(11) EP 4 711 389 A1

(12) **EUROPEAN PATENT APPLICATION**
published in accordance with Art. 153(4) EPC

(43) Date of publication:
**18.03.2026 Bulletin 2026/12**

(21) Application number: **24815624.2**

(22) Date of filing: **31.05.2024**

(51) International Patent Classification (IPC):
***C08F 14/18*** (2006.01) ***C08F 2/30*** (2006.01)
***C08F 214/18*** (2006.01) ***C08F 259/02*** (2006.01)
***C08F 259/08*** (2006.01) ***C08L 27/12*** (2006.01)

(52) Cooperative Patent Classification (CPC):
**C08F 2/30; C08F 14/18; C08F 214/18; C08F 259/02; C08F 259/08; C08L 27/12**

(86) International application number:
**PCT/JP2024/020079**

(87) International publication number:
**WO 2024/248144 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.05.2023 JP 2023090126**

(71) Applicant: **Daikin Industries, Ltd.**
**Osaka-shi, Osaka 530-0001 (JP)**

(72) Inventors:
- **YOSHIOKA, Takuya**
  **Osaka-Shi, Osaka 530-0001 (JP)**
- **YAMAMOTO, Emi**
  **Osaka-Shi, Osaka 530-0001 (JP)**
- **FUJIMOTO, Yohei**
  **Osaka-Shi, Osaka 530-0001 (JP)**
- **KATO, Taketo**
  **Osaka-Shi, Osaka 530-0001 (JP)**
- **YAMANAKA, Taku**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) METHOD FOR PRODUCING AQUEOUS FLUOROPOLYMER DISPERSION, AND AQUEOUS FLUOROPOLYMER DISPERSION

(57) Provided is a method for producing a fluoropolymer aqueous dispersion, the method comprising polymerizing a fluoromonomer in an aqueous medium in the presence of a polymer (I) containing a polymerization unit (I) derived from a monomer (I) represented by the general formula (I): $CX^1X^3=CX^2R(-CZ^1Z^2-A^0)_m$ to obtain a polymerization dispersion containing a fluoropolymer excluding the polymer (I), the polymer (I), and the aqueous medium, then mixing the polymerization dispersion, a nonionic surfactant, and a fluorine-free water-soluble electrolyte to prepare an unconcentrated composition, and concentrating the unconcentrated composition to thereby obtain an aqueous dispersion containing the fluoropolymer.

EP 4 711 389 A1

## Description

TECHNICAL FIELD

The present disclosure relates to a method for producing a fluoropolymer aqueous dispersion and a fluoropolymer aqueous dispersion.

BACKGROUND ART

Patent Document 1 discloses a method for producing a fluoropolymer aqueous dispersion, the method comprising concentrating a composition comprising a polymer (I) containing a polymerization unit (I) derived from a monomer (I) represented by the general formula (I), a fluoropolymer excluding the polymer (I), a nonionic surfactant, a fluorine-free anionic surfactant, and an aqueous medium to thereby obtain an aqueous dispersion containing the fluoropolymer,

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

RELATED ART

PATENT DOCUMENTS

Patent Document 1: International Publication No. WO

SUMMARY OF THE INVENTION

PROBLEM TO BE SOLVED BY THE INVENTION

An object of the present disclosure is to provide a method for producing a fluoropolymer aqueous dispersion, the method being capable of promptly increasing the concentration of a fluoropolymer in a composition containing the fluoropolymer, a specific polymer, and an aqueous medium.

MEANS FOR SOLVING THE PROBLEM

The present disclosure provides a method for producing a fluoropolymer aqueous dispersion, the method comprising polymerizing a fluoromonomer in an aqueous medium in the presence of a polymer (I) containing a polymerization unit (I) derived from a monomer (I) represented by the general formula (I) to obtain a polymerization dispersion containing a fluoropolymer excluding the polymer (I), the polymer (I), and the aqueous medium, then mixing the polymerization dispersion, a nonionic surfactant, and a fluorine-free water-soluble electrolyte to prepare an unconcentrated composition, and concentrating the unconcentrated composition to thereby obtain an aqueous dispersion containing the fluoropolymer:

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

EFFECT OF INVENTION

The present disclosure can provide a method for producing a fluoropolymer aqueous dispersion, the method being capable of promptly increasing the concentration of a fluoropolymer in a composition containing the fluoropolymer, a specific polymer, and an aqueous medium.

DESCRIPTION OF EMBODIMENTS

Before specifically describing the present disclosure, some terms used herein are defined or explained.

The fluororesin as used herein means a partially crystalline fluoropolymer which is a fluoroplastic. The fluororesin has a melting point and has thermoplasticity, and may be either melt-fabricable or non melt-processible.

The melt-fabricable as used herein means that a polymer has an ability to be processed in a molten state using a conventional processing device such as an extruder or an injection molding machine. Accordingly, a melt-processable fluororesin usually has a melt flow rate of 0.01 to 500 g/10 min as measured by the measurement method described below.

The fluoroelastomer as used herein is an amorphous fluoropolymer. Being "amorphous" means that the size of a melting peak (ΔH) appearing in differential scanning calorimetry (DSC) (temperature-increasing rate 10°C/min) or differential thermal analysis (DTA) (temperature-increasing rate 10°C/min) of the fluoropolymer is 4.5 J/g or less. The fluoroelastomer exhibits elastomeric characteristics when crosslinked. Elastomeric characteristics mean such characteristics that the polymer can be stretched, and retain its original length when the force required to stretch the polymer is no longer applied.

The partially fluorinated elastomer as used herein means a fluoropolymer containing a fluoromonomer unit, having a perfluoromonomer unit content of less than 90 mol% based on all polymerization units, having a glass transition temperature of 20°C or lower, and having a melting peak (ΔH) of 4.5 J/g or lower.

The perfluoroelastomer as used herein means a fluoropolymer having a perfluoromonomer unit content of 90 mol% or more, preferably 91 mol% or more based on all polymerization units, having a glass transition temperature of 20°C or lower, having a melting peak (ΔH) of 4.5 J/g or lower, and having a fluorine atom concentration in the fluoropolymer of 71% by mass or more, preferably 71.5% by mass or more. The fluorine atom concentration in the fluoropolymer as used herein is the concentration (% by mass) of the fluorine atoms contained in the fluoropolymer calculated based on the type and content of each monomer constituting the fluoropolymer.

The perfluoromonomer as used herein means a monomer free from a carbon-hydrogen bond in the molecule. The perfluoromonomer may be a monomer containing carbon atoms and fluorine atoms in which some of the fluorine atoms bonded to any of the carbon atoms are replaced by chlorine atoms, and may be a monomer containing a nitrogen atom, an oxygen atom, a sulfur atom, a phosphorus atom, a boron atom, or a silicon atom in addition to the carbon atoms. The perfluoromonomer is preferably a monomer in which all the hydrogen atoms are replaced with fluorine atoms. The perfluoromonomer does not encompass a monomer that provides a crosslinking site.

The monomer that provides a crosslinking site is a monomer (cure-site monomer) having a crosslinkable group that provides the fluoropolymer with a crosslinking site for forming a crosslink with the curing agent.

Polytetrafluoroethylene (PTFE) as used herein is preferably a fluoropolymer having a tetrafluoroethylene unit content of 99 mol% or more based on all polymerization units.

The fluororesin excluding polytetrafluoroethylene and the fluoroelastomer as used herein are each preferably a fluoropolymer having a tetrafluoroethylene unit content of less than 99 mol% based on all polymerization units.

Herein, the content of each monomer constituting the fluoropolymer can be calculated by any suitable combination of NMR, FT-IR, elemental analysis, and X-ray fluorescence analysis according to the type of monomer.

The term "organic group" as used herein means a group containing one or more carbon atoms or a group formed by removing one hydrogen atom from an organic compound.

The organic group is preferably an alkyl group optionally having one or more substituents.

A range specified by the endpoints as used herein includes all numerical values within the range (for example, the range of 1 to 10 includes 1.4, 1.9, 2.33, 5.75, 9.98, and the like).

The phrase "at least one" as used herein includes all numerical values equal to or greater than 1 (such as at least 2, at least 4, at least 6, at least 8, at least 10, at least 25, at least 50, and at least 100).

Hereinafter, specific embodiments of the present disclosure will now be described in detail, but the present disclosure is not limited to the following embodiments.

In the production method of the present disclosure, a fluoromonomer is polymerized in an aqueous medium in the presence of a polymer (I) to obtain a polymerization dispersion, then the polymerization dispersion, a nonionic surfactant, and a fluorine-free water-soluble electrolyte are mixed to prepare an unconcentrated composition, and the unconcentrated composition is concentrated to thereby obtain an aqueous dispersion containing the fluoropolymer.

In relation to a technique of concentrating a composition containing a polymer (I), Patent Document 1 states that the concentration of a fluoropolymer can be promptly increased by concentrating a composition containing a polymer (I), the fluoropolymer, and an aqueous medium, with a nonionic surfactant and a fluorine-free anionic surfactant being present in the composition.

In the present disclosure, a composition containing a polymer (I), a fluoropolymer, and an aqueous medium is concentrated with a nonionic surfactant and a fluorine-free water-soluble electrolyte being present in the composition. Such a concentration method can promptly increase the concentration of the fluoropolymer. In addition, the resulting fluoropolymer aqueous dispersion is unlikely to undergo decrease in pH even if stored over a long period.

(Fluorine-free water-soluble electrolyte)

The fluorine-free water-soluble electrolyte is a compound containing no fluorine atom and is a compound that is dissolved in water and ionized into a cation and an anion. The fluorine-free water-soluble electrolyte may be an organic compound or may be an inorganic compound. The fluorine-free water-soluble electrolyte has water solubility to the extent that, for example, 1 g or more is dissolved in 100 g of water of 25°C.

The fluorine-free water-soluble electrolyte used in the production method of the present disclosure has no surfactant function. In one embodiment, the surface tension of an aqueous solution containing 0.1% by mass of the fluorine-free water-soluble electrolyte is larger than 60 mN/m. The surface tension of the fluorine-free water-soluble electrolyte can be measured by the Wilhelmy method at 25°C.

The fluorine-free water-soluble electrolyte is preferably at least one selected from the group consisting of an acid and a salt thereof, more preferably at least one selected from the group consisting of monovalent to trivalent acids and a salt thereof, and even more preferably at least one selected from the group consisting of divalent to trivalent acids and a salt thereof.

Examples of the cation constituting the salt include ions of metals such as sodium and potassium, and nonmetal ions such as ammonium ions. A nonmetal ion is preferred, and an ammonium ion is more preferred, because the entrance of a metal to the fluoropolymer aqueous dispersion can be avoided.

The fluorine-free water-soluble electrolyte is even more preferably at least one selected from the group consisting of carbonic acid, carbonate, sulfuric acid, sulfate, oxalic acid, oxalate, a carboxylic acid represented by the general formula (11) and a salt thereof, and a sulfonic acid represented by the general formula (12) and a salt thereof, and yet more preferably carbonic acid, carbonate, sulfuric acid, sulfate, oxalic acid, oxalate, and carboxylic acid represented by the general formula (11) and a salt thereof:

the general formula (11): $R^1\text{-}(COOH)_n$

wherein $R^1$ is a monovalent to trivalent organic group having 1 to 10 carbon atoms, and n is an integer of 1 to 3,

the general formula (12) : $R^2\text{-}(SO_3H)_z$

wherein $R^2$ is a monovalent to trivalent organic group having 1 to 10 carbon atoms, and z is an integer of 1 to 3.

The pyrolysis temperature of the carboxylic acid represented by the general formula (11) and the salt thereof is preferably lower than 220°C, more preferably 210°C or lower, even more preferably 200°C or lower, and particularly preferably 190°C or lower, and preferably 80°C or higher, and more preferably 100°C or higher.

The pyrolysis temperature is a temperature at which the amount of decrease in weight reaches 1% of an initial weight in thermogravimetry (TG) (temperature-increasing rate 10°C/min, under dry air) of the carboxylic acid and the salt thereof.

n in the general formula (11) is preferably 2 or 3. $R^1$ in the general formula (11) is preferably a divalent to trivalent organic group having 1 to 10 carbon atoms.

The number of carbon atoms in $R^1$ in the general formula (11) is preferably 2 or more, and preferably 5 or less, more preferably 4 or less, and even more preferably 3 or less.

$R^1$ in the general formula (11) is preferably a hydrocarbon group in which some of the hydrogen atoms bonded to carbon atoms may be replaced with hydroxy groups. The number of carbon atoms in the hydrocarbon group of $R^1$ is preferably 1 or more, and more preferably 2 or more, and preferably 5 or less, more preferably 4 or less, and even more preferably 3 or less.

The pyrolysis temperature of the sulfonic acid represented by the general formula (12) and the salt thereof is preferably lower than 220°C, more preferably 210°C or lower, even more preferably 200°C or lower, and particularly preferably 190°C or lower, and preferably 80°C or higher, and more preferably 100°C or higher.

The pyrolysis temperature is a temperature at which the amount of decrease in weight reaches 1% of an initial weight in thermogravimetry (TG) (temperature-increasing rate 10°C/min, under dry air) of the sulfonic acid and the salt thereof.

z in the general formula (12) is preferably 2 or 3. $R^2$ in the general formula (12) is preferably a divalent to trivalent organic group having 1 to 10 carbon atoms.

The number of carbon atoms in $R^2$ in the general formula (12) is preferably 2 or more, and preferably 5 or less, more preferably 4 or less, and even more preferably 3 or less.

$R^2$ in the general formula (12) is preferably a hydrocarbon group in which some of the hydrogen atoms bonded to carbon atoms may be replaced with hydroxy groups. The number of carbon atoms in the hydrocarbon group of $R^2$ is preferably 1 or more, and more preferably 2 or more, and preferably 5 or less, more preferably 4 or less, and even more preferably 3 or less.

The fluorine-free water-soluble electrolyte is preferably at least one selected from the group consisting of sulfuric acid, citric acid, succinic acid, carbonic acid, tartaric acid, maleic acid, malic acid, oxalic acid, malonic acid, and a salt thereof, and more preferably at least one selected from the group consisting of ammonium sulfate and ammonium citrate, because the rate of concentration can be further increased.

(Nonionic surfactant)

The nonionic surfactant usually does not contain a charged group and has a hydrophobic moiety that is a long chain hydrocarbon. The hydrophilic moiety of the nonionic surfactant contains a water-soluble functional group such as a chain of ethylene ether derived from polymerization with ethylene oxide.
Examples of the nonionic surfactant are as follows:
Polyoxyethylene alkyl ether, polyoxyethylene alkyl phenyl ether, polyoxyethylene alkyl ester, sorbitan alkyl ester, polyoxyethylene sorbitan alkyl ester, glycerol ester, and derivatives thereof.
Specific examples of polyoxyethylene alkyl ether: polyoxyethylene lauryl ether, polyoxyethylene cetyl ether, polyoxyethylene stearyl ether, polyoxyethylene oleyl ether, and polyoxyethylene behenyl ether.
Specific examples of polyoxyethylene alkyl phenyl ether: polyoxyethylene nonylphenyl ether, polyoxyethylene octylphenyl ether, and the like.
Specific examples of polyoxyethylene alkyl esters: polyethylene glycol monolaurylate, polyethylene glycol monooleate, polyethylene glycol monostearate, and the like.
Specific examples of sorbitan alkyl ester: polyoxyethylene sorbitan monolaurate, polyoxyethylene sorbitan monopalmitate, polyoxyethylene sorbitan monostearate, polyoxyethylene sorbitan monooleate, and the like.
Specific examples of polyoxyethylene sorbitan alkyl ester: polyoxyethylene sorbitan monolaurate, polyoxyethylene sorbitan monopalmitate, polyoxyethylene sorbitan monostearate, and the like.
Specific examples of glycerol ester: glycerol monomyristate, glycerol monostearate, glycerol monooleate, and the like.
Specific examples of the derivatives: polyoxyethylene alkylamine, polyoxyethylene alkyl phenyl-formaldehyde condensate, and polyoxyethylene alkyl ether phosphate.
The ethers and esters may have an HLB value of 10 to 18.
Examples of nonionic surfactants include Triton(R) X series (X15, X45, X100, etc.), Tergitol(R) 15-S series, and Tergitol(R) TMN series (TMN-6, TMN-10, TMN-100X, etc.), Tergitol(R) L series manufactured by Dow Chemical Company, Pluronic(R) R series (31R1, 17R2, 10R5, 25R4 (m to 22, n to 23), and Iconol(R) TDA series (TDA-6, TDA-9, TDA-10) manufactured by BASF.
The nonionic surfactant is preferably a fluorine-free nonionic surfactant. Examples include ether-type nonionic surfactants such as polyoxyethylene alkyl phenyl ether, polyoxyethylene alkyl ether, and polyoxyethylene alkylene alkyl ether; polyoxyethylene derivatives such as ethylene oxide/propylene oxide block copolymers; ester-type nonionic surfactants such as sorbitan fatty acid esters, polyoxyethylene sorbitan fatty acid esters, polyoxyethylene sorbitol fatty acid esters, glycerin fatty acid esters, and polyoxyethylene fatty acid esters; and amine-based nonionic surfactants such as polyoxyethylene alkyl amine and alkylalkanolamide.
The hydrophobic group of the nonionic surfactant may be any of an alkylphenol group, a linear alkyl group, and a branched alkyl group.
The nonionic surfactant is preferably a nonionic surfactant represented by the general formula (i):

$$R^6\text{-O-}A^1\text{-H} \qquad \text{(i)}$$

wherein $R^6$ is a linear or branched primary or secondary alkyl group having 8 to 18 carbon atoms, and $A^1$ is a polyoxyalkylene chain.
In the general formula (i), the number of carbon atoms in $R^6$ is preferably 10 to 16, and more preferably 12 to 16. When the number of carbon atoms of $R^6$ is 18 or less, excellent precipitation stability of the composition is likely obtained. On the other hand, when the number of carbon atoms of $R^6$ exceeds 18, handleability is impaired because of a high flow temperature. When the number of carbon atoms of $R^6$ is 8 or less, the surface tension of the composition is increased and, thus, permeability and wettability are likely impaired.
The polyoxyalkylene chain of $A^1$ may be composed of oxyethylene and oxypropylene. The polyoxyalkylene chain is a polyoxyalkylene chain in which the average number of repeating oxyethylene groups is 5 to 20 and the average number of repeating oxypropylene groups is 0 to 2, and is a hydrophilic group. The number of oxyethylene units may have either a broad or narrow monomodal distribution as typically provided, or a broader or bimodal distribution which may be obtained by blending. When the average number of repeating oxypropylene groups is more than 0, the oxyethylene groups and oxypropylene groups in the polyoxyalkylene chain may be arranged in blocks or in a random manner. In terms of the viscosity and precipitation stability of the composition, a polyoxyalkylene chain in which the average number of repeating

oxyethylene groups is 7 to 12 and the average number of repeating oxypropylene groups is 0 to 2 is preferable. In particular, $A^1$ having 0.5 to 1.5 oxypropylene groups on average favorably results in reduced foamability, and is thus preferable.

More preferably, $R^6$ is (R') (R'')HC-, wherein R' and R" are the same or different linear, branched, or cyclic alkyl groups, and the total number of carbon atoms is at least 5, and preferably 7 to 17. Preferably, at least one of R' and R" is a branched or cyclic hydrocarbon group.

Specific examples of the polyoxyethylene alkyl ether include $C_{13}H_{27}$-O-$(C_2H_4O)_n$-H, $C_{12}H_{25}$-O-$(C_2H_4O)_n$-H, $C_{10}H_{21}CH(CH_3)CH_2$-O-$(C_2H_4O)_n$-H, $C_{13}H_{27}$-O-$(C_2H_4O)_n$-$(CH(CH_3)CH_2O)$-H, $C_{16}H_{33}$-O-$(C_2H_4O)_n$-H, and $HC(C_5H_{11})(C_7H_{15})$-O-$(C_2H_4O)_n$-H, wherein n is an integer of 1 or greater. Examples of commercially available products of the polyoxyethylene alkyl ether include Genapol X series (manufactured by Clariant) such as Genapol X080 (trade name), NOIGEN TDS series (manufactured by DKS Co., Ltd.) such as NOIGEN TDS-80 (trade name), LEOCOL TD series (manufactured by Lion Corp.) such as LEOCOL TD-90 (trade name), LIONOL(R) TD series (manufactured by Lion Corp.), T-Det A series (manufactured by Harcros Chemicals Inc.) such as T-Det A 138 (trade name), and Tergitol(R) 15 S series (manufactured by The Dow Chemical Company).

The nonionic surfactant is preferably an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available, for example, as TERGITOL TMN-6, TERGITOL TMN-10, and TERGITOL TMN-100X (all trade names, manufactured by Dow Chemical Co., Ltd.).

The hydrophobic group of the nonionic surfactant may be any of an alkylphenol group, a linear alkyl group, and a branched alkyl group. Examples of the nonionic surfactant include nonionic surfactants represented by the general formula (ii):

$$R^7\text{-}C_6H_4\text{-O-}A^2\text{-H} \qquad \text{(ii)}$$

wherein $R^7$ is a linear or branched alkyl group having 4 to 12 carbon atoms, and $A^2$ is a polyoxyalkylene chain. Specific examples of the nonionic surfactant include Triton(R) X-100 (trade name, manufactured by Dow Chemical Company).

The polyoxyalkylene chain of $A^2$ may be composed of oxyethylene and oxypropylene. The polyoxyalkylene chain is a polyoxyalkylene chain in which the average number of repeating oxyethylene groups is 5 to 20 and the average number of repeating oxypropylene groups is 0 to 2, and is a hydrophilic group. The number of oxyethylene units may have either a broad or narrow monomodal distribution as typically provided, or a broader or bimodal distribution which may be obtained by blending. When the average number of repeating oxypropylene groups is more than 0, the oxyethylene groups and oxypropylene groups in the polyoxyalkylene chain may be arranged in blocks or in a random manner. In terms of the viscosity and precipitation stability of the composition, a polyoxyalkylene chain in which the average number of repeating oxyethylene groups is 7 to 12 and the average number of repeating oxypropylene groups is 0 to 2 is preferable. In particular, $A^2$ having 0.5 to 1.5 oxypropylene groups on average favorably results in reduced foamability, and is thus preferable.

More preferably, $R^7$ is a primary or secondary alkyl group, and more preferably (R') (R'')HC-, wherein R' and R'' are the same or different linear, branched, or cyclic alkyl groups, and the total number of carbon atoms is at least 5, and preferably 7 to 17. Preferably, at least one of R' and R'' is a branched or cyclic hydrocarbon group.

Examples of the nonionic surfactant also include polyol compounds. Specific examples include those described in International Publication No. WO 2011/014715. Typical examples of the polyol compound include compounds having one or more sugar units as polyol unit. The sugar units may be modified so as to contain at least one long chain. Examples of suitable polyol compounds containing at least one long chain moiety include alkyl glycosides, modified alkyl glycosides, sugar esters, and combinations thereof. Examples of sugars include, but are not limited to, monosaccharides, oligosaccharides, and sorbitanes. Examples of monosaccharides include pentoses and hexoses. Typical examples of monosaccharides include ribose, glucose, galactose, mannose, fructose, arabinose, and xylose. Examples of oligosaccharides include oligomers of 2 to 10 identical or different monosaccharides. Examples of oligosaccharides include, but are not limited to, saccharose, maltose, lactose, raffinose, and isomaltose.

Typically, sugars suitable for use as polyol compounds include cyclic compounds containing a 5-membered ring of four carbon atoms and one heteroatom (typically oxygen or sulfur, preferably oxygen atom), or cyclic compounds containing a 6-membered ring of five carbon atoms and one heteroatom as described above, preferably, an oxygen atom. These further contain at least two or at least three hydroxy groups (-OH groups) bonded to carbon ring atoms. Typically, the sugars are modified in terms of that one or more hydrogen atoms of hydroxy groups (and/or hydroxyalkyl groups) bonded to carbon ring atoms are replaced with long chain residues such that an ether or ester bond is created between a long chain residue and a sugar moiety. The sugar-based polyol may contain a single sugar unit or a plurality of sugar units. The single sugar unit or the plurality of sugar units may be modified with a long chain moiety described above. Specific examples of sugar-based polyol compounds include glycosides, sugar esters, sorbitan esters, and mixtures and combinations thereof.

A preferable type of polyol compound is an alkyl or modified alkyl glucoside. These types of surfactant contain at least one glucose moiety.

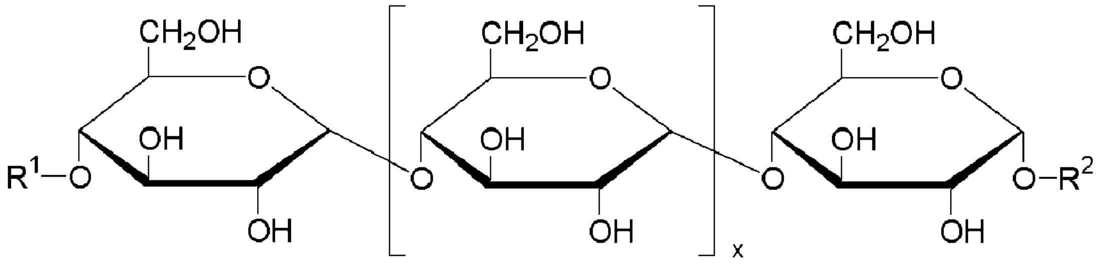

wherein x represents 0, 1, 2, 3, 4, or 5, and $R^1$ and $R^2$ each independently represent H or a long chain unit containing at least 6 carbon atoms, provided that at least one of $R^1$ and $R^2$ is not H. Typical examples of $R^1$ and $R^2$ include aliphatic alcohol residues. Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. It is understood that the above formula represents specific examples of alkyl poly glucosides showing glucose in its pyranose form but other sugars or the same sugars but in different enantiomeric or diastereomeric forms may also be used.

Alkyl glucosides are available, for example, by acid-catalyzed reactions of glucose, starch, or n-butyl glucoside with aliphatic alcohols which typically yields a mixture of various alkyl glucosides (Alkyl polygylcoside, Rompp, Lexikon Chemie, Version 2.0, Stuttgart/New York, Georg Thieme Verlag, 1999). Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. Alkyl glucosides are also commercially available under the trade name GLUCOPON or DISPONIL from Cognis GmbH, Dusseldorf, Germany.

Examples of other nonionic surfactants include bifunctional block copolymers supplied from BASF as Pluronic(R) R series and tridecyl alcohol alkoxylates supplied from BASF as Iconol(R) TDA series.

The nonionic surfactant is preferably at least one selected from the group consisting of a nonionic surfactant represented by the general formula (i) and a nonionic surfactant represented by the general formula (ii), and more preferably a nonionic surfactant represented by the general formula (i).

The nonionic surfactant is preferably free from an aromatic moiety.

(Unconcentrated composition)

In the production method of the present disclosure, after a fluoromonomer is polymerized to obtain a polymerization dispersion, the obtained polymerization dispersion, a nonionic surfactant, and a fluorine-free water-soluble electrolyte are mixed to prepare an unconcentrated composition.

The content of the fluorine-free water-soluble electrolyte in the unconcentrated composition is preferably 0.01% by mass or more, more preferably 0.1% by mass or more, even more preferably 0.2% by mass or more, and yet more preferably 0.3% by mass or more, and preferably 5.0% by mass or less, more preferably 3.0% by mass or less, even more preferably 2.0% by mass or less, and yet more preferably 1.5% by mass or less, based on the fluoropolymer. By regulating the content of the fluorine-free water-soluble electrolyte to be within the above range, the concentration of the fluoropolymer in the composition can be increased at a much higher rate. When the content of the fluorine-free water-soluble electrolyte is excessively small, concentration may not progress at a sufficient rate. When the content of the fluorine-free water-soluble electrolyte is excessively large, concentration may be difficult.

The content of the fluorine-free water-soluble electrolyte in the composition can be determined by calculation from the amount of the fluorine-free water-soluble electrolyte used in the preparation of the unconcentrated composition.

The content of the nonionic surfactant in the unconcentrated composition is preferably 1.0% by mass or more, and is preferably 40% by mass or less, more preferably 30% by mass or less, and even more preferably 25% by mass or less based on the fluoropolymer. An excessively small content of the nonionic surfactant makes it difficult to carry out concentration, and an excessively large content of the nonionic surfactant may deteriorate economy.

The content (N% by mass) of the nonionic surfactant based on the fluoropolymer is a value calculated according to the equation: $N=[(Y-Z)/Z]\times 100$ (% by mass) from the heating residue (Y g) obtained by heating about 1 g (X g) of a sample at 110°C for 30 minutes and the heating residue (Z g) obtained by heating the obtained heating residue (Y g) at 300°C for 30 minutes.

The content (solid concentration) of the fluoropolymer in the unconcentrated composition is usually 8 to 50% by mass, preferably 10% by mass or more, and more preferably 15% by mass or more, and preferably 40% by mass or less,

and more preferably 35% by mass or less.

The content (P% by mass) of the fluoropolymer in the unconcentrated composition is a value calculated according to the equation: $P=[Z/X]\times 100$ (% by mass) from the heating residue (Y g) obtained by heating about 1 g (X g) of a sample at 110°C for 30 minutes and the heating residue (Z g) obtained by heating the obtained heating residue (Y g) at 300°C for 30 minutes.

The pH of the unconcentrated composition is preferably 4.0 to 11.5, more preferably 7.0 or higher, even more preferably 8.0 or higher, and particularly preferably 9.0 or higher. By regulating the pH of the unconcentrated composition to be within the above range, the rate of concentration can be further increased.

In one embodiment, the unconcentrated composition contains a fluorine-containing surfactant. Even when the composition contains a fluorine-containing surfactant, the fluorine-containing surfactant is removed from the composition by carrying out concentration, and a fluoropolymer aqueous dispersion having a reduced content of the fluorine-containing surfactant can be obtained.

In one embodiment, the unconcentrated composition is substantially free from a fluorine-containing surfactant. Herein, the phrase "is substantially free from a fluorine-containing surfactant" means that the content of the fluorine-containing surfactant in the composition is 10 mass ppm or less, preferably 1 mass ppm or less, more preferably 100 mass ppb or less, even more preferably 10 mass ppb or less, yet more preferably 1 mass ppb or less, and particularly preferably less than the detection limit of measurement by liquid chromatography-mass spectrometry (LC/MS).

The content of the fluorine-containing surfactant can be measured by, for example, adding methanol to the composition to carry out extraction and subjecting the resulting extracted liquid to an LC/MS analysis.

To further increase extraction efficiency, treatment by Soxhlet extraction, ultrasonic treatment, or the like may be performed.

From the resulting LC/MS spectrum, molecular weight information is extracted, and a match with the structural formula of a candidate fluorine-containing surfactant is checked.

Thereafter, aqueous solutions having five or more different content levels of the confirmed fluorine-containing surfactant are prepared, and LC/MS analysis of the aqueous solution of each content is performed, and the relationship between the content and the area for the content is plotted, and a calibration curve is drawn.

Then, using the calibration curve, the area of the LC/MS chromatogram of the fluorine-containing surfactant in the extract can be converted into the content of the fluorine-containing surfactant.

(Concentration)

In the production method of the present disclosure, after an unconcentrated composition is prepared, the unconcentrated composition is concentrated to thereby obtain an aqueous dispersion containing the fluoropolymer.

Before concentration of the unconcentrated composition or during concentration of the unconcentrated composition, an aqueous medium such as water or an alcohol may be added to the composition. The aqueous medium may be a single component of water or an alcohol or the like or may be a mixture of water and an alcohol or the like.

Examples of the concentration method include phase separation concentration, electrophoresis, an ion exchanger method, and membrane concentration. The phase separation concentration, ion exchanger method, and membrane concentration method can be carried out under conventionally known treatment conditions, and can be carried out by, but are not limited to, the methods disclosed in International Publication No. WO 2004/050719, National Publication of International Patent Application No. 2002-532583, and Japanese Patent Laid-Open No. 55-120630.

The concentration method is preferably phase separation concentration. The phase separation concentration can be performed, for example, by heating the unconcentrated composition to cause phase separation into a fluoropolymer-free phase (supernatant phase) and a fluoropolymer-containing phase (condensed phase), removing the fluoropolymer-free phase, and recovering the fluoropolymer-containing phase (condensed phase).

The recovered fluoropolymer-containing phase (condensed phase) contains the fluoropolymer, the nonionic surfactant, the fluorine-free water-soluble electrolyte, and the aqueous medium.

The temperature of the phase separation concentration can be selected in reference to the cloud point of the nonionic surfactant contained in the unconcentrated composition. The temperature of the phase separation concentration is preferably 10°C lower than the cloud point of the nonionic surfactant or higher, and preferably 10°C higher than the cloud point of the nonionic surfactant or lower.

In the production method of the present disclosure, it is also preferable to repeat the phase separation concentration.

The number of repeats is not limited, and is preferably 2 or more and more preferably 3 or more. The upper limit of the number is not limited, and may be, for example, 10 or less.

In the case where the phase separation concentration is repeated two or more times, the first phase separation concentration is preferably performed by heating the composition at a temperature equal to or higher than a temperature that is 10°C lower than the cloud point of the nonionic surfactant and then allowing the composition to stand still to separate

it into a supernatant phase and a condensed phase. The second or subsequent phase separation concentration is preferably performed by heating the composition to a temperature equal to or higher than a temperature that is 10°C lower than the cloud point of the nonionic surfactant and then allowing the composition to stand still to separate it into a supernatant phase and a condensed phase.

In the case where the phase separation concentration is repeated a plurality of times in the production method of the present disclosure, the first phase separation concentration is also preferably performed in the presence of the fluorine-free water-soluble electrolyte.

When repeating the phase separation concentration multiple times, it is possible that, except for the final phase separation concentration, the phase separation concentration is stopped when the solid concentration of the fluoropolymer in the composition reaches 48 to 52% by mass, an aqueous medium is added to the concentrated composition, and then the phase separation concentration is repeated. By stopping the phase separation concentration when the solid concentration of the fluoropolymer reaches the above range, each phase separation concentration can be completed in a short period of time and, as a result, the total time required for the phase separation concentration can be shortened.

An anionic surfactant may be added to the fluoropolymer aqueous dispersion obtained by concentration. Examples of the anionic surfactant include fluorine-free anionic surfactants which contain no fluorine, and fluorine-containing anionic surfactants, and preferred is a fluorine-free anionic surfactant which contains no fluorine (i.e., a hydrocarbon anionic surfactant).

For the purpose of regulating viscosity, the anionic surfactant is not limited by its type as long as the anionic surfactant is known. For example, fluorine-free anionic surfactants described in International Publication Nos. 2013/146950 and 2013/146947 can be used. Examples thereof include those having a saturated or unsaturated aliphatic chain with 6 to 40 carbon atoms, preferably 8 to 20 carbon atoms, and more preferably with 9 to 13 carbon atoms. The saturated or unsaturated aliphatic chain may be either linear or branched, or may have a cyclic structure. The hydrocarbon may be aromatic, or may have an aromatic group. The hydrocarbon may contain a hetero atom such as oxygen, nitrogen, or sulfur.

Examples of the fluorine-free anionic surfactant include: alkyl sulfonate, alkyl sulfate, alkylaryl sulfate, and salts thereof; fatty acids (aliphatic carboxylic acids) and salts thereof; and phosphoric acid alkyl ester, phosphoric acid alkylaryl ester, and salts thereof, and preferred is alkyl sulfonate, alkyl sulfate, aliphatic carboxylic acid, or a salt thereof.

The alkyl sulfate or the salt thereof is preferably, for example, lauryl ammonium sulfate or sodium lauryl sulfate.

The fatty acid (aliphatic carboxylic acid) or the salt thereof is preferably succinic acid, decanoic acid, undecanoic acid, undecenoic acid, lauric acid, hydrododecanoic acid, or a salt thereof.

The fluorine-free anionic surfactant is preferably at least one selected from the group consisting of alkyl sulfate and a salt thereof, and a fatty acid and a salt thereof.

The content of the fluorine-free anionic surfactant depends on the types of the fluorine-free anionic surfactant and other compounding agents and is preferably 10 ppm to 5000 ppm based on the solid mass of the fluoropolymer.

The lower limit of the amount of the fluorine-free anionic surfactant added is more preferably 50 ppm or more, and even more preferably 100 ppm or more. The fluorine-free anionic surfactant added in an excessively small amount is poorly effective for regulating viscosity.

The upper limit of the amount of the fluorine-free anionic surfactant added is more preferably 4000 ppm or less, and even more preferably 3000 ppm or less. The fluorine-free anionic surfactant added in an excessively large amount may elevate viscosity, particularly, may largely elevate viscosity at high temperatures. Besides, foaming may be increased.

For the purpose of regulating the viscosity of the fluoropolymer aqueous dispersion obtained by concentration, for example, methylcellulose, alumina sol, polyvinyl alcohol, or a carboxylated vinyl polymer may be mixed thereinto, in addition to the fluorine-free anionic surfactant.

For the purpose of regulating the pH of the fluoropolymer aqueous dispersion obtained by concentration, a pH adjuster such as ammonia water may be mixed thereinto.

The pH of the fluoropolymer aqueous dispersion obtained by concentration is preferably 8 to 13, more preferably 9 to 12, and even more preferably 9 to 11.

The pH is a value measured at 25°C in accordance with JIS K6893.

A further water-soluble polymer compound may optionally be added to the fluoropolymer aqueous dispersion obtained by concentration.

Examples of the further water-soluble polymer compound include, but are not limited to, polyethylene oxide (dispersion stabilizer), polyethylene glycol (dispersion stabilizer), polyvinylpyrrolidone (dispersion stabilizer), phenol resin, urea resin, epoxy resin, melamine resin, polyester resin, polyether resin, acrylic silicone resin, silicone resin, silicone polyester resin, and polyurethane resin. The fluoropolymer aqueous dispersion may further contain a preservative such as isothiazolones, azoles, pronopol, chlorothalonil, methylsulfonyltetrachloropyrrolidine, carbendazim, fluoroforbet, sodium diacetate, or diiodomethyl p-tolylsulfone.

An antifoaming agent may be added to the fluoropolymer aqueous dispersion obtained by concentration. The

antifoaming agent can be appropriately added without economic and environmental problems.

Various antifoaming agents for aqueous uses can be used, and examples thereof include: lower alcohols such as methanol, ethanol, and butanol; higher alcohols such as amyl alcohol, polypropylene glycol, and derivatives thereof; oils and fats such as oleic acid, tall oil, mineral oil, and soap; surfactants such as sorbitan fatty acid ester, polyethylene glycol fatty acid ester, and Pluronic(R) type nonionic surfactants; silicone surfactants such as siloxane and silicone resin; and surfactants such as alkanediol and acetylenediol surfactants, which are used singly or in combination. Representative examples of commercially available products of the antifoaming agent include: B-series such as Adeka Nate B and Adeka Nate B1068 (manufactured by Adeka Corp.); Foamaster DL, Nopco NXZ, and SN defoamer series such as SN defoamer 113, 325, 308, and 368; Dehydran 1293 and Dehydran 1513 (manufactured by San Nopco Ltd.); FLOWNON SB-110N, SB-210, 510, and 551, Aqualen 800, 805, and Aqualen 1488 (manufactured by Kyoeisha Chemical Co., Ltd.); Surfynol 104E and 440 (manufactured by Evonik Industries AG); KS-607A (manufactured by Shin-Etsu Chemical Co., Ltd.); FS Antifoam (manufactured by Dow Corning Corp.); BYK-020, 031, 073, and W (manufactured by BYK Chemie); Dehydran 981 (manufactured by Henkel Hakusui Corp.); Epan-410, 710, and 720 (manufactured by DKS Co., Ltd.); Tego Foamex series (manufactured by Tego Goldschmidt); and Foamlex-747, TY-10, EP series (manufactured by Nicca Chemical Co., Ltd.). The content of the antifoaming agent is preferably 0.01 to 10% by mass, and particularly preferably 0.05 to 5% by mass based on the fluoropolymer aqueous dispersion.

Although the antifoaming agent may be added to the fluoropolymer aqueous dispersion obtained by concentration, it is preferable to not add the antifoaming agent. The absence of addition is advantageous in terms of cost. The antifoaming agent added may color the fluoropolymer aqueous dispersion when a coating film is prepared therefrom.

(Polymerization dispersion)

The polymerization dispersion used in the production method of the present disclosure can be produced by polymerizing a fluoromonomer in an aqueous medium in the presence of a polymer (I). The polymerization dispersion obtained by polymerization contains a fluoropolymer excluding the polymer (I), the polymer (I), and the aqueous medium.

The content (solid concentration) of the fluoropolymer in the polymerization dispersion is usually 10 to 50% by mass, more preferably 15% by mass or more, and preferably 40% by mass or less, and more preferably 35% by mass or less.

The content of the fluoropolymer in the polymerization dispersion is a value obtained by drying 1 g of the polymerization dispersion in an air dryer at 150°C for 60 minutes, measuring the mass of non-volatile matter, and calculating the proportion of the mass of the non-volatile matter based on the mass (1 g) of the polymerization dispersion in percentage.

(Polymer (I))

The polymer (I) used in the production method of the present disclosure contains a polymer unit (I) derived from a monomer (I) represented by the general formula (I):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

In the present disclosure, the anionic group includes a functional group that imparts an anionic group, e.g., an acid group such as -COOH and an acid base such as $-COONH_4$, in addition to anionic groups such as a sulfate group and a carboxylate group. The anionic group is preferably a sulfate group, a carboxylate group, a phosphate group, a phosphonate group, a sulfonate group, or $-C(CF_3)_2OM$, wherein M is -H, a metal atom, $-NR^7{}_4$, optionally substituted imidazolium, optionally substituted pyridinium, or optionally substituted phosphonium, and $R^7$ is H or an organic group.

In the production method of the present disclosure, one monomer (I) represented by the general formula (I) can be used singly, and two or more monomers (I) can be used as well.

R is a linking group. The "linking group" as used herein is a (m+1)-valent linking group, and refers to a divalent group when m is 1. The linking group may be a single bond and preferably contains at least one carbon atom, and the number of carbon atoms may be 2 or more, 4 or more, 8 or more, 10 or more, or 20 or more. The upper limit is not limited, and, for example, may be 100 or less, and may be 50 or less.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of ester, amide, sulfonamide, carbonyl, carbonate, urethane, urea, and carbamate. The linking group may be free from carbon atoms and

may be a catenary heteroatom such as oxygen, sulfur, or nitrogen.

m is an integer of 1 or more, and is preferably 1 or 2 and more preferably 1. When m is an integer of 2 or more, $Z^1$, $Z^2$, and $A^0$ may be the same or different.

Next, a suitable configuration wherein m is 1 in the general formula (I) will now be described.

R is preferably a catenary heteroatom such as oxygen, sulfur, or nitrogen, or a divalent organic group.

When R is a divalent organic group, a hydrogen atom bonded to a carbon atom may be replaced with a halogen other than fluorine, such as chlorine, and a double bond may be or may not be contained. R may be linear or branched, and may be cyclic or acyclic. R may also contain a functional group (e.g., ester, ether, ketone (a keto group), amine, halide, etc.).

R may also be a fluorine-free divalent organic group or a partially fluorinated or perfluorinated divalent organic group.

R may be, for example, a hydrocarbon group in which a fluorine atom is not bonded to a carbon atom, a hydrocarbon group in which some of the hydrogen atoms bonded to carbon atoms are replaced with fluorine atoms, or a hydrocarbon group in which all of the hydrogen atoms bonded to carbon atoms are replaced with fluorine atoms, and these groups optionally contain an oxygen atom, optionally contain a double bond, and optionally contain a functional group.

R is preferably a hydrocarbon group having 1 to 100 carbon atoms that optionally contains an ether bond or a keto group, wherein some or all of the hydrogen atoms bonded to carbon atoms in the hydrocarbon group may be replaced with fluorine.

R is preferably at least one selected from $-(CH_2)_a-$, $-(CF_2)_a-$, $-(CF_2)_a-O-$, $-O-(CF_2)_a-$, $-(CF_2)_a-O-(CF_2)_b-$, $-O(CF_2)_a-O-(CF_2)_b-$, $-(CF_2)_a-[O-(CF_2)_b]_c-$, $-O(CF_2)_a-[O-(CF_2)_b]_c-$, $-[(CF_2)_a-O]_b-[(CF_2)_c-O]_d-$, $-O[(CF_2)_a-O]_b-$, $-O[(CF_2)_a-O]_b-[(CF_2)-O]_d-$, $-O-[CF_2CF(CF_3)O]_a-(CF_2)_b-$, $-O-(CF_2)_a-O-[CF(CF_3)CF_2O]_b-$, $-O-[CF_2CF(CF_3)O]_a-(CF_2)_b-O-$, $-O-[CF_2CF(CF_3)O]_a-(CF_2)_b-O-[CF(CF_3)CF_2O]_c-$, $-[CF_2CF(CF_3)O]_a-$, $-[CF(CF_3)CF_2O]_a-$, $-(CF_2)_a-O-[CF(CF_3)CF_2O]_a-$, $-(CF_2)_a-O-[CF(CF_3)CF_2O]_a-(CF_2)_b-$, $-[CF_2CF(CF_3)]_a-CO-(CF_2)_b-$, and combinations thereof.

In the formulas, a, b, c, and d are independently at least 1 or more. a, b, c, and d may independently be 2 or more, 3 or more, 4 or more, 10 or more, or 20 or more. The upper limits of a, b, c, and d are, for example, 100.

R is more preferably at least one selected from $-O-CF_2-$, $-O-CF_2CF_2-$, $-O-CF_2CF_2-O-$, $-O-CF_2CF_2CF_2-$, $-O-CF_2CF_2CF_2-O-$, $-O-CF_2CF(CF_3)-O-$, $-O-CF_2CF_2-O-CF(CF_3)CF_2-O-$, $-O-CF_2CF(CF_3)-O-CF_2CF_2-O-$, and $-O-CF_2CF(CF_3)-O-CF_2-$.

R is preferably a divalent group represented by the general formula (r1):

$$-CF_2-O-(CX^6_2)_e-\{O-CF(CF_3)\}_f-(O)_g- \qquad (r1)$$

(wherein $X^6$ is each independently H, F, or $CF_3$; e is an integer of 0 to 3; f is an integer of 0 to 3; and g is 0 or 1), and more preferably a divalent group represented by the general formula (r2):

$$-CF_2-O-(CX^7_2)_e-(O)_g- \qquad (r2)$$

(wherein $X^7$ is each independently H, F, or $CF_3$; e is an integer of 0 to 3; and g is 0 or 1).

Specific suitable examples of R include $-CF_2-O-$, $-CF_2-O-CF_2-$, $-CF_2-O-CH_2-$, $-CF_2-O-CH_2CF_2-$, $-O-CF_2-$, $-O-CF_2CF_2-$, $-O-CF_2CF_2CF_2-$, $-O-CF_2CF_2CF_2CF_2-$, $-O-CF_2CF(CF_3)-O-CF_2-$, $-O-CF_2CF(CF_3)-O-CF_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)-$, $-CF_2-O-CF(CF_3)CF_2-$, $-CF_2-O-CF(CF_3)CF_2-O-$, $-CF_2-O-CF(CF_3)CF_2-O-CF_2-$, and $-CF_2-O-CF(CF_3)CH_2-$. In particular, R is preferably a perfluoroalkylene group optionally containing an oxygen atom, and, specifically, $-CF_2-O-$, $-CF_2-O-CF_2-$, $-O-CF_2-$, $-O-CF_2CF_2-$, $-O-CF_2CF(CF_3)-O-CF_2-$, $-O-CF_2CF(CF_3)-O-CF_2CF_2-$, $-CF_2-O-CF_2CF_2-$, $-CF_2-O-CF(CF_3)-$, $-CF_2-O-CF(CF_3)CF_2-$, or $-CF_2-O-CF(CF_3)CF_2-O-$ is preferable.

$-R-CZ^1Z^2-$ in the general formula (I) is preferably represented by the general formula (s1):

$$-CF_2-O-(CX^6_2)_e-\{O-CF(CF_3)\}_f-(O)_g-CZ^1Z^2- \qquad (s1)$$

(wherein $X^6$ is each independently H, F, or $CF_3$; e is an integer of 0 to 3; f is an integer of 0 to 3; g is 0 or 1; and $Z^1$ and $Z^2$ are each independently H, F, an alkyl group, or a fluorine-containing alkyl group), and more preferably, in the formula (s1), $Z^1$ and $Z^2$ are F or $CF_3$, and yet more preferably one is F, and the other is $CF_3$.

Also, $-R-CZ^1Z^2-$ in the general formula (I) is preferably represented by the general formula (s2):

$$-CF_2-O-(CX^7_2)_e-(O)_q-CZ^1Z^2- \qquad (s2)$$

(wherein $X^7$ is each independently H, F, or $CF_3$; e is an integer of 0 to 3; g is 0 or 1; and $Z^1$ and $Z^2$ are each independently H, F, an alkyl group, or a fluorine-containing alkyl group), and more preferably, in the formula (s2), $Z^1$ and $Z^2$ are F or $CF_3$, and

yet more preferably one is F, and the other is $CF_3$.

$-R-CZ^1Z^2-$ in the general formula (I) is preferably $-CF_2-O-CF_2-$, $-O-CF_2CF_2-$, $-O-CF_2CF_2CF_2-$, $-O-CF_2CF_2CF_2CF_2-$, $-O-CF_2CF(CF_3)-O-CF_2-$, $-O-CF_2CF(CF_3)-O-CF_2CF_2-$, $-O-CF_2CF(CF_3)-O-CF_2CF_2CF_2-$, $-CF_2-O-CF(CF_3)-$, $-CF_2-O-C(CF_3)_2-$, $-CF_2-O-CF_2-CF_2-$, $-CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$, $-CF_2-O-CF_2CF_2-C(CF_3)_2-$, $-CF_2-O-CF(CF_3)-CF_2-$, $-CF_2-O-CF(CF_3)-CF(CF_3)-$, $-CF_2-O-CF(CF_3)-C(CF_3)_2-$, $-CF_2-O-CF(CF_3)CF_2-CF_2-$, $-CF_2-O-CF(CF_3)CF_2-CF(CF_3)-$, $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, or $-CF_2-O-CF(CF_3)CF_2-O-C(CF_3)_2-$, more preferably $-O-CF_2CF_2-$, $-O-CF_2CF_2CF_2-$, $-O-CF_2CF_2CF_2CF_2-$, $-O-CF_2CF(CF_3)-O-CF_2-$, $-O-CF_2CF(CF_3)-O-CF_2CF_2-$, $-CF_2-O-CF(CF_3)-$, $-CF_2-O-CF_2-CF(CF_3)-$, $-CF_2-O-CF_2CF_2-CF(CF_3)-$, $-CF_2-O-CF(CF_3)-CF(CF_3)-$, $-CF_2-O-CF(CF_3)CF_2-CF(CF_3)-$, or $-CF_2-O-CF(CF_3)CF_2-O-CF(CF_3)-$, and even more preferably $-O-CF_2CF_2-$, or $-O-CF_2CF(CF_3)-O-CF_2CF_2-$.

It is also preferable that the polymer (I) is highly fluorinated. Except for the anionic group ($A^0$) such as a phosphate group moiety (such as $CH_2OP(O)(OM)_2$) or a sulfate group moiety (such as $CH_2OS(O)_2OM$), 80% or more, 90% or more, 95% or more, or 100% of the C-H bonds in the polymer (I) are preferably replaced with C-F bonds.

The monomer (I) and the polymer (I) also preferably has a C-F bonds and does not have a C-H bond, except for the anionic group ($A^0$). In other words, in the general formula (I), preferably, $X^1$, $X^2$, and $X^3$ are all F, and R is a perfluoroalkylene group having one or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The monomer (I) and the polymer (I) may be partially fluorinated. That is to say, the monomer (I) and the polymer (I) also preferably have at least one hydrogen atom bonded to a carbon atom and at least one fluorine atom bonded to a carbon atom, in the portion excluding the anionic group ($A^0$).

The anionic group ($A^0$) may be $-SO_2M$, $-SO_3M$, $-OSO_3M$, $-COOM$, $-SO_2NR'CH_2COOM$, $-CH_2OP(O)(OM)_2$, $[-CH_2O]_2P(O)(OM)$, $-CH_2CH_2OP(O)(OM)_2$, $[-CH_2CH_2O]_2P(O)(OM)$, $-CH_2CH_2OSO_3M$, $-P(O)(OM)_2$, $-SO_2NR'CH_2CH_2OP(O)(OM)_2$, $[-SO_2NR'CH_2CH_2O]_2P(O)(OM)$, $-CH_2OSO_3M$, $-SO_2NR'CH_2CH_2OSO_3M$, or $-C(CF_3)_2OM$. In particular, it is preferably $-SO_3M$, $-OSO_3M$, $-COOM$, $-P(O)(OM)_2$, or $-C(CF_3)_2OM$; more preferably $-COOM$, $-SO_3M$, $-OSO_3M$, $-P(O)(OM)_2$, or $-C(CF_3)_2OM$; and even more preferably $-SO_3M$, $-COOM$, or $-P(O)(OM)_2$; particularly preferably $-SO_3M$ or $-COOM$.

M is H, a metal atom, $NR^7_4$, optionally substituted imidazolium, optionally substituted pyridinium, or optionally substituted phosphonium, wherein $R^7$ is H or an organic group.

Examples of the metal atom include alkali metals (Group 1) and alkaline earth metals (Group 2), and Na, K, or Li is preferable.

M is preferably -H, a metal atom, or $-NR^7_4$, more preferably -H, an alkali metal (Group 1), an alkaline earth metal (Group 2), or $-NR^7_4$, even more preferably -H, -Na, -K, - Li, or $NH_4$, yet more preferably -H, -Na, -K, or $NH_4$, particularly preferably -H, -Na or $NH_4$, and most preferably -H, or $-NH_4$.

In the polymer (I), each polymerization unit (I) may have a different anionic group or may have the same anionic group.

It is also preferable that the monomer (I) is a monomer represented by the general formula (Ia).

The polymer (I) is also preferably a polymer containing a polymerization unit (Ia) derived from a monomer represented by the general formula (Ia):

$$CF_2=CF-O-Rf^0-A^0 \qquad (Ia)$$

wherein $A^0$ is an anionic group; and $Rf^0$ is a perfluorinated divalent linking group that is perfluorinated, may be a linear or branched, cyclic or acyclic, saturated or unsaturated, substituted or unsubstituted, and optionally contains one or more heteroatoms selected from the group consisting of sulfur, oxygen, and nitrogen.

The monomer (I) is also preferably a monomer represented by the general formula (Ib).

The polymer (I) is also preferably a polymer comprising a polymerization unit (Ib) derived from a monomer represented by the following formula (Ib):

$$CH_2=CH-O-Rf^0-A^0 \qquad (Ib)$$

wherein $A^0$ is an anionic group, and $Rf^0$ is a perfluorinated divalent linking group as defined by the formula (Ia).

In a preferable embodiment, $A^0$ in the general formula (I) is a sulfate group. $A^0$ is, for example, $-CH_2OSO_3M$, $-CH_2CH_2OSO_3M$, or $-SO_2NR'CH_2CH_2OSO_3M$, wherein R' is H or an alkyl group having 1 to 4 carbon atoms, and M is as described above.

Examples of the monomer represented by the general formula (I) when $A^0$ is a sulfate group include $CF_2=CF(OCF_2CF_2CH_2OSO_3M)$, $CF_2=CF(O(CF_2)_4CH_2OSO_3M)$, $CF_2=CF(OCF_2CF(CF_3)CH_2OSO_3M)$,

$CF_2=CF(OCF_2CF(CF_3)OCF_2CF_2CH_2OSO_3M)$, $CH_2=CH(O(CF_2)_4CH_2OSO_3M)$, $CF_2=CF(OCF_2CF_2SO_2N(CH_3)CH_2CH_2OSO_3M)$, $CH_2=CH(OCF_2CF_2CH_2OSO_3M)$, $CF_2=CF(OCF_2CF_2CF_2CF_2SO_2N(CH_3)CH_2CH_2OSO_3M)$, and $CH_2=CH(OCF_2CF_2CF_2CH_2OSO_3M)$. In the formulas, M is as described above.

In a preferable embodiment, $A^0$ in the general formula (I) is a sulfonate group. $A^0$ is, for example, $-SO_3M$, wherein M is as described above.

When $A^0$ is a sulfonate group, examples of the monomer represented by the general formula (I) include $CF_2=CF(OCF_2CF_2SO_3M)$, $CF_2=CF(O(CF_2)_3SO_3M)$, $CF_2=CF(O(CF_2)_4SO_3M)$, $CF_2=CF(OCF_2CF(CF_3)SO_3M)$, $CF_2=CF(OCF_2CF(CF_3)OCF_2CF_2SO_3M)$, $CH_2=CH(OCF_2CF_2SO_3M)$, $CF_2=CF(OCF_2CF(CF_3)OCF_2CF_2CF_2CF_2SO_3M)$, $CH_2=CH(O(CF_2)_4SO_3M)$, and $CH_2=CH(O(CF_2)_3SO_3M)$. In the formulae, M is as described above.

In a preferable embodiment, $A^0$ in the general formula (I) is a carboxylate group. $A^0$ is, for example, COOM or $SO_2NR'CH_2COOM$, wherein R' is H or an alkyl group having 1 to 4 carbon atoms, and M is as described above. When $A^0$ is a carboxylate group, examples of the monomer represented by the general formula (I) include $CF_2=CF(OCF_2CF_2COOM)$, $CF_2=CF(O(CF_2)_3COOM)$, $CF_2=CF(O(CF_2)_4COOM)$, $CF_2=CF(O(CF_2)_5COOM)$, $CF_2=CF(OCF_2CF(CF_3)COOM)$, $CF_2=CF(OCF_2CF(CF_3)O(CF_2)_nCOOM)$ (n is greater than 1), $CH_2=CH(OCF_2CF_2COOM)$, $CH_2=CH(O(CF_2)_4COOM)$, $CH_2=CH(O(CF_2)_3COOM)$, $CF_2=CF(OCF_2CF_2SO_2NR'CH_2COOM)$, $CF_2=CF(O(CF_2)_4SO_2NR'CH_2COOM)$, $CF_2=CF(OCF_2CF(CF_3)SO_2NR'CH_2COOM)$, $CF_2=CF(OCF_2CF(CF_3)OCF_2CF_2SO_2NR'CH_2COOM)$, $CH_2=CH(OCF_2CF_2SO_2NR'CH_2COOM)$, $CF_2=CF(OCF_2CF(CF_3)OCF_2CF_2CF_2CF_2SO_2NR'CH_2COOM)$, $CH_2=CH(O(CF_2)_4SO_2NR'CH_2COOM)$, and $CH_2=CH(O(CF_2)_3SO_2NR'CH_2COOM)$. In the formulas, R' is H or an alkyl group having 1 to 4 carbon atoms, and M is as described above.

In a preferable embodiment, $A^0$ in the general formula (I) is a phosphate group. $A^0$ is, for example, $-CH_2OP(O)(OM)_2$, $[-CH_2O]_2P(O)(OM)$, $-CH_2CH_2OP(O)(OM)_2$, $[-CH_2CH_2O]_2P(O)(OM)$, $[-SO_2NR'CH_2CH_2O]_2P(O)(OM)$, or $SO_2NR'CH_2CH_2OP(O)(OM)_2$, wherein R' is an alkyl group having 1 to 4 carbon atoms, and M is as described above.

When $A^0$ is a phosphate group, examples of the monomer represented by the general formula (I) include $CF_2=CF(OCF_2CF_2CH_2OP(O)(OM)_2)$, $CF_2=CF(O(CF_2)_4CH_2OP(O)(OM)_2)$, $CF_2=CF(OCF_2CF(CF_3)CH_2OP(O)(OM)_2)$, $CF_2=CF(OCF_2CF(CF_3)OCF_2CF_2CH_2OP(O)(OM)_2)$, $CF_2=CF(OCF_2CF_2SO_2N(CH_3)CH_2CH_2OP(O)(OM)_2)$, $CF_2=CF(OCF_2CF_2CF_2CF_2SO_2N(CH_3)CH_2CH_2OP(O)(OM)_2)$, $CH_2=CH(OCF_2CF_2CH_2OP(O)(OM)_2)$, $CH_2=CH(O(CF_2)_4CH_2OP(O)(OM)_2)$, and $CH_2=CH(O(CF_2)_3CH_2OP(O)(OM)_2)$. In the formulas, M is as described above.

In a preferable embodiment, $A^0$ in the general formula (I) is a phosphonate group. When $A^0$ is a phosphonate group, examples of the monomer represented by the general formula (I) include $CF_2=CF(OCF_2CF_2P(O)(OM)_2)$, $CF_2=CF(O(CF_2)_4P(O)(OM)_2)$, $CF_2=CF(OCF_2CF(CF_3)P(O)(OM)_2)$, $CF_2=CF(OCF_2CF(CF_3)OCF_2CF_2P(O)(OM)_2)$, $CH_2=CH(OCF_2CF_2P(O)(OM)_2)$, $CH_2=CH(O(CF_2)_4P(O)(OM)_2)$, and $CH_2=CH(O(CF_2)_3P(O)(OM)_2)$, wherein M is as described above.

The monomer (I) is preferably a monomer (1) represented by the general formula (1).

The polymer (I) is preferably a polymer (1) containing a polymerization unit (1) derived from a monomer represented by the general formula (1):

$$CX_2=CY(-CZ_2-O-Rf-A) \qquad (1)$$

wherein X is the same or different and is -H or F; Y is -H, - F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, $-SO_3M$, $-OSO_3M$, or $-C(CF_3)_2OM$, where M is -H, a metal atom, $-NR^7_4$, optionally substituted imidazolium, optionally substituted pyridinium, or optionally substituted phosphonium, and $R^7$ is H or an organic group, provided that at least one of X, Y, and Z contains a fluorine atom.

In the production method of the present disclosure, the monomer (1) represented by the general formula (1) and a further monomer may be copolymerized.

The polymer (1) may be a homopolymer of the monomer (1) represented by the general formula (1), or may be a copolymer with a further monomer.

The fluorine-containing alkylene group having 2 to 100 carbon atoms and having an ether bond is an alkylene group that does not include a structure in which an oxygen atom is an end and that contains an ether bond between carbon atoms.

In the general formula (1), X is -H or F. Both X may be -F, or at least one may be -H. For example, one may be -F and the other may be -H, or both may be -H.

In the general formula (1), Y is -H, -F, an alkyl group, or a fluorine-containing alkyl group. The alkyl group is an alkyl group not containing a fluorine atom, and has one or more carbon atoms. The number of carbon atoms of the alkyl group is preferably 6 or less, more preferably 4 or less, and even more preferably 3 or less. The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less. Y is

preferably -H, -F, or $CF_3$, and more preferably - F.

In the general formula (1), Z is the same or different, and is -H, -F, an alkyl group, or a fluoroalkyl group. The alkyl group is an alkyl group not containing a fluorine atom, and has one or more carbon atoms. The number of carbon atoms of the alkyl group is preferably 6 or less, more preferably 4 or less, and even more preferably 3 or less. The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less. Z is preferably -H, -F, or $CF_3$, and more preferably -F.

In the general formula (1), at least one of X, Y, and Z contains a fluorine atom. For example, X may be -H, and Y and Z may be -F.

In the general formula (1), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group preferably has 30 or less carbon atoms, more preferably 20 or less carbon atoms, even more preferably 10 or less carbon atoms, particularly preferably 6 or less carbon atoms, and most preferably 3 or less carbon atoms. Examples of the fluorine-containing alkylene group include $-CF_2-$, $-CH_2CF_2-$, $-CF_2CF_2-$, $-CF_2CH_2-$, $-CF_2CF_2CF_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

The fluorine-containing alkylene group having an ether bond preferably has 3 or more carbon atoms. The number of carbon atoms of the fluorine-containing alkylene group having an ether bond is preferably 60 or less, more preferably 30 or less, even more preferably 12 or less, particularly preferably 9 or less, and most preferably 6 or less. The fluorine-containing alkylene group having an ether bond is also preferably a divalent group represented by the general formula:

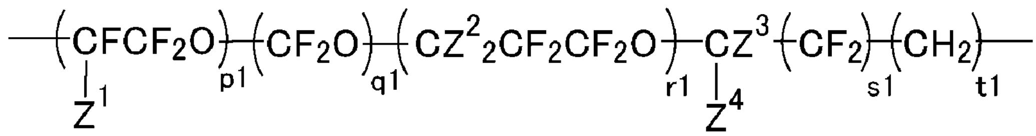

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF_2CF(CF_3)OCF_2-$, $-CF(CF_3)CF_2-O-CF(CF_3)-$, $-(CF(CF_3)CF_2-O)_n-CF(CF_3)-$ (wherein n is an integer of 1 to 10), $-CF(CF_3)CF_2-O-CF(CF_3)CH_2-$, $-(CF(CF_3)CF_2-O)_n-CF(CF_3)CH_2-$ (wherein n is an integer of 1 to 10), $-CH_2CF_2CF_2O-CH_2CF_2CH_2-$, $-CF_2CF_2CF_2O-CF_2-$, $-CF_2CF_2CF_2O-CF_2CF_2-$, $-CF_2CF_2CF_2O-CF_2CF_2CF_2-$, $-CF_2CF_2CF_2O-CF_2CF_2CH_2-$, $-CF_2CF_2O-CF_2-$, and $-CF_2CF_2O-CF_2CH_2-$. The fluorine-containing alkylene group having an ether bond is preferably a perfluoroalkylene group.

In the general formula (1), A is -COOM, $-SO_3M$, $-OSO_3M$, or $-C(CF_3)_2OM$, wherein M is H, a metal atom, $NR^7{}_4$, optionally substituted imidazolium, optionally substituted pyridinium, or optionally substituted phosphonium, and $R^7$ is H or an organic group.

$R^7$ is preferably H or a $C_{1-10}$ organic group, more preferably H or a $C_{1-4}$ organic group, and even more preferably H or a $C_{1-4}$ alkyl group.

Examples of the metal atom include alkali metals (Group 1) and alkaline earth metals (Group 2), and Na, K, or Li is preferable.

M is preferably H, a metal atom, or $NR^7{}_4$, more preferably H, an alkali metal (Group 1), an alkaline earth metal (Group 2), or $NR^7{}_4$, even more preferably H, Na, K, Li, or $NH_4$, yet more preferably H, Na, K, or $NH_4$, particularly preferably H, Na or $NH_4$, and most preferably H or $NH_4$.

A is preferably -COOM or $-SO_3M$.

Examples of the monomer represented by the general formula (1) include the monomer represented by the general formula (1a):

$$CX_2=CFCF_2-O-(CF(CF_3)CF_2O)_{n5}-CF(CF_3)-A \qquad (1a)$$

wherein each X is the same and represents F or H; n5 represents an integer of 1 to 10; and A is as defined above.

In the general formula (1a), n5 is preferably 0 or an integer of 1 to 5, more preferably 0, 1, or 2, and even more preferably 0 or 1, from the viewpoint of obtaining particles having a small primary particle size.

In the production method of the present disclosure, the monomer represented by the general formula (1a) and a further monomer may be copolymerized.

The polymer (1) may be a homopolymer of the monomer represented by the general formula (1a) or a copolymer with a further monomer.

The monomer (1) is preferably a monomer represented by the general formula (1A) below.

The polymerization unit (1) is preferably a polymerization unit (1A) derived from a monomer represented by the general formula (1A):

$CH_2=CF(-CF_2-O-Rf-A)$ (1A)

wherein Rf and A are as described above.

In the production method of the present disclosure, the monomer represented by the general formula (1A) and a further monomer may be copolymerized.

The polymer (1) may be a homopolymer of the monomer represented by the general formula (1A), or may be a copolymer with a further monomer.

Specific examples of the monomer represented by the formula (1A) include a monomer represented by the following formula:

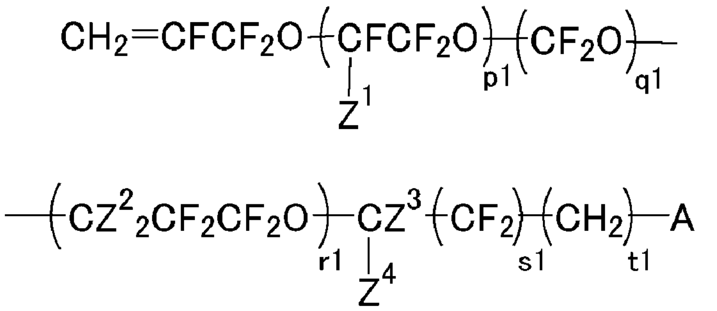

wherein $Z^1$ is F or $CF_3$; $Z^2$ and $Z^3$ are each H or F; $Z^4$ is H, F, or $CF_3$; p1+q1+r1 is an integer of 0 to 10; s1 is 0 or 1; t1 is an integer of 0 to 5, provided that when $Z^3$ and $Z^4$ are both H, p1+q1+r1+s1 is not 0; and A is as defined above. More specific examples preferably include:

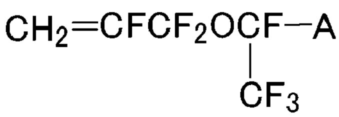 , 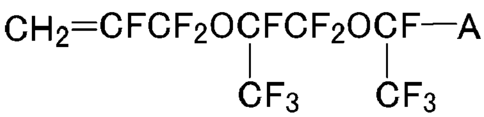 ,

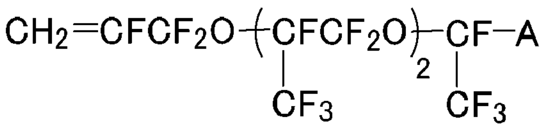 , 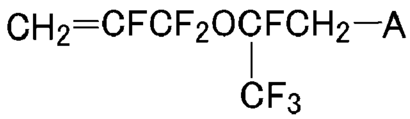 ,

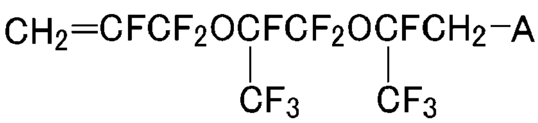 , 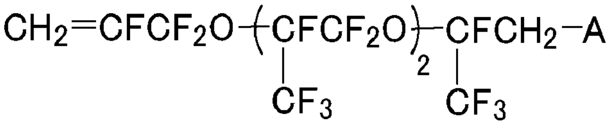 ,

$CH_2=CFCF_2OCH_2CF_2-A$, $CH_2=CFCF_2O(CH_2CF_2CF_2O)CH_2CF_2-A$,

$CH_2=CFCF_2OCH_2CF_2CH_2-A$,

$CH_2=CFCF_2O(CH_2CF_2CF_2O)CH_2CF_2CH_2-A$,

$CH_2=CFCF_2OCF_2CF_2-A$, $CH_2=CFCF_2O(CF_2CF_2CF_2O)CF_2CF_2-A$,

$CH_2=CFCF_2OCF_2CF_2CH_2-A$,

$CH_2=CFCF_2O(CF_2CF_2CF_2O)CF_2CF_2CH_2-A$,

$CH_2=CFCF_2OCF_2-A$, $CH_2=CFCF_2O(CF_2CF_2O)CF_2-A$,

$CH_2$=$CFCF_2OCF_2CH_2$-A,

$CH_2$=$CFCF_2O(CF_2CF_2O)CF_2CH_2$-A,

and, in particular,

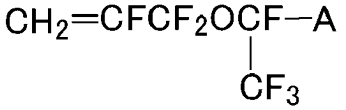,

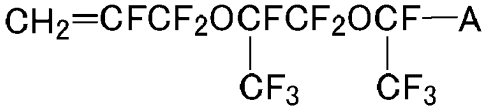,

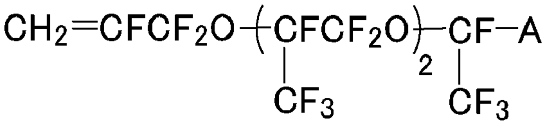,

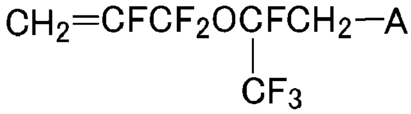,

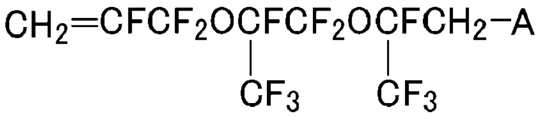,

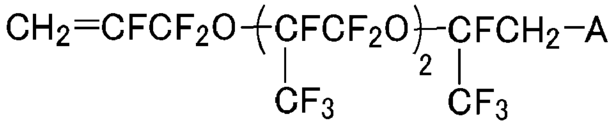,

are preferable.

In the monomer represented by the general formula (1A), A in the formula (1A) is preferably -COOM, and, in particular, at least one selected from the group consisting of $CH_2$=$CFCF_2OCF(CF_3)COOM$ and $CH_2$=$CFCF_2OCF(CF_3)CF_2OCF(CF_3)COOM$ (wherein M is as defined above) is preferable, and $CH_2$=$CFCF_2OCF(CF_3)COOM$ is more preferable.

Examples of the monomer represented by the general formula (1) further include monomers represented by the following formula:

$CF_2$=$CFCF_2$-O-Rf-A

wherein Rf and A are as described above.

More specific examples include:

$CF_2$=$CFCF_2OCF_2CF_2CF_2$-A,

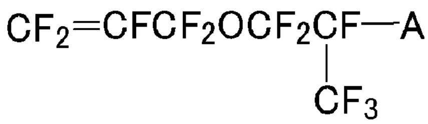,

$CF_2$=$CFCF_2OCF_2CF_2CF_2CH_2$-A,

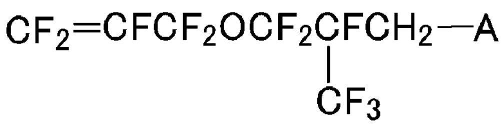,

and the like.

The monomer (I) is also preferably a monomer (2) represented by the general formula (2).

The polymer (I) is also preferably a polymer (2) containing a polymerization unit (2) derived from a monomer represented by the general formula (2):

$CX_2=CY(-O-Rf-A)$ (2)

wherein X is the same or different and is -H or F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is as described above.

In the production method of the present disclosure, the monomer (2) represented by the general formula (2) and a further monomer may be copolymerized.

The polymer (2) may be a homopolymer of the monomer represented by the general formula (2) or may be a copolymer with a further monomer.

In the general formula (2), X is -H or F. Both X may be -F, or at least one may be -H. For example, one may be -F and the other may be -H, or both may be -H.

In the general formula (2), Y is -H, -F, an alkyl group, or a fluorine-containing alkyl group. The alkyl group is an alkyl group not containing a fluorine atom, and has one or more carbon atoms. The number of carbon atoms of the alkyl group is preferably 6 or less, more preferably 4 or less, and even more preferably 3 or less. The fluorine-containing alkyl group is an alkyl group containing at least one fluorine atom, and has one or more carbon atoms. The number of carbon atoms of the fluorine-containing alkyl group is preferably 6 or less, more preferably 4 or less, and even more preferably 3 or less. Y is preferably -H, -F, or $-CF_3$, and more preferably -F.

In the general formula (2), at least one of X and Y preferably contains a fluorine atom. For example, X may be -H, and Y and Z may be -F.

In the general formula (2), Rf is a fluorine-containing alkylene group having 1 to 40 carbon atoms, a fluorine-containing alkylene group having 2 to 100 carbon atoms and having an ether bond, or a fluorine-containing alkylene group having 2 to 100 carbon atoms and having a keto group. The fluorine-containing alkylene group having 2 to 100 carbon atoms and having an ether bond is an alkylene group that does not include a structure in which an oxygen atom is an end and that contains an ether bond between carbon atoms.

The number of carbon atoms of the fluorine-containing alkylene group of Rf is preferably 2 or more. The number of carbon atoms is preferably 30 or less, more preferably 20 or less, even more preferably 10 or less, and particularly preferably 5 or less. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, $-CF(CF_3)CH_2-$, $-CF_2CF_2CF_2-$, and $-CF_2CF_2CF_2CF_2-$. The fluorine-containing alkylene group is preferably a perfluoroalkylene group, and more preferably an unbranched linear perfluoroalkylene group.

The number of carbon atoms of the fluorine-containing alkylene group having an ether bond is preferably 3 or more. The number of carbon atoms of the fluorine-containing alkylene group having an ether bond is preferably 60 or less, more preferably 30 or less, even more preferably 12 or less carbon atoms, and particularly preferably 5 or less. The fluorine-containing alkylene group having an ether bond is also preferably a divalent group represented by the general formula:

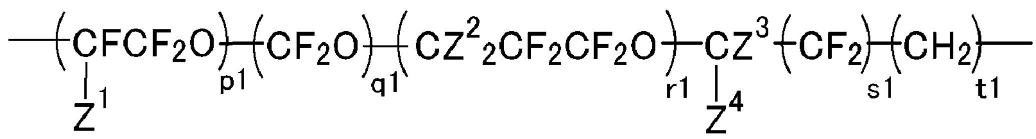

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF_2CF(CF_3)OCF_2-$, $-CF_2CF(CF_3)OCF_2CF_2-$, $-CF_2CF(CF_3)OCF_2CF_2CF_2-$, $-CF(CF_3)CF_2-O-CF(CF_3)-$, $-(CF(CF_3)CF_2-O)_n-CF(CF_3)-$ (where n is an integer of 1 to 10), $-CF(CF_3)CF_2-O-CF(CF_3)CH_2-$, $-(CF(CF_3)CF_2-O)_n-CF(CF_3)CH_2-$(where n is an integer of 1 to 10), $-CH_2CF_2CF_2O-CH_2CF_2CH_2-$, $-CF_2CF_2CF_2O-CF_2-$, $-CF_2CF_2CF_2O-CF_2CF_2-$, $-CF_2CF_2CF_2O-CF_2CF_2CF_2-$, $-CF_2CF_2CF_2O-CF_2CF_2CH_2-$, $-CF_2CF_2O-CF_2-$, and $-CF_2CF_2O-CF_2CH_2-$. The fluorine-containing alkylene group having an ether bond is preferably a perfluoroalkylene group.

The number of carbon atoms of the fluorine-containing alkylene group having a keto is preferably 3 or more. The number of carbon atoms of the fluorine-containing alkylene group having a keto group is preferably 60 or less, more preferably 30 or less, even more preferably 12 or less, and particularly preferably 5 or less.

Examples of the fluorine-containing alkylene group having a keto group include $-CF_2CF(CF_3)CO-CF_2-$, $-CF_2CF(CF_3)CO-CF_2CF_2-$, $-CF_2CF(CF_3)CO-CF_2CF_2CF_2-$, and $-CF_2CF(CF_3)CO-CF_2CF_2CF_2CF_2-$. The fluorine-containing alkylene group having a keto group is preferably a perfluoroalkylene group.

Water may be added to the keto group in the fluorine-containing alkylene group. Accordingly, the monomer (2) may be a hydrate. Examples of the fluorine-containing alkylene group in which water is added to the keto group include $-CF_2CF(CF_3)C(OH)_2-CF_2-$, $-CF_2CF(CF_3)C(OH)_2-CF_2CF_2-$, $-CF_2CF(CF_3)C(OH)_2-CF_2CF_2CF_2-$, and $-CF_2CF(CF_3)C$

$(OH)_2-CF_2CF_2CF_2CF_2-$.

The monomer represented by the general formula (2) is preferably at least one selected from the group consisting of monomers represented by the following general formulas (2a), (2b), (2c), (2d), (2e), (2f), and (2g):

$CF_2=CF-O-(CF_2)_{n1}-A$ (2a)

wherein n1 represents an integer of 1 to 10, and A is as defined above;

$CF_2=CF-O-(CF_2C(CF_3)F)_{n2}-A$ (2b)

wherein n2 represents an integer of 1 to 5, and A is as defined above;

$CF_2=CF-O-(CFX^1)_{n3}-A$ (2c)

wherein $X^1$ represents F or $CF_3$, n3 represents an integer of 1 to 10, and A is as defined above;

$CF_2=CF-O-(CF_2CFX^1O)_{n4}-(CF_2)_{n6}-A$ (2d)

wherein n4 represents an integer of 1 to 10, n6 represents an integer of 1 to 3, and A and $X^1$ are as defined above;

$CF_2=CF-O-(CF_2CF_2CFX^1O)_{n5}-CF_2CF_2CF_2-A$ (2e)

wherein n5 represents an integer of 0 to 10, and A and $X^1$ are as defined above;

$CF_2=CF-O-(CF_2)_{n7}-O-(CF_2)_{n8}-A$ (2f)

wherein n7 represents an integer of 1 to 10, n8 represents an integer of 1 to 3, and A is as defined above; and

$CF_2=CF[OCF_2CF(CF_3)]_{n9}O(CF_2)_{n10}O[CF(CF_3)CF_2O]_{n11}CF(CF_3)-A$ (2g)

wherein n9 represents an integer of 0 to 5, n10 represents an integer of 1 to 8, n11 represents an integer of 0 to 5, and A is as defined above.

In the general formula (2a), n1 is preferably an integer of 5 or less, and more preferably an integer of 2 or less.

Examples of the monomer represented by the general formula (2a) include $CF_2=CF-O-CF_2COOM$, $CF_2=CF(OCF_2CF_2COOM)$, $CF_2=CF(O(CF_2)_3COOM)$, $CF_2=CF(OCF_2CF_2SO_3M)$, $CF_2=CFOCF_2SO_3M$, $CF_2=CFOCF_2CF_2CF_2SO_3M$, wherein M is as defined above.

In the general formula (2b), n2 is preferably an integer of 3 or less from the viewpoint of dispersion stability of the resulting composition.

In the general formula (2c), n3 is preferably an integer of 5 or less from the viewpoint of water solubility, A is preferably -COOM, and M is preferably H, Na, or $NH_4$.

In the general formula (2d), $X^1$ is preferably $-CF_3$ from the viewpoint of dispersion stability of the composition, n4 is preferably an integer of 5 or less from the viewpoint of water solubility, A is preferably -COOM, and M is preferably H, Na, or $NH_4$.

Examples of the monomer represented by the general formula (2d) include $CF_2=CFOCF_2CF(CF_3)OCF_2CF_2COOM$, $CF_2=CFOCF_2CF(CF_3)OCF_2COOM$, $CF_2=CFOCF_2CF(CF_3)OCF_2CF_2CF_2COOM$, $CF_2=CFOCF_2CF(CF_3)OCF_2SO_3M$, $CF_2=CFOCF_2CF(CF_3)OCF_2CF_2SO_3M$, and $CF_2=CFOCF_2CF(CF_3)OCF_2CF_2CF_2SO_3M$, wherein M represents H, $NH_4$, or an alkali metal.

In the general formula (2e), n5 is preferably an integer of 5 or less from the viewpoint of water solubility, A is preferably -COOM, and M is preferably H or $NH_4$.

An example of the monomer represented by the general formula (2e) is $CF_2=CFOCF_2CF_2CF_2COOM$, wherein M represents H, Na, $NH_4$, or an alkali metal.

In the general formula (2f), n7 is preferably an integer of 5 or less from the viewpoint of water solubility, and A is preferably -COOM or $-SO_3M$, and more preferably -COOM. M is preferably H, Na, K, or $NH_4$.

An example of the monomer represented by the general formula (2f) is $CF_2=CF-O-(CF_2)_3-O-CF_2-COOM$, wherein M represents H, $NH_4$, or an alkali metal.

In the general formula (2g), n9 is preferably an integer of 3 or less from the viewpoint of water solubility, n10 is preferably an integer of 3 or less, n11 is preferably an integer of 3 or less, and A is preferably -COOM or $-SO_3M$, and more preferably -COOM. M is preferably H, Na, K, or $NH_4$.

Examples of the monomer represented by the general formula (2g) include $CF_2=CFO(CF_2)_2OCF(CF_3)COOM$, $CF_2=CFOCF_2CF_2OCF(CF_3)CF_2OCF(CF_3)COOM$, $CF_2=CFOCF_2CF(CF_3)OCF_2CF_2OCF(CF_3)COOM$, $CF_2=CF[OCF_2CF(CF_3)]_2O(CF_2)_2O[CF(CF_3)CF_2O]CF(CF_3)COOM$, and $CF_2=CF[OCF_2CF(CF_3)]_3O(CF_2)_2O[CF(CF_3)CF_2O]_3CF(CF_3)COOM$, wherein M represents H, $NH_4$, or an alkali metal.

The monomer (I) is also preferably a monomer (3) represented by the general formula (3).

The polymer (I) is also preferably a polymer (3) containing a polymerization unit (3) derived from a monomer represented by the general formula (3):

$$CX_2=CY(-Rf-A) \qquad (3)$$

wherein X is the same or different and is -H or F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and A is as described above.

In the production method of the present disclosure, the monomer (3) represented by the general formula (3) and a further monomer may be copolymerized.

The polymer (3) may be a homopolymer of the monomer represented by the general formula (3) or may be a copolymer with a further monomer.

The fluorine-containing alkylene group having 2 to 100 carbon atoms and having an ether bond is an alkylene group that does not include a structure in which an oxygen atom is an end and that contains an ether bond between carbon atoms.

In the general formula (3), Rf is preferably a fluorine-containing alkylene group having 1 to 40 carbon atoms. In the general formula (3), at least one of X and Y preferably contains a fluorine atom.

The monomer represented by the general formula (3) is preferably at least one selected from the group consisting of a monomer represented by the general formula (3a):

$$CF_2=CF-(CF_2)_{n1}-A \qquad (3a)$$

wherein n1 represents an integer of 1 to 10, and A is as defined above; and a monomer represented by the general formula (3b):

$$CF_2=CF-(CF_2C(CF_3)F)_{n2}-A \qquad (3b)$$

wherein n2 represents an integer of 1 to 5, and A is as defined above.

In the general formula (3a) and the general formula (3b), A is preferably $-SO_3M$ or COOM, and M is preferably H, a metal atom, $NR^7_4$, optionally substituted imidazolium, optionally substituted pyridinium, or optionally substituted phosphonium. $R^7$ represents H or an organic group.

In the general formula (3a), n1 is preferably an integer of 5 or less, and more preferably an integer of 2 or less. A is preferably -COOM, and M is preferably H or $NH_4$.

Examples of the monomer represented by the general formula (3a) include $CF_2=CFCF_2COOM$, wherein M is as defined above.

In the general formula (3b), n2 is preferably an integer of 3 or less from the viewpoint of dispersion stability of the resulting composition, A is preferably -COOM, and M is preferably H or $NH_4$.

Next, a suitable configuration wherein m is an integer of 2 or more in the general formula (I) will now be described.

It is also preferable that the monomer (I) is at least one selected from the group consisting of monomers represented by the general formula (4a) and the general formula (4b). The polymer (I) is also preferably a polymer (4) containing a polymerization unit (4) derived from at least one monomer selected from the group consisting of monomers represented by the general formulas (4a) and (4b):

$$CF_2=CF-CF_2-O-Q^{F1}-CF(-Q^{F2}-CZ^1Z^2-A)_2 \qquad (4a)$$

wherein $Z^1$, $Z^2$, and A are as defined above, and $Q^{F1}$ and $Q^{F2}$ are the same or different and are a single bond, a fluorine-containing alkylene group optionally containing an ether bond between carbon atoms, or a fluorine-containing oxyalkylene group optionally containing an ether bond between carbon atoms; and

$$CF_2=CF-O-Q^{F1}-CF(-Q^{F2}-CZ^1Z^2-A)_2 \qquad (4b)$$

wherein $Z^1$, $Z^2$, A, $Q^{F1}$, and $Q^{F2}$ are as defined above.

Examples of the monomers represented by the general formulas (4a) and (4b) include:

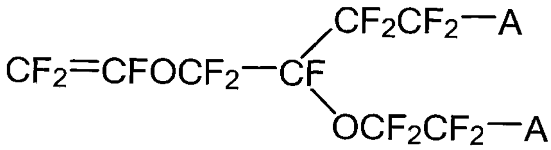

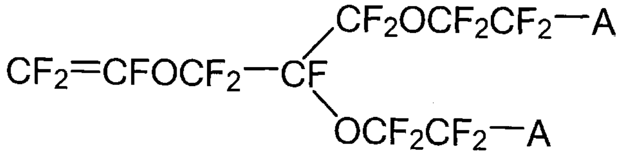

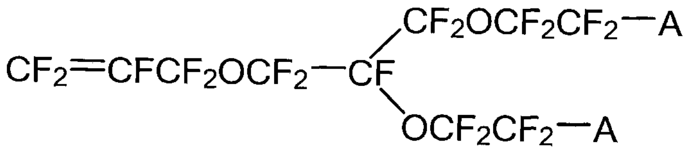

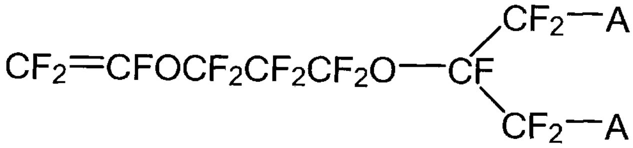

and the like.

The monomer (I) is preferably at least one selected from the group consisting of a monomer (1), a monomer (2), and a monomer (3), more preferably a monomer (1) or a monomer (2), and even more preferably a monomer (2).

The polymer (I) is preferably at least one selected from the group consisting of a polymer (1), a polymer (2), and a polymer (3), more preferably a polymer (1) or a polymer (2), and even more preferably a polymer (2).

In the production method of the present disclosure, the monomer (I) and a further monomer may be copolymerized.

The polymer (I) may be a homopolymer composed solely of the polymerization unit (I), or may be a copolymer containing the polymerization unit (I) and a polymerization unit derived from a further monomer copolymerizable with the monomer represented by the general formula (I). From the viewpoint of solubility in an aqueous medium, a homopolymer composed solely of the polymerization unit (I) is preferable. The polymerization unit (I) may be the same or different at each occurrence, and may contain the polymerization unit (I) derived from two or more different monomers represented by the general formula (I).

The further monomer is preferably a monomer represented by the general formula $CFR=CR_2$ wherein R is independently H, F, or a perfluoroalkyl group having 1 to 4 carbon atoms. Also, the further monomer is preferably a fluorine-containing ethylenic monomer having 2 or 3 carbon atoms. Examples of the further monomer include $CF_2=CF_2$, $CF_2=CFCl$, $CH_2=CF_2$, $CFH=CH_2$, $CFH=CF_2$, $CF_2=CFCF_3$, $CH_2=CFCF_3$, $CH_2=CHCF_3$, $CHF=CHCF_3$ (E-form), and $CHF=CHCF_3$ (Z-form).

In particular, from the viewpoint of good copolymerizability, at least one selected from the group consisting of tetrafluoroethylene ($CF_2=CF_2$), chlorotrifluoroethylene ($CF_2=CFCl$), and vinylidene fluoride ($CH_2=CF_2$) is preferable, and at least one selected from the group consisting of tetrafluoroethylene and vinylidene fluoride is more preferable. Accordingly, the polymerization unit derived from the further monomer is preferably a polymerization unit derived from tetrafluoroethylene. The polymerization unit derived from the further monomer may be the same or different at each occurrence, and the polymer (I) may contain a polymerization unit derived from two or more different further monomers.

Examples of the further monomer also include a monomer represented by the general formula (n1-2):

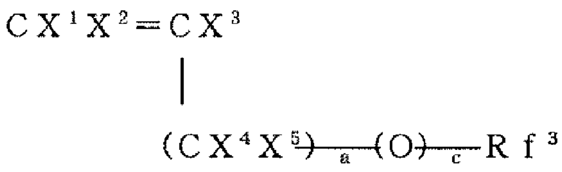

(n 1 - 2)

wherein $X^1$ and $X^2$ are the same or different and H or F; $X^3$ is H, F, Cl, $CH_3$, or $CF_3$; $X^4$ and $X^5$ are the same or different and H

or F; a and c are the same or different and 0 or 1; and $Rf^3$ is a fluorine-containing alkyl group having 1 to 40 carbon atoms or a fluorine-containing alkyl group having 2 to 100 carbon atoms and having an ether bond.

Specifically, preferable examples include $CH_2=CFCF_2-O-Rf^3$, $CF_2=C_F-O-Rf^3$, $CF_2=CFCF_2-O-Rf^3$, $CF_2=CF-Rf^3$, $CH_2=CH-Rf^3$, and $CH_2=CH-O-Rf^3$, wherein $Rf^3$ is as in the above formula (n1-2).

Another example of the further monomer is a fluorine-containing acrylate monomer represented by the formula (n2-1):

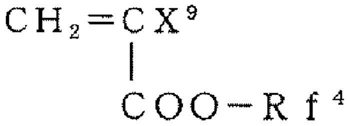

(n2-1)

wherein $X^9$ is H, F, or $CH_3$; and $Rf^4$ is a fluorine-containing alkyl group having 1 to 40 carbon atoms or a fluorine-containing alkyl group having 2 to 100 carbon atoms and having an ether bond. Examples of the $Rf^4$ group include:

$$-(CH_2)_{d1}-(CF_2)_{e1}-Z^8$$

wherein $Z^8$ is H, F, or Cl; d1 is an integer of 1 to 4; and e1 is an integer of 1 to 10,

$-CH(CF_3)_2$,

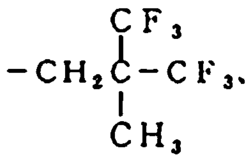

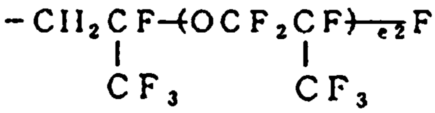

wherein e2 is an integer of 1 to 5,

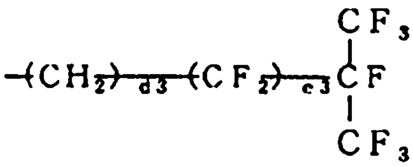

wherein d3 is an integer of 1 to 4; and e3 is an integer of 1 to 10.

Examples of the further monomer also include fluorine-containing vinyl ether represented by the formula (n2-2):

$CH_2=CHO-Rf^5$ (n2-2)

wherein $Rf^5$ is a fluorine-containing alkyl group having 1 to 40 carbon atoms or a fluorine-containing alkyl group having 2 to 100 carbon atoms and having an ether bond.

Specific preferable examples of the monomer of the general formula (n2-2) include:

$$CH_2=CHOCH_2-(CF_2)_{e4}-Z^9$$

wherein $Z^9$ is H or F; and e4 is an integer of 1 to 10,

$$CH_2=CHOCH_2CH_2-(CF_2)_{e5}-F$$

wherein e5 is an integer of 1 to 10,

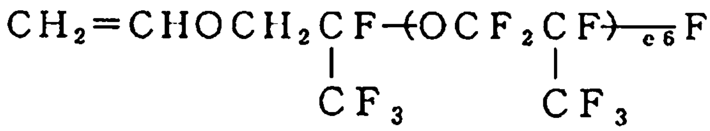

wherein e6 is an integer of 1 to 10.

More specific examples include:

$CH_2=CHOCH_2CF_2CF_2H$,

$$CH_2=CHOCH_2-(CF_2CF_2)_2-H、$$

$$CH_2=CHOCH_2-(CF_2CF_2)_3-H、$$

$CH_2=CHOCH_2CF_2CF_3$,

$CH_2=CHOCH_2CF_3$,

$$CH_2=CHOCH_2CH_2-(CF_2CF_2)_4-F、$$

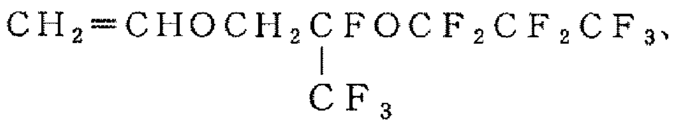

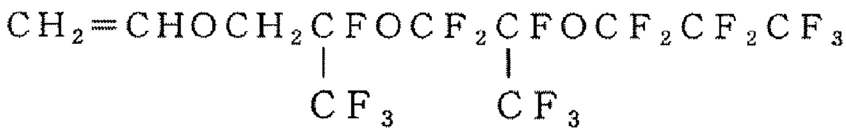

and the like.

In addition, examples also include fluorine-containing allyl ether represented by the general formula (n2-3):

$CH_2=CHCH_2O-Rf^6$ (n2-3)

wherein $Rf^6$ is a fluorine-containing alkyl group having 1 to 40 carbon atoms or a fluorine-containing alkyl group having 2 to 100 carbon atoms and having an ether bond; and fluorine-containing vinyl monomers represented by the general formula (n2-4) :

$CH_2=CH-Rf^7$ (n2-4)

wherein $Rf^7$ is a fluorine-containing alkyl group having 1 to 40 carbon atoms or a fluorine-containing alkyl group having 2 to 100 carbon atoms and having an ether bond.

Specific examples of the monomers represented by the general formulas (n2-3) and (n2-4) include:

$CH_2=CHCH_2OCH_2CF_2CF_2H$,

$CH_2=CHCH_2OCH_2-(CF_2CF_2)_2-H$、

$CH_2=CHCH_2OCH_2-(CF_2CF_2)_3-H$、

$CH_2=CHCH_2OCH_2CF_2CF_3$,

$CH_2=CHCH_2OCH_2CF_3$,

$CH_2=CHCH_2OCH_2CH_2-(CF_2CF_2)_4-F$、

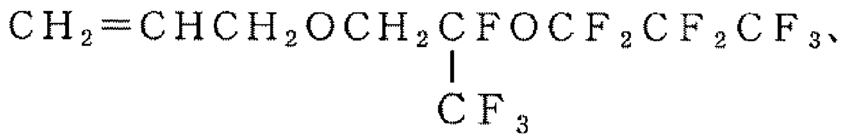

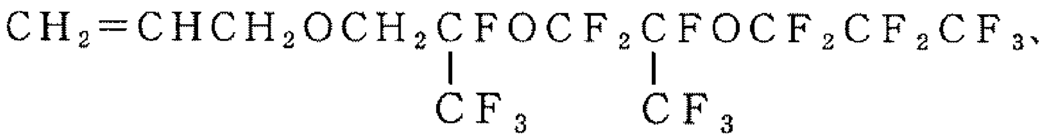

$CH_2=CH-(CF_2CF_2)_2-F$、

$CH_2=CH-(CF_2CF_2)_4-F$

and the like.

The polymer (I) usually has a terminal group. The terminal group is a terminal group produced during polymerization, and a representative terminal group is independently selected from hydrogen, iodine, bromine, a linear or branched alkyl group, and a linear or branched fluoroalkyl group, and may optionally contain at least one catenary heteroatom. The alkyl group or fluoroalkyl group preferably has 1 to 20 carbon atoms. These terminal groups are, in general, produced from an initiator or a chain transfer agent used to form the polymer (I) or produced during a chain transfer reaction.

In the polymer (I), the content of the polymerization unit (I) is, in the order of becoming preferred, 1.0 mol% or more, 3.0 mol% or more, 5.0 mol% or more, 10 mol% or more, 20 mol% or more, 30 mol% or more, 40 mol% or more, 50 mol% or more, 60 mol% or more, 70 mol% or more, 80 mol% or more, or 90 mol% or more based on all polymerization units. It is particularly preferable that the content of the polymerization unit (I) is substantially 100 mol%, and it is most preferable that the polymer (I) is composed solely of the polymerization unit (I).

In the polymer (I), the content of the polymerization unit derived from the further monomer copolymerizable with the monomer represented by the general formula (I) is, in the order of becoming preferred, 99.0 mol% or less, 97.0 mol% or less, 95.0 mol% or less, 90 mol% or less, 80 mol% or less, 70 mol% or less, 60 mol% or less, 50 mol% or less, 40 mol% or less, 30 mol% or less, 20 mol% or less, or 10 mol% or less based on all polymerization units. It is particularly preferable that the content of the polymerization unit derived from the further monomer copolymerizable with the monomer represented by the general formula (I) is substantially 0 mol%, and it is most preferable that the polymer (I) contains no polymerization unit derived from the further monomer.

The number average molecular weight of the polymer (I) is preferably $0.1 \times 10^4$ or more, more preferably $0.2 \times 10^4$ or more, even more preferably $0.3 \times 10^4$ or more, yet more preferably $0.4 \times 10^4$ or more, further preferably $0.5 \times 10^4$ or

more, particularly preferably $1.0 \times 10^4$ or more, more particularly preferably $3.0 \times 10^4$ or more, and most preferably $3.1 \times 10^4$ or more. The number average molecular weight of the polymer (I) is preferably $75.0 \times 10^4$ or less, more preferably $50.0 \times 10^4$ or less, even more preferably $40.0 \times 10^4$ or less, yet more preferably $30.0 \times 10^4$ or less, and particularly preferably $20.0 \times 10^4$ or less. The number average molecular weight and the weight average molecular weight are molecular weight values calculated by gel permeation chromatography (GPC) using monodisperse polystyrene as a standard. Also, when measurement by GPC is not possible, the number average molecular weight of the polymer (I) can be determined by the correlation between the number average molecular weight calculated from the number of terminal groups obtained by NMR, FT-IR, or the like, and the melt flow rate. The melt flow rate can be measured in accordance with JIS K 7210.

The lower limit of the weight average molecular weight of the polymer (I) is, in the order of becoming preferred, $0.2 \times 10^4$ or more, $0.4 \times 10^4$ or more, $0.6 \times 10^4$ or more, $0.8 \times 10^4$ or more, $1.0 \times 10^4$ or more, $2.0 \times 10^4$ or more, $5.0 \times 10^4$ or more, $10.0 \times 10^4$ or more, $15.0 \times 10^4$ or more, $20.0 \times 10^4$ or more, or $25.0 \times 10^4$ or more. The upper limit of the weight average molecular weight of the polymer (I) is, in the order of becoming preferred, $150.0 \times 10^4$ or less, $100.0 \times 10^4$ or less, $60.0 \times 10^4$ or less, $50.0 \times 10^4$ or less, or $40.0 \times 10^4$ or less.

The polymer (I) preferably has an ion exchange rate (IXR) of 53 or less. The IXR is defined as the number of carbon atoms in the polymer backbone relative to the ionic groups. A precursor group that becomes ionic by hydrolysis (such as $-SO_2F$) is not regarded as an ionic group for the purpose of determining the IXR.

The IXR is preferably 0.5 or more, more preferably 1 or more, even more preferably 3 or more, yet more preferably 4 or more, further preferably 5 or more, and particularly preferably 8 or more. The IXR is more preferably 43 or less, even more preferably 33 or less, and particularly preferably 23 or less.

The ion exchange capacity of the polymer (I) is, in the order of becoming preferred, 0.80 meq/g or more, 1.50 meq/g or more, 1.75 meq/g or more, 2.00 meq/g or more, 2.20 meq/g or more, more than 2.20 meq/g, 2.50 meq/g or more, 2.60 meq/g or more, 3.00 meq/g or more, or 3.50 meq/g or more. The ion exchange capacity is the content of ionic groups (anionic groups) in the polymer (I), and can be calculated from the composition of the polymer (I).

In the polymer (I), the ionic groups (anionic groups) are typically distributed along the polymer backbone. The polymer (I) contains the polymer backbone together with a repeating side chain bonded to this backbone, and this side chain preferably has an ionic group.

The polymer (I) preferably contains an ionic group having a pKa of less than 10, and more preferably less than 7. The ionic group of the polymer (I) is preferably selected from the group consisting of sulfonate, carboxylate, phosphonate, and phosphate.

The terms "sulfonate, carboxylate, phosphonate, and phosphate" are intended to refer to the respective salts or the respective acids that can form salts. A salt when used is preferably an alkali metal salt or an ammonium salt. The ionic group is preferably a carboxylate group or a sulfonate group.

The polymer (I) preferably has water solubility. Water solubility means the property of being readily dissolved or dispersed in an aqueous medium. When the polymer (I) has water solubility, the particle size cannot be measured, or a particle size of 10 nm or less is indicated, by, for example, dynamic light scattering (DLS).

The viscosity of the aqueous solution of polymer (I) is preferably 5.0 mPa.s or more, more preferably 8.0 mPa.s or more, more preferably 10.0 mPa.s or more, particularly preferably 12.0 mPa.s or more, and most preferably 14.0 mPa.s or more, and is preferably 100.0 mPa.s or less, more preferably 50.0 mPa.s or less, even more preferably 25.0 mPa.s or less, and yet more preferably 20.0 mPa.s or less.

The viscosity of the aqueous solution of the polymer (I) can be determined by regulating the content of the polymer (I) in the aqueous solution to be 33% by mass based on the aqueous solution, and measuring the viscosity of the resulting aqueous solution at 20°C using a tuning fork vibration viscometer (model number: SV-10) manufactured by A&D Company Limited.

The critical micelle concentration (CMC) of the polymer (I) is preferably 0.1% by mass or more, more preferably 0.5% by mass or more, and even more preferably 1% by mass or more, and is preferably 20% by mass or less, more preferably 10% by mass or less, and even more preferably 5% by mass or less.

The critical micelle concentration of the polymer (I) can be determined by measuring surface tension. Surface tension can be measured with, for example, a surface tensiometer DY-300 manufactured by Kyowa Interface Science Co., Ltd.

The acid value of the polymer (I) is preferably 60 or more, more preferably 90 or more, even more preferably 120 or more, particularly preferably 150 or more, and most preferably 180 or more, and while the upper limit is not specified, it is preferably 300 or less.

When the polymer (I) has an anionic group such as -COOM, $-SO_3M$, $-OSO_3M$, or $-C(CF_3)_2OM$ (M is a metal atom, $NR^7_4$, optionally substituted imidazolium, optionally substituted pyridinium, or optionally substituted phosphonium, and $R^7$ is H or an organic group) other than an acid-type functional group, the acid value of the polymer (I) can be determined by acid-base titration after converting the anionic group into an acid-type group.

(Aqueous medium)

The aqueous medium is a reaction medium in which polymerization is performed, and means a liquid containing water. The aqueous medium may be any medium containing water, and it may be a medium containing water and, for example, any of fluorine-free organic solvents such as alcohols, ethers, and ketones, and/or fluorine-containing organic solvents having a boiling point of 40°C or lower. The aqueous medium is preferably water.

(Fluoromonomer)

The fluoromonomer used in the production method of the present disclosure preferably has at least one double bond. The fluoromonomer is preferably at least one selected from the group consisting of tetrafluoroethylene (TFE), hexafluoropropylene (HFP), chlorotrifluoroethylene (CTFE), vinyl fluoride, vinylidene fluoride (VDF), trifluoroethylene, fluoroalkyl vinyl ether, fluoroalkyl ethylene, fluoroalkyl allyl ether, trifluoropropylene, pentafluoropropylene, trifluorobutene, tetrafluoroisobutene, hexafluoroisobutene, a fluoromonomer represented by the general formula (100): $CHX^{101}=CX^{102}Rf^{101}$ (wherein one of $X^{101}$ and $X^{102}$ is H and the other is F, and $Rf^{101}$ is a linear or branched fluoroalkyl group having 1 to 12 carbon atoms), a fluorinated vinyl heterocyclic compound, and a monomer that provides a crosslinking site.

The fluoroalkyl vinyl ether is preferably, for example, at least one selected from the group consisting of:

a fluoromonomer represented by the general formula (110) : $CF_2=CF-ORf^{111}$
wherein $Rf^{111}$ represents a perfluoro organic group;
a fluoromonomer represented by the general formula (120): $CF_2=CF-OCH_2-Rf^{121}$
wherein $Rf^{121}$ is a perfluoroalkyl group having 1 to 5 carbon atoms;
a fluoromonomer represented by the general formula (130) : $CF_2=CFOCF_2ORf^{131}$
wherein $Rf^{131}$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms;
a fluoromonomer represented by the general formula (140) : $CF_2=CFO(CF_2CF(Y^{141})O)_m(CF_2)_nF$ wherein $Y^{141}$ represents a fluorine atom or a trifluoromethyl group; m is an integer of 1 to 4; and n is an integer of 1 to 4; and
a fluoromonomer represented by the general formula (150) : $CF_2=CF-O-(CF_2CFY^{151}-O)_n-(CFY^{152})_m-A^{151}$
wherein $Y^{151}$ represents a fluorine atom, a chlorine atom, an - $SO_2F$ group, or a perfluoroalkyl group; the perfluoroalkyl group optionally contains ether oxygen and an $-SO_2F$ group; n represents an integer of 0 to 3; n $Y^{151}$ groups are optionally the same or different; $Y^{152}$ represents a fluorine atom, a chlorine atom, or an $-SO_2F$ group; m represents an integer of 1 to 5; m $Y^{152}$ groups are optionally the same or different; $A^{151}$ represents $-SO_2X^{151}$, $-COZ^{151}$, or $-POZ^{152}Z^{153}$; $X^{151}$ represents F, Cl, Br, I, $-OR^{151}$, or $-NR^{152}R^{153}$; $Z^{151}$, $Z^{152}$, and $Z^{153}$ are the same or different, and each represent $-NR^{154}R^{155}$ or $-OR^{156}$; and $R^{151}$, $R^{152}$, $R^{153}$, $R^{154}$, $R^{155}$, and $R^{156}$ are the same as or different from each other, and each represent H, ammonium, an alkali metal, or an alkyl group, aryl group, or sulfonyl-containing group optionally containing a fluorine atom.

The "perfluoro organic group" as used herein means an organic group in which all hydrogen atoms bonded to the carbon atoms are replaced with fluorine atoms. The perfluoro organic group may have ether oxygen.

The fluoromonomer represented by the general formula (110) may be a fluoromonomer in which $Rf^{111}$ is a perfluoroalkyl group having 1 to 10 carbon atoms. The perfluoroalkyl group preferably has 1 to 5 carbon atoms.

Examples of the perfluoro organic group in the general formula (110) include a perfluoromethyl group, a perfluoroethyl group, a perfluoropropyl group, a perfluorobutyl group, a perfluoropentyl group, and a perfluorohexyl group.

Examples of the fluoromonomer represented by the general formula (110) also include those represented by the general formula (110) in which $Rf^{111}$ is a perfluoro(alkoxyalkyl) group having 4 to 9 carbon atoms; those in which $Rf^{111}$ is a group represented by the following formula:

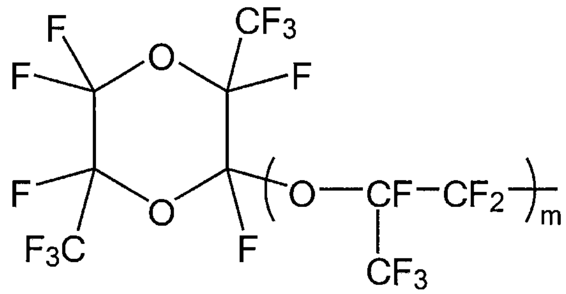

wherein m represents 0 or an integer of 1 to 4; and those in which Rf is a group represented by the following formula:

$CF_3CF_2CF_2\text{-}(O\text{-}CF(CF_3)\text{-}CF_2)_n\text{-}$

wherein n is an integer of 1 to 4.

In particular, the fluoromonomer represented by the general formula (110) is preferably a fluoromonomer represented by the general formula (160) : $CF_2=CF\text{-}ORf^{161}$
wherein $Rf^{161}$ represents a perfluoroalkyl group having 1 to 10 carbon atoms. $Rf^{161}$ is preferably a perfluoroalkyl group having 1 to 5 carbon atoms.

The fluoroalkyl vinyl ether is preferably at least one selected from the group consisting of fluoromonomers represented by the general formulas (160), (130), and (140).

The fluoromonomer represented by the general formula (160) is preferably at least one selected from the group consisting of perfluoro(methyl vinyl ether), perfluoro(ethyl vinyl ether), and perfluoro(propyl vinyl ether), and is more preferably at least one selected from the group consisting of perfluoro(methyl vinyl ether) and perfluoro(propyl vinyl ether).

The fluoromonomer represented by the general formula (130) is preferably at least one selected from the group consisting of $CF_2=CFOCF_2OCF_3$, $CF_2=CFOCF_2OCF_2CF_3$, and $CF_2=CFOCF_2OCF_2CF_2OCF_3$.

The fluoromonomer represented by the general formula (140) is preferably at least one selected from the group consisting of $CF_2=CFOCF_2CF(CF_3)O(CF_2)_3F$, $CF_2=CFO(CF_2CF(CF_3)O)_2(CF_2)_3F$, and $CF_2=CFO(CF_2CF(CF_3)O)_2(CF_2)_2F$.

The fluoromonomer represented by the general formula (150) is preferably at least one selected from the group consisting of $CF_2=CFOCF_2CF_2SO_2F$, $CF_2=CFOCF_2CF(CF_3)OCF_2CF_2SO_2F$, $CF_2=CFOCF_2CF(CF_2CF_2SO_2F)OCF_2CF_2SO_2F$, and $CF_2=CFOCF_2CF(SO_2F)_2$.

The fluoromonomer represented by the general formula (100) is preferably a fluoromonomer in which $Rf^{101}$ is a linear fluoroalkyl group, and more preferably a fluoromonomer in which $Rf^{101}$ is a linear perfluoroalkyl group. $Rf^{101}$ preferably has 1 to 6 carbon atoms. Examples of the fluoromonomer represented by the general formula (100) include $CH_2=CFCF_3$, $CH_2=CFCF_2CF_3$, $CH_2=CFCF_2CF_2CF_3$, $CH_2=CFCF_2CF_2CF_2H$, $CH_2=CFCF_2CF_2CF_2CF_3$, $CHF=CHCF_3$ (E isomer), and $CHF=CHCF_3$ (Z isomer), and, in particular, 2,3,3,3-tetrafluoropropylene represented by $CH_2=CFCF_3$ is preferable.

The fluoroalkyl ethylene is preferably a fluoroalkyl ethylene represented by the

general formula (170) : $CH_2=CH\text{-}(CF_2)_n\text{-}X^{171}$

(wherein $X^{171}$ is H or F; and n is an integer of 3 to 10), and more preferably at least one selected from the group consisting of $CH_2=CH\text{-}C_4F_9$ and $CH_2=CH\text{-}C_6F_{13}$.

An example of the fluoroalkyl allyl ether is a fluoromonomer represented by the

general formula (180): $CF_2=CF\text{-}CF_2\text{-}ORf^{111}$

wherein $Rf^{111}$ represents a perfluoro organic group.

$Rf^{111}$ in the general formula (180) is the same as $Rf^{111}$ in the general formula (110). $Rf^{111}$ is preferably a perfluoroalkyl group having 1 to 10 carbon atoms or a perfluoroalkoxyalkyl group having 1 to 10 carbon atoms. The fluoroalkyl allyl ether represented by the general formula (180) is preferably at least one selected from the group consisting of $CF_2=CF\text{-}CF_2\text{-}O\text{-}CF_3$, $CF_2=CF\text{-}CF_2\text{-}O\text{-}C_2F_5$, $CF_2=CF\text{-}CF_2\text{-}O\text{-}C_3F_7$, and $CF_2=CF\text{-}CF_2\text{-}O\text{-}C_4F_9$, more preferably at least one selected from the group consisting of $CF_2=CF\text{-}CF_2\text{-}O\text{-}C_2F_5$, $CF_2=CF\text{-}CF_2\text{-}O\text{-}C_3F_7$, and $CF_2=CF\text{-}CF_2\text{-}O\text{-}C_4F_9$, and even more preferably $CF_2=CF\text{-}CF_2\text{-}O\text{-}CF_2CF_2CF_3$.

An example of the fluorinated vinyl heterocyclic compound is a fluorinated vinyl heterocyclic compound represented by the general formula (230):

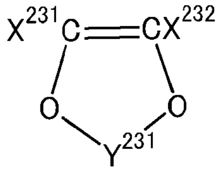

wherein $X^{231}$ and $X^{232}$ are each independently F, Cl, a methoxy group, or a fluorinated methoxy group; and $Y^{231}$ is represented by the formula $Y^{232}$ or the formula $Y^{233}$:

-FC=CF- ($Y^{232}$)

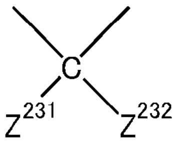

($Y^{233}$)

wherein $Z^{231}$ and $Z^{232}$ are each independently F or a fluorinated alkyl group having 1 to 3 carbon atoms.

The monomer that provides a crosslinking site is preferably at least one selected from the group consisting of:

a fluoromonomer represented by the general formula (180) : $CX^{181}{}_2=CX^{182}-R_f^{181}CHR^{181}X^{183}$
wherein $X^{181}$ and $X^{182}$ are each independently a hydrogen atom, a fluorine atom, or $CH_3$; $R_f^{181}$ is a fluoroalkylene group, a perfluoroalkylene group, a fluoro(poly)oxyalkylene group, or a perfluoro(poly)oxyalkylene group; $R^{181}$ is a hydrogen atom or $CH_3$; and $X^{183}$ is an iodine atom or a bromine atom;
a fluoromonomer represented by the general formula (190) : $CX^{191}{}_2=CX^{192}-R_f^{191}X^{193}$
wherein $X^{191}$ and $X^{192}$ are each independently a hydrogen atom, a fluorine atom, or $CH_3$; $R_f^{191}$ is a fluoroalkylene group, a perfluoroalkylene group, a fluoropolyoxyalkylene group, or a perfluoropolyoxyalkylene group; and $X^{193}$ is an iodine atom or a bromine atom;
a fluoromonomer represented by the general formula (200) : $CF_2=CFO(CF_2CF(CF_3)O)_m(CF_2)_n-X^{201}$
wherein m is an integer of 0 to 5; n is an integer of 1 to 3; and $X^{201}$ is a cyano group, a carboxyl group, an alkoxycarbonyl group, an iodine atom, a bromine atom, or $-CH_2I$; and
a fluoromonomer represented by the general formula (210): $CH_2=CFCF_2O(CF(CF_3)CF_2O)_m(CF(CF_3))_n-X^{211}$
wherein m is an integer of 0 to 5; n is an integer of 1 to 3; and $X^{211}$ is a cyano group, a carboxyl group, an alkoxycarbonyl group, an iodine atom, a bromine atom, or $-CH_2OH$; and
a monomer represented by the general formula (220): $CR^{221}R^{222}=CR^{223}-Z^{221}-CR^{224}=CR^{225}R^{226}$
wherein $R^{221}$, $R^{222}$, $R^{223}$, $R^{224}$, $R^{225}$, and $R^{226}$ are the same or different, and are each independently a hydrogen atom or an alkyl group having 1 to 5 carbon atoms; $Z^{221}$ is a linear or branched alkylene group having 1 to 18 carbon atoms and optionally having an oxygen atom, a cycloalkylene group having 3 to 18 carbon atoms, an at least partially fluorinated alkylene group or oxyalkylene group having 1 to 10 carbon atoms, or a (per)fluoropolyoxyalkylene group which is represented by:

$$-(Q)_p-CF_2O-(CF_2CF_2O)_m(CF_2O)_n-CF_2-(Q)_p-$$

wherein Q is an alkylene group or an oxyalkylene group; p is 0 or 1; and m/n is 0.2 to 5 and has a molecular weight of 500 to 10,000.

Preferably $X^{183}$ and $X^{193}$ are each independently an iodine atom. Preferably $R_f^{181}$ and $R_f^{191}$ are each independently a perfluoroalkylene group having 1 to 5 carbon atoms. $R^{181}$ is preferably a hydrogen atom. $X^{201}$ is preferably a cyano group, an alkoxycarbonyl group, an iodine atom, a bromine atom, or $-CH_2I$. $X^{211}$ is preferably a cyano group, an alkoxycarbonyl group, an iodine atom, a bromine atom, or $-CH_2OH$.

The monomer that provides a crosslinking site is preferably at least one selected from the group consisting of: $CF_2=CFOCF_2CF(CF_3)OCF_2CF_2CN$, $CF_2=CFOCF_2CF(CF_3)OCF_2CF_2COOH$, $CF_2=CFOCF_2CF(CF_3)OCF_2CF_2CH_2I$, $CF_2=CFOCF_2CF_2CH_2I$, $CH_2=CFCF_2OCF(CF_3)CF_2OCF(CF_3)CN$, $CH_2=CFCF_2OCF(CF_3)CF_2OCF(CF_3)COOH$, $CH_2=CFCF_2OCF(CF_3)CF_2OCF(CF_3)CH_2OH$, $CH_2=CHCF_2CF_2I$, $CH_2=CH(CF_2)_2CH=CH_2$, $CH_2=CH(CF_2)_6CH=CH_2$, and $CF_2=CFO(CF_2)_5CN$, and is more preferably at least one selected from the group consisting of $CF_2=CFOCF_2CF(CF_3)OCF_2CF_2CN$ and $CF_2=CFOCF_2CF_2CH_2I$.

In the polymerization, the fluoromonomer may be polymerized with a fluorine-free monomer. An example of the fluorine-free monomer is a hydrocarbon monomer that is reactive with the fluoromonomer. Examples of the hydrocarbon monomer include alkenes such as ethylene, propylene, butylene, and isobutylene; alkyl vinyl ethers such as ethyl vinyl ether, propyl vinyl ether, butyl vinyl ether, isobutyl vinyl ether, and cyclohexyl vinyl ether; vinyl esters such as vinyl acetate, vinyl propionate, vinyl n-butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl para-t-butylbenzoate, vinyl cyclohexanecarboxylate, monochlorovinyl acetate, vinyl adipate, vinyl acrylate, vinyl methacrylate, vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate, and vinyl hydroxycyclohexanecarboxylate; alkyl allyl ethers such as ethyl allyl ether, propyl allyl ether, butyl allyl ether, isobutyl allyl ether, and cyclohexyl allyl ether; alkyl allyl esters such as ethyl allyl ester, propyl allyl ester, butyl allyl ester, isobutyl allyl ester, and cyclohexyl allyl ester; and (meth) acrylic esters such as methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, and vinyl methacrylate.

The fluorine-free monomer may also be a functional group-containing hydrocarbon monomer (excluding a monomer that provides a crosslinking site). Examples of the functional group-containing hydrocarbon monomer include hydroxy alkyl vinyl ethers such as hydroxyethyl vinyl ether, hydroxypropyl vinyl ether, hydroxybutyl vinyl ether, hydroxyisobutyl vinyl ether, and hydroxycyclohexyl vinyl ether; fluorine-free monomers having a carboxyl group, such as acrylic acid, methacrylic acid, itaconic acid, succinic acid, succinic anhydride, fumaric acid, fumaric anhydride, crotonic acid, maleic acid, maleic anhydride, and perfluorobutenoic acid; fluorine-free monomers having a sulfo group, such as vinylsulfonic acid; fluorine-free monomers having a glycidyl group, such as glycidyl vinyl ether and glycidyl allyl ether; fluorine-free monomers having an amino group such as aminoalkyl vinyl ether and aminoalkyl allyl ether; fluorine-free monomers having an amide group such as (meth)acrylamide and methylol acrylamide; and fluorine-free monomers having a nitrile group, such as acrylonitrile and methacrylonitrile.

In the polymerization, desired fluoropolymer particles can be obtained by polymerizing one or two or more of the above fluoromonomers.

(Polymerization)

The fluoromonomer is polymerized in the presence of a polymer (I). The amount of the polymer (I) added to the polymerization is preferably more than 0.02% by mass and 10% by mass or less based on the aqueous medium, and the more preferable upper limit is 1% by mass or less. When the amount of the polymer (I) added is within the above range, polymerization of the fluoromonomer in the aqueous medium can progress smoothly. The amount of the polymer (I) added is the total amount of the polymer (I) added to the polymerization.

In the polymerization, the entirety of the polymer (I) may be added at once, or the polymer (I) may be added continuously. Adding the polymer (I) continuously means, for example, adding the polymer (I) not at once, but adding over time and without interruption or adding in portions. In the polymerization, an aqueous solution containing the polymer (I) and water may be prepared, and the aqueous solution may be added.

In the polymerization, it is preferable to initiate the addition of the polymer (I) before the solid content of the fluoropolymer formed in the aqueous medium reaches 0.5% by mass, and add the polymer (I) continuously thereafter as well. The timing to initiate adding the polymer (I) is preferably before the solid content of the fluoropolymer reaches 0.3% by mass, more preferably before it reaches 0.2% by mass, even more preferably before it reaches 0.1% by mass, and particularly preferably at the same time as the beginning of polymerization. The solid content is the content of the fluoropolymer based on the total amount of the aqueous medium and the fluoropolymer.

In the polymerization, the use of at least one of the polymers (I) enables a fluoropolymer to be efficiently produced. Also, two or more of the compounds encompassed within the polymer (I) may be used at the same time, and a compound having a surfactant function other than the polymer (I) may also be used in combination insofar as the compound is volatile or is allowed to remain in a molded body formed from the fluoropolymer or the like.

In the polymerization, a nucleating agent may be used. The amount of the nucleating agent added can be suitably selected according to the type of the nucleating agent. The amount of the nucleating agent added may be 5,000 ppm by mass or less based on the aqueous medium, and is preferably 1,000 ppm by mass or less, more preferably 500 ppm by mass or less, even more preferably 100 ppm by mass or less, particularly preferably 50 ppm by mass or less, and most preferably 10 ppm by mass or less.

In the polymerization, it is preferable to add the nucleating agent to the aqueous medium before the beginning of polymerization or before the solid content of the fluoropolymer formed in the aqueous medium reaches 5.0% by mass. Adding the nucleating agent at the initial stage of the polymerization enables an aqueous dispersion having a small average primary particle size and excellent stability to be obtained.

The amount of the nucleating agent added at the initial stage of the polymerization is preferably 0.001% by mass or more, more preferably 0.01% by mass or more, even more preferably 0.05% by mass or more, and particularly

preferably 0.1% by mass or more based on the resulting fluoropolymer. The upper limit of the amount of the nucleating agent added at the initial stage of the polymerization may be, but is not limited to, 2,000% by mass.

The use of the nucleating agent enables a fluoropolymer having a smaller primary particle size to be obtained than that in the case of polymerization in the absence of the above nucleating agent.

Examples of the nucleating agent include dicarboxylic acids, perfluoropolyether (PFPE) acids or salts thereof, and hydrocarbon-containing surfactants. The nucleating agent is preferably free from an aromatic ring, and is preferably an aliphatic compound.

Although the nucleating agent is preferably added before addition of the polymerization initiator or simultaneously with addition of the polymerization initiator, it is also possible to adjust the particle size distribution by adding the nucleating agent during the polymerization.

The amount of the dicarboxylic acid is preferably 1,000 ppm by mass or less, more preferably 500 ppm by mass or less, and even more preferably 100 ppm by mass or less based on the aqueous medium.

The perfluoropolyether (PFPE) acids or salts thereof may have any chain structure in which oxygen atoms in the main chain of the molecule are separated by saturated carbon fluoride groups having 1 to 3 carbon atoms. Two or more carbon fluoride groups may be present in the molecule. Representative structures have repeating units represented by the following formulas:

$(-CFCF_3-CF_2-O-)_n$ (VII)

$(-CF_2-CF_2-CF_2-O-)_n$ (VIII)

$(-CF_2-CF_2-O-)_n-(-CF_2-O-)_m$ (IX)

$(-CF_2-CFCF_3-O-)n-(-CF_2-O-)_m$ (X)

These structures are described in Kasai, J. Appl. Polymer Sci., 57, 797 (1995). As disclosed in this document, the PFPE acid or a salt thereof may have a carboxylic acid group or a salt thereof at one end or both ends. The PFPE acid or a salt thereof may also have a sulfonic acid, a phosphonic acid group, or a salt thereof at one end or both ends. The PFPE acid or a salt thereof may have different groups at each end. Regarding monofunctional PFPE, the other end of the molecule is usually perfluorinated, but may contain a hydrogen or chlorine atom. The PFPE acid or a salt thereof has at least two ether oxygen atoms, preferably at least four ether oxygen atoms, and even more preferably at least six ether oxygen atoms. Preferably, at least one carbon fluoride group separating ether oxygen atoms, more preferably at least two of such carbon fluoride groups, have 2 or 3 carbon atoms. Even more preferably, at least 50% of the carbon fluoride groups separating ether oxygen atoms has 2 or 3 carbon atoms. Also preferably, the PFPE acid or a salt thereof has at least 15 carbon atoms in total, and for example, a preferable minimum value of n or n + m in the repeating unit structure is at least 5. Two or more of the PFPE acids and salts thereof having an acid group at one end or both ends may be used in the production method of the present disclosure. The PFPE acid or a salt thereof preferably has a number average molecular weight of less than 6,000 g/mol.

The hydrocarbon-containing surfactant is preferably added in an amount of 40 ppm by mass or less, more preferably 30 ppm by mass or less, and even more preferably 20 ppm by mass or less based on the aqueous medium. The amounts in ppm of the oleophilic nucleation sites present in the aqueous medium will be less than the amounts in ppm disclosed herein as being added to the aqueous medium. Thus, the amounts of oleophilic nucleation sites will each be less than the 40 ppm by mass, 30 ppm by mass, and 20 ppm by mass as described above. Since oleophilic nucleation sites are considered to exist as molecules, even a small amount of the hydrocarbon-containing surfactant can generate a large amount of oleophilic nucleation sites. Thus, addition of as little as 1 ppm by mass of the hydrocarbon-containing surfactant to the aqueous medium can provide a beneficial effect. A preferable lower limit is 0.01 mass ppm.

The hydrocarbon-containing surfactant encompasses nonionic surfactants and cationic surfactants, including siloxane surfactants such as those disclosed in U.S. Patent No. 7,897,682 (Brothers et al.) and U.S. Patent No. 7,977,438 (Brothers et al.).

The hydrocarbon-containing surfactant is preferably a nonionic surfactant (for example, a nonionic hydrocarbon surfactant). In other words, the nucleating agent is preferably a nonionic surfactant. The nonionic surfactant is preferably free from an aromatic moiety.

The nonionic surfactant may be a nonionic surfactant that can be contained in the unconcentrated composition.

In the polymerization, a compound having a functional group capable of reaction by radical polymerization and a hydrophilic group may be used together with the polymer (I). As the compound having a functional group capable of reaction by radical polymerization and a hydrophilic group, the same compound as a modifying monomer (A), which will be described below, can be used.

In the polymerization, in addition to the polymer (I) and other compounds having a surfactant function used as

necessary, an additive may also be used to stabilize the compounds. Examples of the additive include a buffer, a pH adjuster, a stabilizing aid, and a dispersion stabilizer.

The stabilizing aid is preferably paraffin wax, fluorine-containing oil, a fluorine-containing solvent, silicone oil, or the like. One stabilizing aid may be used singly, or two or more may be used in combination. The stabilizing aid is more preferably paraffin wax. Paraffin wax may be in the form of a liquid, semi-solid, or solid at room temperature, and is preferably a saturated hydrocarbon having 12 or more carbon atoms. Usually, the melting point of paraffin wax is preferably 40 to 65°C, and more preferably 50 to 65°C.

The amount of the stabilizing aid used is preferably 0.1 to 12% by mass and more preferably 0.1 to 8% by mass based on the mass of the aqueous medium used. Desirably, the stabilizing aid is sufficiently hydrophobic so that the stabilizing aid is completely separated from the aqueous dispersion after polymerization, and does not serve as a contaminating component.

The polymerization is performed by charging a polymerization reactor with an aqueous medium, the polymer (I), a monomer, and optionally a further additive, stirring the contents of the reactor, maintaining the reactor at a predetermined polymerization temperature, and adding a predetermined amount of a polymerization initiator to thereby initiate the polymerization reaction. After the beginning of the polymerization reaction, the components such as the monomer, the polymerization initiator, a chain transfer agent, and the polymer (I) may additionally be added depending on the purpose. The polymer (I) may be added after the polymerization reaction is initiated.

Usually, the polymerization temperature is 5 to 120°C, and the polymerization pressure is 0.05 to 10 MPaG. The polymerization temperature and the polymerization pressure are suitably determined according to the type of monomer used, the molecular weight of the target fluoropolymer, and the reaction rate.

The polymerization initiator may be any polymerization initiator capable of generating radicals within the polymerization temperature range, and known oil-soluble and/or water-soluble polymerization initiators may be used. The polymerization initiator may be combined with a reducing agent, for example, to form a redox agent, which initiates the polymerization. The concentration of the polymerization initiator is suitably determined according to the type of monomer, the molecular weight of the target fluoropolymer, and the reaction rate.

The polymerization initiator may be an oil-soluble radical polymerization initiator or a water-soluble radical polymerization initiator.

The oil-soluble radical polymerization initiator may be a known oil-soluble peroxide, and representative examples include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω-hydro-dodecafluorohexanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples thereof include ammonium salts, potassium salts, and sodium salts of persulphuric acid, perboric acid, perchloric acid, perphosphoric acid, and percarbonic acid, organic peroxides of disuccinic acid peroxide and diglutaric acid peroxide, t-butyl permaleate, and t-butyl hydroperoxide. A reducing agent such as a sulfite may be contained together, and the amount thereof may be 0.1 to 20 times the amount of the peroxide.

For example, in a case where the polymerization is performed at a low temperature of 30°C or lower, the polymerization initiator used is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of persulfate include ammonium persulfate and potassium persulfate. Examples of sulfites include sodium sulfite and ammonium sulfite. In order to increase the decomposition rate of the initiator, the combination of the redox initiator also preferably contains a copper salt or an iron salt. An example of the copper salt is copper(II) sulfate, and an example of the iron salt is iron(II) sulfate.

Examples of the redox initiator include potassium permanganate/oxalic acid, potassium permanganate/ammonium oxalate, ammonium persulfate/bisulfite/iron sulfate, manganese triacetate/oxalic acid, ammonium cerium nitrate/oxalic acid, and bromate/bisulfite, and potassium permanganate/oxalic acid is preferable. In the case of using a redox initiator, either an oxidizing agent or a reducing agent may be charged into a polymerization tank in advance, followed by adding the other continuously or intermittently thereto to initiate the polymerization. For example, in the case of potassium permanganate/oxalic acid, preferably oxalic acid is charged into a polymerization tank and potassium permanganate is

continuously added thereto.

The amount of the polymerization initiator added is not limited, and the polymerization initiator is added in an amount that does not significantly decrease the polymerization rate (e.g., a concentration of several ppm in water) or more at once in the initial stage of polymerization, or added successively or continuously. The upper limit is within a range where the reaction temperature is allowed to increase while the polymerization reaction heat is removed through the device surface, and the upper limit is more preferably within a range where the polymerization reaction heat can be removed through the device surface.

In the polymerization, known chain transfer agents, radical scavengers, and decomposers may be added to regulate the polymerization rate and the molecular weight depending on the purpose.

Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

The chain transfer agent may be a bromine compound or an iodine compound. An example of a polymerization method involving a bromine compound or an iodine compound is a method in which the fluoromonomer is polymerized in an aqueous medium substantially in the absence of oxygen and in the presence of a bromine compound or an iodine compound (iodine transfer polymerization). Representative examples of the bromine compound or the iodine compound to be used include compounds represented by the following general formula:

$$R^aI_xBr_y$$

wherein x and y are each independently an integer of 0 to 2 and satisfy $1 \leq x+y \leq 2$, and $R^a$ is a saturated or unsaturated fluorohydrocarbon group or chlorofluorohydrocarbon group having 1 to 16 carbon atoms, or a hydrocarbon group having 1 to 3 carbon atoms, and may contain an oxygen atom. By using a bromine compound or an iodine compound, iodine or bromine is introduced into the polymer, and serves as a crosslinking point.

Examples of the bromine compound or the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, $CFBrClCFClBr$, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodomonobromo-substituted product, a diiodomonobromo-substituted product, and a (2-iodoethyl) and (2-bromoethyl)-substituted product of benzene, and one of these compounds may be used singly, or these compounds can also be used as a combination.

Among these, 1,4-diiodoperfluorobutane, 1,6-diiodoperfluorohexane, and 2-iodoperfluoropropane are preferably used from the viewpoint of polymerization reactivity, crosslinkability, availability, and the like.

The amount of the chain transfer agent used is usually 1 to 50,000 ppm by mass, preferably 1 to 20,000 ppm by mass based on the total amount of the fluoromonomer fed.

The chain transfer agent may be added to the reaction vessel at once before the beginning of the polymerization, may be added at once after the beginning of the polymerization, may be added in multiple portions during the polymerization, or may be added continuously during the polymerization.

As a polymerization initiator, persulfate (such as ammonium persulfate) and organic peroxide such as disuccinic acid peroxide or diglutaric acid peroxide can be used alone or in the form of a mixture thereof. Further, the polymerization initiator may be used together with a reducing agent such as sodium sulfite so as to form a redox system. Moreover, the concentration of radicals in the system can be also regulated by adding a radical scavenger such as hydroquinone or catechol or adding a peroxide decomposer such as ammonium sulfate during polymerization.

In the polymerization, the fluoropolymer may be obtained by polymerizing the fluoromonomer in the aqueous medium in the presence of the polymer (I) to produce an aqueous dispersion of fluoropolymer particles, and by seed-polymerizing the fluoromonomer to the fluoropolymer particles in the aqueous dispersion of the fluoropolymer particles.

Preferably, in the polymerization, the polymerization of the perfluoromonomer is carried out substantially in the absence of a fluorine-containing surfactant (excluding the compound having a functional group capable of reaction by radical polymerization and a hydrophilic group). While fluorine-containing surfactants are conventionally used in the polymerization of fluoromonomers in an aqueous medium, the production method of the present disclosure enables a fluoropolymer to be obtained even without using the fluorine-containing surfactants.

The expression "substantially in the absence of a fluorine-containing surfactant" as used herein means that the amount of the fluorine-containing surfactant is 10 mass ppm or less based on the aqueous medium. The amount of the fluorine-containing surfactant is preferably 1 mass ppm or less, more preferably 100 mass ppb or less, even more preferably 10 mass ppb or less, and yet more preferably 1 mass ppb or less based on the aqueous medium.

Examples of the fluorine-containing surfactant include anionic fluorine-containing surfactants. The anionic fluorine-containing surfactant may be, for example, a fluorine atom-containing surfactant having 20 or less carbon atoms in total in the portion excluding the anionic group.

The fluorine-containing surfactant may also be a fluorine-containing surfactant in which the molecular weight of the anionic moiety is 1000 or less.

The "anionic moiety" means a portion of the fluorine-containing surfactant excluding the cation. For example, in the case of $F(CF_2)_{n1}COOM$ represented by the formula (I) described below, the anionic moiety is the "$F(CF_2)_{n1}COO$" portion.

Examples of the fluorine-containing surfactant also include fluorine-containing surfactants having a LogPOW of 3.5 or less. The LogPOW is a partition coefficient between 1-octanol and water, and is represented by LogP, wherein P represents a ratio of the fluorine-containing surfactant concentration in octanol/the fluorine-containing surfactant concentration in water attained when an octanol/water (1:1) mixture containing the fluorine-containing surfactant is phase-separated.

The LogPOW is calculated by performing HPLC on standard substances (heptanoic acid, octanoic acid, nonanoic acid, and decanoic acid) having a known octanol/water partition coefficient under conditions having column: TOSOH ODS-120T column (φ4.6 mm × 250 mm, manufactured by Tosoh Corporation), eluent: acetonitrile/0.6% by mass $HClO_4$ solution = 1/1 (vol/vol%), flow rate: 1.0 ml/min, sample volume: 300 μL, column temperature: 40°C, detection light: UV210 nm to construct a calibration curve concerning each elution time and known octanol/water partition coefficient, and determining the HPLC elution time of a sample liquid based on the calibration curve.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3250808, U.S. Patent No. 3271341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

The anionic fluorine-containing surfactant may be a compound represented by the following general formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group having 3 to 20 carbon atoms in which some or all of H are replaced by F, the alkylene group optionally containing one or more ether bonds in which some of H are optionally replaced by Cl; and $Y^0$ is an anionic group.

The anionic group $Y^0$ may be $-COOM$, $-SO_2M$, or $-SO_3M$, and may be $-COOM$ or $-SO_3M$.

M is H, a metal atom, $NR^7_4$, optionally substituted imidazolium, optionally substituted pyridinium, or optionally substituted phosphonium, and $R^7$ is H or an organic group.

Examples of the metal atom include alkali metals (Group 1) and alkaline earth metals (Group 2), such as Na, K, or Li.

$R^7$ may be H or a $C_{1-10}$ organic group, may be H or a $C_{1-4}$ organic group, and may be H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

In the $Rf^{n0}$, 50% or more of H atoms may be replaced with fluorine atoms.

Examples of the compound represented by the general formula ($N^0$) may be a compound represented by the following general formula ($N^1$):

$$X^{n0}\text{-}(CF_2)_{m1}\text{-}Y^0 \qquad (N^1)$$

(wherein $X^{n0}$ is H, Cl, or F, m1 is an integer of 3 to 15, and $Y^0$ is as defined above); a compound represented by the following general formula ($N^2$):

$$Rf^{n1}\text{-}O\text{-}(CF(CF_3)CF_2O)_{m2}CFX^{n1}\text{-}Y^0 \qquad (N^2)$$

(wherein $Rf^{n1}$ is a perfluoroalkyl group having 1 to 5 carbon atoms, m2 is an integer of 0 to 3, $X^{n1}$ is F or $CF_3$, and $Y^0$ is as defined above); a compound represented by the following general formula ($N^3$) :

$Rf^{n2}(CH_2)_{m3}\text{-}(Rf^{n3})_q\text{-}Y^0$ (N3)

wherein $Rf^{n2}$ is a partially or fully fluorinated alkyl group having 1 to 13 carbon atoms and optionally containing an ether bond; m3 is an integer of 1 to 3; $Rf^{n3}$ is a linear or branched perfluoroalkylene group having 1 to 3 carbon atoms; q is 0 or 1; and $Y^0$ is as defined above; a compound represented by the following general formula ($N^4$):

$Rf^{n4}\text{-O-}(CY^{n1}Y^{n2})_pCE_2\text{-}Y^0$ (N4)

wherein $Rf^{n4}$ is a linear or branched partially or fully fluorinated alkyl group having 1 to 12 carbon atoms and optionally containing an ether bond and/or a chlorine atom; and $Y^{n1}$ and $Y^{n2}$ are the same or different and are each H or F; p is 0 or 1; and $Y^0$ is as defined above; and
a compound represented by the general formula ($N^5$):

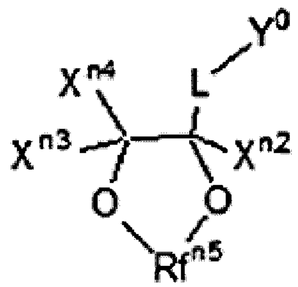

(N5)

(wherein $X^{n2}$, $X^{n3}$, and $X^{n4}$ may be the same or different and are each independently H, F, or a linear or branched, partially or fully fluorinated alkyl group having 1 to 6 carbon atoms and optionally containing an ether bond, $Rf^{n5}$ is a linear or branched, partially or fully fluorinated alkylene group having 1 to 3 carbon atoms and optionally containing an ether bond, L is a linking group, and $Y^0$ is as defined above, provided that the total number of carbon atoms of $X^{n2}$, $X^{n3}$, $X^{n4}$, and $Rf^{n5}$ is 18 or less).

More specific examples of the compound represented by the above general formula ($N^0$) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

$F(CF_2)_{n1}COOM$ (I)

wherein n1 is an integer of 3 to 14, M is H, a metal atom, $NR^7_4$, optionally substituted imidazolium, optionally substituted pyridinium, or optionally substituted phosphonium, and $R^7$ is H or an organic group.

The ω-H perfluorocarboxylic acid (II) is represented by the following general formula (II):

$H(CF_2)_{n2}COOM$ (II)

wherein n2 is an integer of 4 to 15, and M is as defined above.

The perfluoroethercarboxylic acid (III) is represented by the following general formula (III):

$Rf^1\text{-O-}(CF(CF_3)CF_2O)_{n3}CF(CF_3)COOM$ (III)

wherein $Rf^1$ is a perfluoroalkyl group having 1 to 5 carbon atoms, n3 is an integer of 0 to 3, and M is as defined above.

The perfluoroalkylalkylenecarboxylic acid (IV) is represented by the following general formula (IV):

$Rf^2(CH_2)_{n4}Rf^3COOM$ (IV)

wherein $Rf^2$ is a perfluoroalkyl group having 1 to 5 carbon atoms, $Rf^3$ is a linear or branched perfluoroalkylene group having 1 to 3 carbon atoms, n4 is an integer of 1 to 3, and M is as defined above.

The alkoxyfluorocarboxylic acid (V) is represented by the following general formula (V):

$$Rf^4\text{-O-}CY^1Y^2CF_2\text{-COOM} \qquad (V)$$

wherein $Rf^4$ is a linear or branched, partially or fully fluorinated alkyl group having 1 to 12 carbon atoms and optionally containing an ether bond and/or a chlorine atom; $Y^1$ and $Y^2$ are the same or different and are each independently H or F; and M is as defined above.

The perfluoroalkylsulfonic acid (VI) is represented by the following general formula (VI):

$$F\ (CF_2)_{n5}SO_3M \qquad (VI)$$

wherein n5 is an integer of 3 to 14, and M is as defined above.

The ω-H perfluorosulfonic acid (VII) is represented by the following general formula (VII):

$$H(CF_2)_{n6}SO_3M \qquad (VII)$$

wherein n6 is an integer of 4 to 14, and M is as defined above.

The perfluoroalkylalkylenesulfonic acid (VIII) is represented by the following general formula (VIII):

$$Rf^5(CH_2)_{n7}SO_3M \qquad (VIII)$$

wherein $Rf^5$ is a perfluoroalkyl group having 1 to 13 carbon atoms, n7 is an integer of 1 to 3, and M is as defined above.

The alkylalkylenecarboxylic acid (IX) is represented by the following general formula (IX):

$$Rf^6(CH_2)_{n8}COOM \qquad (IX)$$

wherein $Rf^6$ is a linear or branched, partially or fully fluorinated alkyl group having 1 to 13 carbon atoms and optionally containing an ether bond, n8 is an integer of 1 to 3, and M is as defined above.

The fluorocarboxylic acid (X) is represented by the following general formula (X):

$$Rf^7\text{-O-}Rf^8\text{-O-}CF_2\text{-COOM} \qquad (X)$$

wherein $Rf^7$ is a linear or branched, partially or fully fluorinated alkyl group having 1 to 6 carbon atoms and optionally containing an ether bond and/or a chlorine atom; $Rf^8$ is a linear or branched, partially or fully fluorinated alkyl group having 1 to 6 carbon atoms; and M is as defined above.

The alkoxyfluorosulfonic acid (XI) is represented by the following general formula (XI):

$$Rf^9\text{-O-}CY^1Y^2CF_2\text{-}SO_3M \qquad (XI)$$

wherein $Rf^9$ is a linear or branched, partially or fully fluorinated alkyl group having 1 to 12 carbon atoms and optionally containing an ether bond and optionally containing chlorine; $Y^1$ and $Y^2$ are the same or different and are each independently H or F; and M is as defined above.

The compound (XII) is represented by the following general formula (XII):

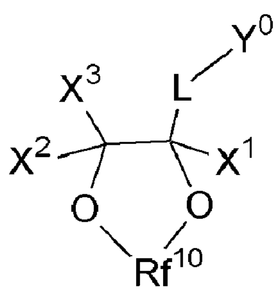

(XII)

wherein $X^1$, $X^2$, and $X^3$ may be the same or different and are each independently H, F, or a linear or branched, partially or

fully fluorinated alkyl group having 1 to 6 carbon atoms and optionally containing an ether bond; $Rf^{10}$ is a perfluoroalkylene group having 1 to 3 carbon atoms; L is a linking group; and $Y^0$ is an anionic group.

$Y^0$ may be -COOM, $-SO_2M$, or $-SO_3M$, and may be $-SO_3M$ or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

$$Rf^{11}\text{-O-}(CF_2CF(CF_3)O)_{n9}(CF_2O)_{n10}CF_2COOM \qquad \text{(XIII)}$$

wherein $Rf^{11}$ is a fluoroalkyl group having 1 to 5 carbon atoms containing chlorine, n9 is an integer of 0 to 3, n10 is an integer of 0 to 3, and M is as defined above. Examples of the compound (XIII) include $CF_2ClO(CF_2CF(CF_3)O)_{n9}(CF_2O)_{n10}CF_2COONH_4$ (a mixture having an average molecular weight of 750, n9 and n10 in the formula are defined above).

As described above, examples of the anionic fluorine-containing surfactant include a carboxylic acid-based surfactant and a sulfonic acid-based surfactant.

The fluorine-containing surfactant may be a single fluorine-containing surfactant, or may be a mixture containing two or more fluorine-containing surfactants.

Examples of the fluorine-containing surfactant include compounds represented by the following formulas. The fluorine-containing surfactant may be a mixture of these compounds. In one embodiment of the polymerization, a fluoromonomer is polymerized substantially in the absence of compounds represented by the following formulas:

$F(CF_2)_7COOM$,

$F(CF_2)_5COOM$,

$H(CF_2)_6COOM$,

$H(CF_2)_7COOM$,

$CF_3O(CF_2)_3OCHFCF_2COOM$,

$C_3F_7OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$, and

$CF_2ClCF(CF_3)OCF_2CF(CF_3)OCF_2COOM$,

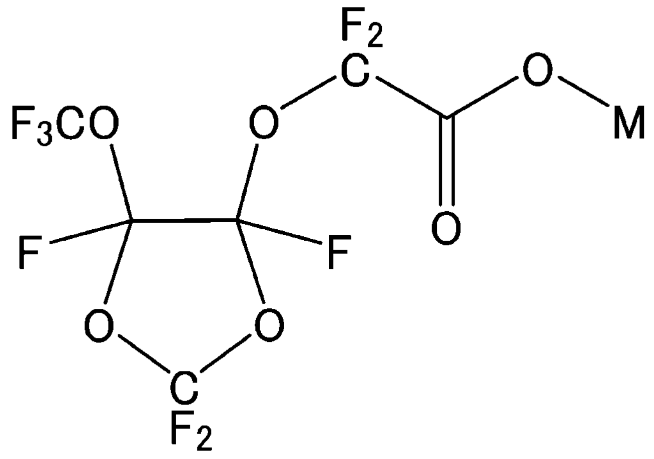

wherein M is H, a metal atom, $NR^7_4$, optionally substituted imidazolium, optionally substituted pyridinium, or optionally substituted phosphonium, wherein $R^7$ is H or an organic group.

Polymerization of the fluoromonomer in the aqueous medium yields a polymerization dispersion containing the fluoropolymer, the polymer (I), and the aqueous medium.

(Fluoropolymer aqueous dispersion)

The present disclosure also relates to a fluoropolymer aqueous dispersion comprising a polymer (I), a fluoropolymer, nonionic surfactant, and an aqueous medium. The fluoropolymer aqueous dispersion of the present disclosure can be more preferably produced by the production method of the present disclosure.

In the fluoropolymer aqueous dispersion of the present disclosure, a content of the polymer (I) is 500 mass ppm or less based on the fluoropolymer aqueous dispersion, the fluoropolymer aqueous dispersion has a viscosity at 25°C of 100 mPa·s or less, an anionic charge density of a polymer particle of the fluoropolymer is 8.0 to 40 μeq/g, a content of the fluoropolymer is 50% by mass or more and 75% by mass or less based on the fluoropolymer aqueous dispersion, and a content of the nonionic surfactant is 1.0% by mass or more and 12% by mass or less based on the fluoropolymer. The fluoropolymer aqueous dispersion of the present disclosure thus configured is unlikely to undergo decrease in pH even if stored over a long period.

The content of the polymer (I) in the fluoropolymer aqueous dispersion of the present disclosure is 500 mass ppm or less, preferably 450 mass ppm or less, more preferably 400 mass ppm or less and more preferably 350 mass ppm or less, and is preferably 0.1 mass ppm or more, more preferably 1.0 mass ppm or more and even more preferably 10.0 mass ppm or more based on the fluoropolymer aqueous dispersion.

The content of the polymer (I) can be measured by $^{19}F$ NMR measurement. The content of the polymer (I) can be adjusted, for example, by regulating the degree of concentration or the number of times of concentration of the unconcentrated composition in the production method of the present disclosure.

The content of the fluoropolymer in the fluoropolymer aqueous dispersion of the present disclosure is 50% by mass or more and 75% by mass or less, preferably more than 50% by mass, more preferably 55% by mass or more, even more preferably 57% by mass or more, and yet more preferably 60% by mass or more, and preferably 70% by mass or less, more preferably 67% by mass or less, and even more preferably 65% by mass or less, based on the fluoropolymer aqueous dispersion.

The content of the fluoropolymer in the fluoropolymer aqueous dispersion of the present disclosure can be measured by the same method as the method for measuring the content of the fluoropolymer in the unconcentrated composition. The content of the fluoropolymer can be adjusted, for example, by regulating the degree of concentration or the number of times of concentration of the unconcentrated composition in the production method of the present disclosure.

The content of the nonionic surfactant in the fluoropolymer aqueous dispersion of the present disclosure is 1.0% by mass or more and 12% by mass or less, preferably 2.5% by mass or more, more preferably 4.0% by mass or more, even more preferably 5.0% by mass or more, and particularly preferably 5.5% by mass or more, and preferably 10% by mass or less, more preferably 8.0% by mass or less, and even more preferably 7.0% by mass or less, based on the fluoropolymer.

The content of the nonionic surfactant in the fluoropolymer aqueous dispersion of the present disclosure can be measured by the same method as the method for measuring the content of the nonionic surfactant in the unconcentrated composition.

The viscosity at 25°C of the fluoropolymer aqueous dispersion of the present disclosure is 100 mPa·s or less,

preferably 70.0 mPa·s or less, more preferably 60.0 mPa·s or less, and even more preferably 50.0 mPa·s or less, and preferably 5.0 mPa·s or more, more preferably 10.0 mPa·s or more, even more preferably 15.0 mPa·s or more, and particularly preferably 20.0 mPa·s or more.

The viscosity at 25°C of the fluoropolymer aqueous dispersion of the present disclosure can be measured using a B-type rotary viscometer (manufactured by Toki Sangyo Co., Ltd., rotor No. 2) under conditions of a rotational speed of 60 rpm, a measurement time of 120 seconds, and 25°C. The viscosity of the fluoropolymer aqueous dispersion can be adjusted by a method such as a method for adjusting the content of the fluoropolymer and nonionic surfactant, or a method for adding an anionic surfactant, a pH adjuster, or the like.

The anionic charge density of the polymer particle of the fluoropolymer is 8.0 to 40 μeq/g, more preferably 8.5 μeq/g or more, and even more preferably 9.0 μeq/g or more, and more preferably 30 μeq/g or less, even more preferably 20 μeq/g or less, and particularly preferably 15 μeq/g or less.

When the anionic charge density of the polymer particle of the aqueous dispersion falls within the above range, the aqueous dispersion is unlikely to undergo decrease in pH even if stored over a long period. This is probably because the surface charge of the polymer particle acts to ease change in pH of the aqueous dispersion. The anionic charge density of the polymer particle can be adjusted by adding a fluorine-free water-soluble electrolyte to an aqueous dispersion containing the polymer particle of the fluoropolymer. The presence of the fluorine-free water-soluble electrolyte in the aqueous dispersion renders the anionic charge density of the polymer particle higher than usual so that the aqueous dispersion has long-term pH stability. The anionic charge density of the polymer particle beyond the above upper limit range increases the viscosity at 25°C of the aqueous dispersion and impairs dispersion stability and handleability.

The anionic charge density of the polymer particle of the fluoropolymer in the aqueous dispersion can be measured using a charge meter for particles.

The fluoropolymer aqueous dispersion of the present disclosure preferably contains a fluorine-free water-soluble electrolyte. The fluorine-free water-soluble electrolyte can be the same as the fluorine-free water-soluble electrolyte that can be used in the production method of the present disclosure.

The surface tension of an aqueous solution containing 0.1% by mass of the fluorine-free water-soluble electrolyte is preferably larger than 60 mN/m from the viewpoint of easily adjusting the anionic charge density of the polymer particle to within the above range.

The fluorine-free water-soluble electrolyte preferably has the surface tension within the above range and is carboxylic acid represented by the general formula (11) and a salt thereof from the viewpoint of easily adjusting the anionic charge density of the polymer particle to within the above range:

the general formula (11): $R^1\text{-}(COOH)_n$

wherein $R^1$ is a monovalent to trivalent organic group having 1 to 10 carbon atoms, and n is an integer of 1 to 3.

The fluorine-free water-soluble electrolyte is preferably at least one selected from the group consisting of sulfuric acid, citric acid, succinic acid, carbonic acid, tartaric acid, maleic acid, malic acid, oxalic acid, malonic acid, and a salt thereof, and more preferably at least one selected from the group consisting of ammonium sulfate and ammonium citrate, from the viewpoint of easily adjusting the anionic charge density of the polymer particle to within the above range.

The content of the fluorine-free water-soluble electrolyte in the fluoropolymer aqueous dispersion of the present disclosure is preferably 0.01% by mass or more, more preferably 0.1% by mass or more, even more preferably 0.2% by mass or more, and yet more preferably 0.3% by mass or more, and preferably 5.0% by mass or less, more preferably 3.0% by mass or less, even more preferably 2.0% by mass or less, and yet more preferably 1.5% by mass or less, based on the fluoropolymer. When the content of the fluorine-free water-soluble electrolyte falls within the above range, the anionic charge density of the polymer particle can be easily adjusted to within the above range. A larger content of the fluorine-free water-soluble electrolyte tends to increase the anionic charge density of the polymer particle and the viscosity of the aqueous dispersion.

In one embodiment, the range of decrease in pH after 6 months from initial pH of the fluoropolymer aqueous dispersion of the present disclosure is less than 1.0.

The pH of the fluoropolymer aqueous dispersion is a value measured at 25°C in accordance with JIS K6893. The range of decrease in pH can be calculated according to the following equation by measuring the initial pH and the pH after 6 months of the aqueous dispersion and using the respective measurement values.

Range of decrease in pH=(Initial pH)-(pH after 6 months)

The initial pH of the fluoropolymer aqueous dispersion is the pH of the aqueous dispersion, the range of decrease in pH of which is to be measured, and may be the pH of the aqueous dispersion measured immediately after preparation, or may be the pH of the aqueous dispersion stored for a long period after preparation of the aqueous dispersion. When the aqueous dispersion, the range of decrease in pH of which is to be measured has pH of lower than 9.0, the pH of the aqueous

dispersion is adjusted to 9.0 and this pH of 9.0 is adopted as the value of the initial pH.

The pH after 6 months of the fluoropolymer aqueous dispersion is the pH of the fluoropolymer aqueous dispersion allowed to stand still at 25°C for 6 months (180 days) from the time of measurement of the pH (initial pH) of the aqueous dispersion, the range of decrease in pH of which is to be measured. When the pH of the aqueous dispersion is adjusted to 9.0 and this pH of 9.0 is regarded as the initial pH, the pH of the fluoropolymer aqueous dispersion allowed to stand still for 6 months (180 days) from the time of pH adjustment to 9.0 is measured.

The fluoropolymer aqueous dispersion of the present disclosure can contain the components described above as components that may be added to the fluoropolymer aqueous dispersion obtained by concentration, for example, an anionic surfactant, a pH adjuster, a water-soluble polymer compound, and an antifoaming agent.

In one embodiment, the fluoropolymer aqueous dispersion of the present disclosure is substantially free from a fluorine-containing surfactant. Herein, the phrase "is substantially free from a fluorine-containing surfactant" means that the content of the fluorine-containing surfactant in the aqueous dispersion is 10 mass ppm or less, preferably 1 mass ppm or less, more preferably 100 mass ppb or less, even more preferably 10 mass ppb or less, yet more preferably 1 mass ppb or less, and particularly preferably less than the detection limit of measurement by liquid chromatography-mass spectrometry (LC/MS).

Next, the fluoropolymer in the aqueous dispersion obtained by the production method of the present disclosure and the fluoropolymer in the aqueous dispersion of the present disclosure will now be described in more detail.

(Fluoropolymer)

Examples of the fluoropolymer include a TFE polymer in which TFE is the monomer having the highest mole fraction (hereinafter, "the most abundant monomer") among the monomers in the polymer, a VDF polymer in which VDF is the most abundant monomer, and a CTFE polymer in which CTFE is the most abundant monomer.

The fluoropolymer preferably has an ion exchange rate (IXR) of higher than 53. The preferable fluoropolymer has either no ionic groups at all or a limited number of ionic groups resulting in an ion exchange rate of higher than about 100. The preferable ion exchange rate of the fluoropolymer is preferably 1,000 or more, more preferably 2,000 or more, and even more preferably 5,000 or more.

The TFE polymer may suitably be a TFE homopolymer, or may be a copolymer containing (1) TFE, (2) one or two or more fluorine-containing monomers each of which is different from TFE and has 2 to 8 carbon atoms, in particular VDF, HFP, or CTFE, and (3) a further monomer. Examples of the further monomer (3) include fluoro(alkyl vinyl ethers) having an alkyl group having 1 to 5 carbon atoms, particularly 1 to 3 carbon atoms; fluorodioxoles; perfluoroalkyl ethylenes; and ω-hydroperfluoroolefins.

The TFE polymer may also be a copolymer of TFE and one or two or more fluorine-free monomers. Examples of the fluorine-free monomers include alkenes such as ethylene and propylene; vinyl esters; and vinyl ethers. The TFE polymer may also be a copolymer of TFE, one or two or more fluorine-containing monomers having 2 to 8 carbon atoms, and one or two or more fluorine-free monomers.

The VDF polymer may suitably be a VDF homopolymer (PVDF), or may be a copolymer containing (1) VDF, (2) one or two or more fluoroolefins each of which is different from VDF and has 2 to 8 carbon atoms, in particular TFE, HFP, or CTFE, and (3) a perfluoro(alkyl vinyl ether) having an alkyl group having 1 to 5 carbon atoms, particularly 1 to 3 carbon atoms, or the like.

The CTFE polymer may suitably be a CTFE homopolymer, or may be a copolymer containing (1) CTFE, (2) one or two or more fluoroolefins each of which is different from CTFE and has 2 to 8 carbon atoms, in particular TFE or HFP, and (3) a perfluoro(alkyl vinyl ether) having an alkyl group having 1 to 5 carbon atoms, particularly 1 to 3 carbon atoms.

The CTFE polymer may also be a copolymer of CTFE and one or two or more fluorine-free monomers, and examples of the fluorine-free monomers include alkenes such as ethylene and propylene; vinyl esters; and vinyl ethers.

The fluoropolymer may be vitreous, plastic, or elastomeric. The fluoropolymer is amorphous or partially crystallized, and may be subjected to compression firing, melt fabrication, or non-melt fabrication.

The production method of the present disclosure can suitably produce, for example, (I) non melt-processible fluororesins, including tetrafluoroethylene polymers (TFE polymers (PTFE)); (II) melt-fabricable fluororesins, including ethylene/TFE copolymers (ETFE), TFE/HFP copolymers (FEP), TFE/perfluoro(alkyl vinyl ether) copolymers (e.g., PFA, MFA), TFE/perfluoroallyl ether copolymers, TFE/VDF copolymers, and electrolyte polymer precursors; and (III) fluoroelastomers, including TFE/propylene copolymers, TFE/propylene/third monomer copolymers (the third monomer may be VDF, HFP, CTFE, fluoroalkyl vinyl ether, or the like), TFE/fluoroalkyl vinyl ether copolymers; HFP/ethylene copolymers, HFP/ethylene/TFE copolymers; VDF/HFP copolymers; HFP/ethylene copolymers; VDF/TFE/HFP copolymers; and fluorine-containing segmented polymers disclosed in Japanese Patent Publication No. 61-49327.

The fluoropolymer is preferably a fluororesin, more preferably a fluororesin having a fluorine substitution percentage, calculated by the following formula, of 50% or higher, even more preferably a fluororesin having the fluorine substitution percentage of higher than 50%, yet more preferably a fluororesin having the fluorine substitution percentage of

55% or higher, yet more preferably a fluororesin having the fluorine substitution percentage of 60% or higher, yet more preferably a fluororesin having the fluorine substitution percentage of 75% or higher, particularly preferably a fluororesin having the fluorine substitution percentage of 80% or higher, and most preferably a fluororesin having the fluorine substitution percentage of 90 to 100%, i.e., a perfluororesin.

Fluorine substitution percentage (%) = (number of fluorine atoms bonded to carbon atoms constituting fluoropolymer) / ((number of hydrogen atoms bonded to carbon atoms constituting fluoropolymer) + (number of fluorine atoms and chlorine atoms bonded to carbon atoms constituting fluoropolymer)) × 100 (Formula )

The perfluororesin is more preferably a fluororesin having the fluorine substitution percentage of 95 to 100%, even more preferably PTFE, FEP, or PFA, and particularly preferably PTFE.

The fluoropolymer may have a core-shell structure. An example of the fluoropolymer having a core-shell structure is modified PTFE including a core of high-molecular-weight PTFE and a shell of a lower-molecular-weight PTFE or a modified PTFE in the particle. Examples of such modified PTFE include PTFE described in Japanese National Publication of International Patent Application No. 2005/527652.

The core-shell structure may have the following structures.

Core: TFE homopolymer Shell: TFE homopolymer
Core: modified PTFE Shell: TFE homopolymer
Core: modified PTFE Shell: modified PTFE
Core: TFE homopolymer Shell: modified PTFE
Core: low-molecular-weight PTFE Shell: high-molecular-weight PTFE
Core: high-molecular-weight PTFE Shell: low-molecular-weight PTFE

In the fluoropolymer having the core-shell structure, the lower limit of the proportion of the core is preferably 0.5% by mass, more preferably 1.0% by mass, even more preferably 2.0% by mass, yet more preferably 3.0% by mass, particularly preferably 5.0% by mass, and most preferably 10.0% by mass. The upper limit of the proportion of the core is preferably 99.5% by mass, more preferably 99.0% by mass, even more preferably 98.0% by mass, yet more preferably 97.0% by mass, particularly preferably 95.0% by mass, and most preferably 90.0% by mass.

In the fluoropolymer having the core-shell structure, the lower limit of the proportion of the shell is preferably 0.5% by mass, more preferably 1.0% by mass, even more preferably 2.0% by mass, yet more preferably 3.0% by mass, particularly preferably 5.0% by mass, and most preferably 10.0% by mass. The upper limit of the proportion of the shell is preferably 99.5% by mass, more preferably 99.0% by mass, even more preferably 98.0% by mass, yet more preferably 97.0% by mass, particularly preferably 95.0% by mass, and most preferably 90.0% by mass.

In the fluoropolymer having the core-shell structure, the core or the shell may be composed of two or more layers. For example, the fluoropolymer may have a trilayer structure including a core center portion of a modified PTFE, a core outer layer portion of a TFE homopolymer, and a shell of a modified PTFE.

Examples of the fluoropolymer having a core-shell structure also include those in which a single particle of the fluoropolymer has a plurality of cores.

(I) The non melt-processible fluororesins, (II) the melt-fabricable fluororesins, and (III) the fluoroelastomers suitably produced by the production method of the present disclosure are preferably produced in the following manner.

(I) Non melt-processible fluororesins

In the production method of the present disclosure, polymerization of TFE is usually performed at a polymerization temperature of 10 to 150°C and a polymerization pressure of 0.05 to 5 MPaG. For example, the polymerization temperature is more preferably 30°C or higher, and even more preferably 50°C or higher. Further, the polymerization temperature is more preferably 120°C or lower, and even more preferably 100°C or lower. Further, the polymerization pressure is more preferably 0.3 MPaG or higher, even more preferably 0.5 MPaG or higher, and more preferably 5.0 MPaG or lower, even more preferably 3.0 MPaG or lower. In particular, from the viewpoint of improving the yield of fluoropolymer, the polymerization pressure is preferably 1.0 MPaG or more, more preferably 1.2 MPaG or more, even more preferably 1.5 MPaG or more, and even more preferably 2.0 MPaG or more.

In an embodiment, the polymerization reaction is initiated by charging pure water into a pressure-resistant reaction vessel equipped with a stirrer, deoxidizing the system, charging TFE, increasing the temperature to a predetermined level, and adding a polymerization initiator. When the pressure decreases as the reaction progresses,

additional TFE is fed continuously or intermittently to maintain the initial pressure. When the amount of TFE fed reaches a predetermined level, feeding is stopped, and then TFE in the reaction vessel is purged and the temperature is returned to room temperature, whereby the reaction is completed. Additional TFE may be added continuously or intermittently to prevent pressure drop.

In production of the TFE polymer (PTFE), various known modifying monomers may be used in combination. TFE polymer as used herein is a concept that encompasses not only a TFE homopolymer but also a non melt-processible copolymer of TFE and a modifying monomer (hereinafter, referred to as a "modified PTFE").

The modifying monomer is not limited as long as it can be copolymerized with TFE, and examples thereof include fluoromonomers and non-fluoromonomers. Further, one or a plurality of kinds of the modifying monomers may be used.

Examples of the non-fluoromonomer include, but not limited to, a monomer represented by the general formula:

$$CH_2=CR^{Q1}-LR^{Q2}$$

wherein $R^{Q1}$ represents a hydrogen atom or an alkyl group; L represents a single bond, -CO-O-*, -O-CO-*, or -O-; * represents the binding position with $R^{Q2}$; and $R^{Q2}$ represents a hydrogen atom, an alkyl group, or a nitrile group.

Examples of the non-fluoromonomer include methyl acrylate, methyl methacrylate, ethyl acrylate, ethyl methacrylate, propyl acrylate, propyl methacrylate butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. Of these, the non-fluoromonomer is preferably butyl methacrylate, vinyl acetate, or acrylic acid.

Examples of the fluoromonomer include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; (perfluoroalkyl)ethylenes; and perfluoroallyl ethers.

Examples of the perfluorovinyl ether include, but are not limited to, a perfluoro unsaturated compound represented by the general formula (A):

$$CF_2=CF-ORf \qquad (A)$$

wherein Rf represents a perfluoroorganic group. The "perfluoroorganic group" as used herein means an organic group in which all hydrogen atoms bonded to the carbon atoms are replaced by fluorine atoms. The perfluoro organic group may have ether oxygen.

Examples of the perfluorovinyl ether include perfluoro(alkyl vinyl ether) (PAVE) in which Rf is a perfluoroalkyl group having 1 to 10 carbon atoms in the general formula (A). The perfluoroalkyl group preferably has 1 to 5 carbon atoms.

Examples of the perfluoroalkyl group in PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include those represented by the general formula (A) in which Rf is a perfluoro(alkoxyalkyl) group having 4 to 9 carbon atoms; those in which Rf is a group represented by the following formula:

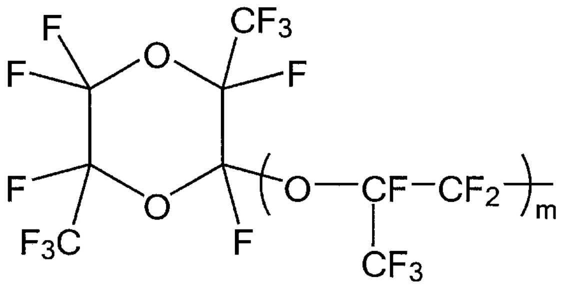

wherein m represents 0 or an integer of 1 to 4; and those in which Rf is a group represented by the following formula: [0406]

$$CF_3CF_2CF_2-(O-CF(CF_3)-CF_2)_n-$$

wherein n is an integer of 1 to 4.

Examples of hydrogen-containing fluoroolefins include $CH_2=CF_2$, $CFH=CH_2$, $CFH=CF_2$, $CH_2=CFCF_3$, $CH_2=CHCF_3$, $CHF=CHCF_3$ (E-form), and $CHF=CHCF_3$ (Z-form).

Examples of the (perfluoroalkyl)ethylene (PFAE) include, but are not limited to, (perfluorobutyl) ethylene (PFBE), and (perfluorohexyl) ethylene.

Examples of perfluoroallyl ether include fluoromonomers represented by the general formula:

$CF_2=CF-CF_2-ORf$

wherein Rf represents a perfluoro organic group.

Rf in the above general formula is the same as Rf in the general formula (A). Rf is preferably a perfluoroalkyl group having 1 to 10 carbon atoms or a perfluoroalkoxyalkyl group having 1 to 10 carbon atoms. Perfluoroallyl ether is preferably at least one selected from the group consisting of $CF_2=CF-CF_2-O-CF_3$, $CF_2=CF-CF_2-O-C_2F_5$, $CF_2=CF-CF_2-O-C_3F_7$, and $CF_2=CF-CF_2-O-C_4F_9$, more preferably at least one selected from the group consisting of $CF_2=CF-CF_2-O-C_2F_5$, $CF_2=CF-CF_2-O-C_3F_7$, and $CF_2=CF-CF_2-O-C_4F_9$, and even more preferably $CF_2=CF-CF_2-O-CF_2CF_2CF_3$.

The modifying monomer is also preferably exemplified by a modifying monomer (3) having a monomer reactivity ratio of 0.1 to 8. The presence of the modifying monomer (3) makes it possible to obtain PTFE particles having a small particle size, and to thereby obtain an aqueous dispersion having high dispersion stability.

The monomer reactivity ratio in the copolymerization with TFE is a value obtained by dividing a rate constant when the propagating radical reacts with TFE when the propagating radical is less than a repeating unit based on TFE by a rate constant when the propagating radical reacts with a modifying monomer. The lower this value is, the more reactive the modifying monomer is with TFE. The monomer reactivity ratio can be calculated by copolymerizing the TFE and the modifying monomer, determining the compositional features in the polymer formed immediately after initiation, and calculating the reactivity ratio by Fineman-Ross equation.

The copolymerization is performed using 3,600 g of deionized degassed water, 1,000 mass ppm of ammonium perfluorooctanoate based on the water, and 100 g of paraffin wax contained in an autoclave made of stainless steel with an internal volume of 6.0 L at a pressure of 0.78 MPaG and a temperature of 70°C. A modifying monomer in an amount of 0.05 g, 0.1 g, 0.2 g, 0.5 g, or 1.0 g is added to the reactor, and then 0.072 g of ammonium persulfate (20 mass ppm based on the water) is added thereto. To maintain the polymerization pressure at 0.78 MPaG, TFE is continuously supplied thereinto. When the charged amount of TFE reaches 1,000 g, stirring is stopped and the pressure is released until the pressure in the reactor decreases to the atmospheric pressure. After cooling, the paraffin wax is separated to obtain an aqueous dispersion containing the resulting polymer. The aqueous dispersion is stirred so that the resulting polymer coagulates, and the polymer is dried at 150°C. The composition in the resulting polymer is calculated by appropriate combination of NMR, FT-IR, elemental analysis, and X-ray fluorescence analysis depending on the types of the monomers.

The modifying monomer (3) having a monomer reactivity ratio of 0.1 to 8 is preferably at least one selected from the group consisting of modifying monomers represented by the formulas (3a) to (3d):

$CH_2=CH-Rf^1$ (3a)

wherein $Rf^1$ is a perfluoroalkyl group having 1 to 10 carbon atoms;

$CF_2=CF-O-Rf^2$ (3b)

wherein $Rf^2$ is a perfluoroalkyl group having 1 to 2 carbon atoms;

$CF_2=CF-O-(CF_2)_nCF=CF_2$ (3c)

wherein n is 1 or 2;

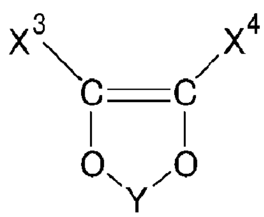

(3d)

wherein $X^3$ and $X^4$ are each F, Cl, or a methoxy group; and Y is represented by the formula Y1 or Y2; and

$-CF=CF-$ (Y1)

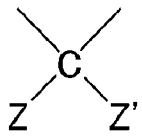

(Y2)

in the formula Y2, Z and Z' are each F or a fluorinated alkyl group having 1 to 3 carbon atoms.

The content of the modifying monomer (3) unit is preferably in the range of 0.00001 to 1.0% by mass based on the total polymerization units of the PTFE. The lower limit is more preferably 0.0001% by mass, more preferably 0.0005% by mass, even more preferably 0.001% by mass, and yet more preferably 0.005% by mass. The upper limit is, in the order of becoming preferred, 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

The modifying monomer is preferably at least one selected from the group consisting of hexafluoropropylene, chlorotrifluoroethylene, vinylidene fluoride, perfluoro(alkyl vinyl ether), (perfluoroalkyl)ethylene, ethylene, and modifying monomers having a functional group capable of reacting by radical polymerization and a hydrophilic group, in view of obtaining an aqueous dispersion having a small average primary particle size of primary particles, a small aspect ratio of primary particles, and excellent stability. The use of the modifying monomer allows for obtaining an aqueous dispersion of PTFE having a smaller average primary particle size, a smaller aspect ratio of the primary particles, and excellent dispersion stability. Also, an aqueous dispersion having a smaller amount of uncoagulated polymer can be obtained.

From the viewpoint of reactivity with TFE, the modifying monomer preferably contains at least one selected from the group consisting of hexafluoropropylene, perfluoro(alkyl vinyl ether), and (perfluoroalkyl)ethylene.

The modifying monomer more preferably contains at least one selected from the group consisting of hexafluoropropylene, perfluoro(methyl vinyl ether), perfluoro(propyl vinyl ether), (perfluorobutyl)ethylene, (perfluorohexyl)ethylene, and (perfluorooctyl)ethylene.

The total amount of the hexafluoropropylene unit, the perfluoro(alkyl vinyl ether) unit and the (perfluoroalkyl)ethylene unit is preferably in the range of 0.00001 to 1% by mass based on the total polymerization units of the PTFE. The lower limit of the total amount is more preferably 0.0001% by mass, more preferably 0.0005% by mass, even more preferably 0.001% by mass, and even more preferably 0.005% by mass. The upper limit is, in the order of becoming preferred, 0.80% by mass, 0.70% by mass, 0.50% by mass, 0.40% by mass, 0.30% by mass, 0.20% by mass, 0.15% by mass, 0.10% by mass, 0.08% by mass, 0.05% by mass, or 0.01% by mass.

It is also preferable that the modifying monomer contains a modifying monomer having a functional group capable of reaction by radical polymerization and a hydrophilic group (hereinafter, referred to as a "modifying monomer (A)").

The presence of the modifying monomer (A) makes it possible to obtain PTFE particles having a small primary particle size, and to thereby obtain an aqueous dispersion having high dispersion stability. Further, the amount of the uncoagulated polymer can be reduced. Further, the aspect ratio of the primary particles can be reduced.

The amount of the modifying monomer (A) used is preferably an amount exceeding 0.1 mass ppm of the aqueous medium, more preferably an amount exceeding 0.5 mass ppm, even more preferably an amount exceeding 1.0 mass ppm, yet more preferably 5 mass ppm or more, and particularly preferably 10 mass ppm or more. When the amount of the modifying monomer (A) used is too small, the average primary particle size of the obtained PTFE may not be reduced.

The amount of the modifying monomer (A) used may be in the above range, but the upper limit may be, for example, 5,000 mass ppm. Further, in the production method, the modifying monomer (A) may be added to the system during the reaction in order to improve the stability of the aqueous dispersion during or after the reaction.

Since the modifying monomer (A) is highly water-soluble, even if the unreacted modifying monomer (A) remains in the aqueous dispersion, it can be easily removed in the concentration step or the coagulation/washing step.

The modifying monomer (A) is incorporated into the resulting polymer in the process of polymerization, but the concentration of the modifying monomer (A) in the polymerization system itself is low and the amount incorporated into the polymer is small, so that there is no problem that the heat resistance of PTFE is lowered or PTFE is colored after sintering.

Examples of the hydrophilic group in the modifying monomer (A) include $-NH_2$, $-PO_3M$, $-OPO_3M$, $-SO_3M$, $-OSO_3M$, and - COOM, wherein M represents H, a metal atom, $NR^{7y}_4$, optionally substituted imidazolium, optionally substituted pyridinium, or optionally substituted phosphonium, wherein $R^{7y}$ is H or an organic group and may be the same or different, and any two may be bonded to each other to form a ring. Of these, the hydrophilic group is preferably $-SO_3M$ or -COOM. The alkyl group is preferable as the organic group in $R^{7y}$. $R^{7y}$ is preferably H or a $C_{1-10}$ organic group, more preferably H or a $C_{1-4}$ organic group, and even more preferably H or a $C_{1-4}$ alkyl group.

The metal atom may be a monovalent or divalent metal atom, such as an alkali metal (Group 1) or an alkaline earth metal (Group 2), and is preferably Na, K, or Li.

Examples of the "functional group capable of reacting by radical polymerization" in the modifying monomer (A) include a group having an ethylenically unsaturated bond such as a vinyl group and an allyl group. The group having an ethylenically unsaturated bond may be represented by the following formula:

$CX^eX^g=CX^fR-$

wherein $X^e$, $X^f$ and $X^g$ are each independently F, Cl, H, $CF_3$, $CF_2H$, $CFH_2$ or $CH_3$; and R is a linking group. The linking group R may be the linking group $R^a$, which will be described below. Preferable examples include groups having an unsaturated bond, such as $-CH=CH_2$, $-CF=CH_2$, $-CH=CF_2$, $-CF=CF_2$, $-CH_2-CH=CH_2$, $-CF_2-CF=CH_2$, $-CF_2-CF=CF_2$, $-(C=O)-CH=CH_2$, $-(C=O)-CF=CH_2$, $-(C=O)-CH=CF_2$, $-(C=O)-CF=CF_2$, $-(C=O)-C(CH_3)=CH_2$, $-(C=O)-C(CF_3)=CH_2$, $-(C=O)-C(CH_3)=CF_2$, $-(C=O)-C(CF_3)=CF_2$, $-O-CH_2-CH=CH_2$, $-O-CF_2-CF=CH_2$, $-O-CH_2-CH=CF_2$, and $-O-CF_2-CF=CF_2$.

Since the modifying monomer (A) has a functional group capable of reaction by radical polymerization, it is presumed that when used in the polymerization, the modifying monomer (A) reacts with a fluorine-containing monomer at the initial stage of the polymerization reaction and forms highly stable particles having a hydrophilic group derived from the modifying monomer (A). Accordingly, it is considered that the number of particles increases when the polymerization is performed in the presence of the modifying monomer (A).

The polymerization may be performed in the presence of one or more modifying monomers (A).

In the polymerization, the modifying monomer (A) may be a compound having an unsaturated bond.

The modifying monomer (A) is preferably a compound represented by the general formula (4):

$$CX^iX^k=CX^jR^a-(CZ^1Z^2)_k-Y^3 \qquad (4)$$

wherein $X^i$, $X^j$, and $X^k$ are each independently F, Cl, H, or $CF_3$; $Y^3$ is a hydrophilic group; $R^a$ is a linking group; $Z^1$ and $Z^2$ are each independently H, F, or $CF_3$; and k is 0 or 1.

Examples of the hydrophilic group include $-NH_2$, $-PO_3M$, $-OPO_3M$, $-SO_3M$, $-OSO_3M$, and -COOM, wherein M represents H, a metal atom, $NR^{7y}_4$, optionally substituted imidazolium, optionally substituted pyridinium, or optionally substituted phosphonium, wherein $R^{7y}$ is H or an organic group and may be the same or different, and any two may be bonded to each other to form a ring. Of these, the hydrophilic group is preferably $-SO_3M$ or -COOM. The alkyl group is preferable as the organic group in $R^{7y}$. $R^{7y}$ is preferably H or a $C_{1-10}$ organic group, more preferably H or a $C_{1-4}$ organic group, and even more preferably H or a $C_{1-4}$ alkyl group. Examples of the metal atom include monovalent and divalent metal atoms, alkali metals (Group 1) and alkaline earth metals (Group 2), and preferred is Na, K, or Li.

The use of the modifying monomer (A) allows for obtaining an aqueous dispersion having a smaller average primary particle size and superior stability. Also, the aspect ratio of the primary particles can be made smaller.

$R^a$ is a linking group. The "linking group" as used herein refers to a divalent linking group. The linking group may be a single bond and preferably contains at least one carbon atom, and the number of carbon atoms may be 2 or more, 4 or more, 8 or more, 10 or more, or 20 or more. The upper limit thereof is not limited, but may be 100 or less, and may be 50 or less, for example.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of esters, amides, sulfonamides, carbonyls, carbonates, urethanes, ureas and carbamates. The linking group may be free from carbon atoms and may be a catenary heteroatom such as oxygen, sulfur, or nitrogen.

$R^a$ is preferably a catenary heteroatom such as oxygen, sulfur, or nitrogen, or a divalent organic group.

When $R^a$ is a divalent organic group, the hydrogen atom bonded to the carbon atom may be replaced by a halogen other than fluorine, such as chlorine, and may or may not contain a double bond. Further, $R^a$ may be linear or branched, and may be cyclic or acyclic. $R^a$ may also contain a functional group (e.g., ester, ether, ketone, amine, halide, etc.).

$R^a$ may also be a fluorine-free divalent organic group or a partially fluorinated or perfluorinated divalent organic group.

$R^a$ may be, for example, a hydrocarbon group in which no fluorine atom is bonded to a carbon atom, a hydrocarbon group in which some hydrogen atoms bonded to carbon atoms are replaced with fluorine atoms, a hydrocarbon group in which all hydrogen atoms bonded to carbon atoms are replaced with fluorine atoms, -(C=O)-, -(C=O)-O-, or a hydrocarbon group containing an ether bond, and these may contain an oxygen atom, may contain a double bond, and may contain a functional group.

$R^a$ is preferably -(C=O)-, -(C=O)-O-, or a hydrocarbon group having 1 to 100 carbon atoms that optionally contains an ether bond and optionally contains a carbonyl group, wherein some or all of the hydrogen atoms bonded to the carbon atoms in the hydrocarbon group may be replaced by fluorine.

$R^a$ is preferably at least one selected from $-(CH_2)_a-$, $-(CF_2)_a-$, $-O-(CF_2)_a-$, $-(CF_2)_a-O-(CF_2)_b-$, $-O(CF_2)_a-O-(CF_2)_b-$, $-(CF_2)_a-[O-(CF_2)_b]_c-$, $-O(CF_2)_a-[O-(CF_2)_b]_c-$, $-[(CF_2)_a-O]_b-[(CF_2)_c-O]_d-$, $-O[(CF_2)_a-O]_b-[(CF_2)_c-O]_d-$, $-O-[CF_2CF(CF_3)O]_a-(CF_2)_b-$, $-(C=O)-$, $-(C=O)-O-$, $-(C=O)-(CH_2)_a-$, $-(C=O)-(CF_2)_a-$, $-(C=O)-O-(CH_2)_a-$, $-(C=O)-O-(CF_2)_a-$, $-(C=O)-[(CH_2)_a-O]_b-$, $-(C=O)-[(CF_2)_a-O]_b-$, $-(C=O)-O[(CH_2)_a-O]_b-$ $-(C=O)-O[(CF_2)_a-O]_b-$, -(C=O)-O

$[(CH_2)_a-O]_b-(CH_2)_c-$, $-(C=O)-O[(CF_2)_a-O]_b-(CF_2)_c-$, $-(C=O)-(CH_2)_a-O-(CH_2)_b-$, $-(C=O)-(CF_2)_a-O-(CF_2)_b-$, $-(C=O)-O-(CH_2)_a-O-(CH_2)_b-$, $-(C=O)-O-(CF_2)_a-O-(CF_2)_b-$, $-(C=O)-O-C_6H_4-$, and combinations thereof.

In the formulas, a, b, c, and d are independently at least 1 or more. a, b, c and d may independently be 2 or more, 3 or more, 4 or more, 10 or more, or 20 or more. The upper limit of a, b, c, and d is, for example, 100.

Suitable specific examples of $R^a$ include $-CF_2-O-$, $-CF_2-O-CF_2-$, $-CF_2-O-CH_2-$, $-CF_2-O-CH_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)-$, $-CF_2-O-CF(CF_3)CF_2-$, $-CF_2-O-CF(CF_3)CF_2-O-$, $-CF_2-O-CF(CF_3)CH_2-$, $-(C=O)-$, $-(C=O)-O-$, $-(C=O)-(CH_2)-$, $-(C=O)-(CF_2)-$, $-(C=O)-O-(CH_2)-$, $(C=O)-O-(CF_2)-$, $-(C=O)-[(CH_2)_2-O]_n-$, $-(C=O)-[(CF_2)_2-O]_n-$, $-(C=O)-O[(CH_2)_2-O]_n-$, $-(C=O)-O[(CF_2)_2-O]_n-$, $-(C=O)-O[(CH_2)_2-O]_n-(CH_2)-$, $-(C=O)-O[(CF_2)_2-O]_n-(CF_2)-$, $-(C=O)-(CH_2)_2-O-(CH_2)-$, $-(C=O)-(CF_2)_2-O-(CF_2)-$, $-(C=O)-O-(CH_2)_2-O-(CH_2)-$, $-(C=O)-O-(CF_2)_2-O-(CF_2)-$, and $-(C=O)-O-C_6H_4-$. In particular, preferred for $R^a$ among these is $-CF_2-O-$, $-CF_2-O-CF_2-$, $-CF_2-O-CF_2CF_2-$, $-CF_2-O-CF(CF_3)-$, $-CF_2-O-CF(CF_3)CF_2-$, $-CF_2-O-CF(CF_3)CF_2-O-$, $-(C=O)-$, $-(C=O)-O-$, $-(C=O)-(CH_2)-$, $-(C=O)-O-(CH_2)-$, $-(C=O)-O[(CH_2)_2-O]_n-$, $-(C=O)-O[(CH_2)_2-O]_n-(CH_2)-$, $-(C=O)-(CH_2)_2-O-(CH_2)-$, or $-(C=O)-O-C_6H_4-$.

In the formula, n is an integer of 1 to 10.

$-R^a-(CZ^1Z^2)_k-$ in the general formula (4) is preferably $-CF_2-O-CF_2-$, $-CF_2-O-CF(CF_3)-$, $-CF_2-O-C(CF_3)_2-$, $-CF_2-O-CF_2-CF_2-$, $-CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$, $-CF_2-O-CF_2CF_2-C(CF_3)_2-$, $-CF_2-O-CF(CF_3)-CF_2-$, $-CF_2-O-CF(CF_3)-CF(CF_3)-$, $-CF_2-O-CF(CF_3)-C(CF_3)_2-$, $-CF_2-O-CF(CF_3)CF_2-CF_2-$, $-CF_2-O-CF(CF_3)CF_2-CF(CF_3)-$, $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, $-CF_2-O-CF(CF_3)CF_2-O-C(CF_3)_2-$, $-(C=O)-$, $-(C=O)-O-$, $-(C=O)-(CH_2)-$, $-(C=O)-(CF_2)-$, $-(C=O)-O-(CH_2)-$, $-(C=O)-O-(CF_2)-$, $-(C=O)-[(CH_2)_2-O]_n-(CH_2)-$, $-(C=O)-[(CF_2)_2-O]_n-(CF_2)-$, $-(C=O)-[(CH_2)_2-O]_n-(CH_2)-(CH_2)-$, $-(C=O)-[(CF_2)_2-O]_n-(CF_2)-(CF_2)-$, $-(C=O)-O[(CH_2)_2-O]_n-(CF_2)-$, $-(C=O)-O[(CH_2)_2-O]_n-(CH_2)-(CH_2)-$, $-(C=O)-O[(CF_2)_2-O]_n-(CF_2)-$, $-(C=O)-O[(CF_2)_2-O]_n-(CF_2)-(CF_2)-$, $-(C=O)-(CH_2)_2-O-(CH_2)-(CH_2)-$, $-(C=O)-(CF_2)_2-O-(CF_2)-(CF_2)-$, $-(C=O)-O-(CH_2)_2-O-(CH_2)-(CH_2)-$, $-(C=O)-O-(CF_2)_2-O-(CF_2)-(CF_2)-$, $-(C=O)-O-(CH_2)_2-O-(CH_2)-C(CF_3)_2-$, $-(C=O)-O-(CF_2)_2-O-(CF_2)-C(CF_3)_2-$, or $-(C=O)-O-C_6H_4-C(CF_3)_2-$, and more preferably $-CF_2-O-CF(CF_3)-$, $-CF_2-O-CF_2-CF(CF_3)-$, $-CF_2-O-CF_2CF_2-CF(CF_3)-$, $-CF_2-O-CF(CF_3)-CF(CF_3)-$, $-CF_2-O-CF(CF_3)CF_2-CF(CF_3)-$, $-CF_2-O-CF(CF_3)CF_2-O-CF(CF_3)-$, $-(C=O)-$, $-(C=O)-O-(CH_2)-$, $-(C=O)-O-(CH_2)-(CH_2)-$, $-(C=O)-O[(CH_2)_2-O]_n-(CH_2)-(CH_2)-$, $-(C=O)-O-(CH_2)_2-O-(CH_2)-C(CF_3)_2-$, or $-(C=O)-O-C_6H_4-C(CF_3)_2-$.

In the formula, n is an integer of 1 to 10.

Specific examples of the compound represented by the general formula (4) include:

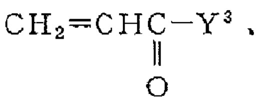 、 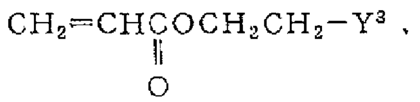 、 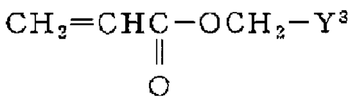 、

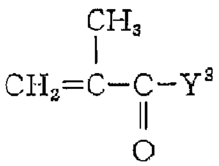 、 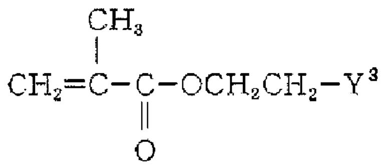 、 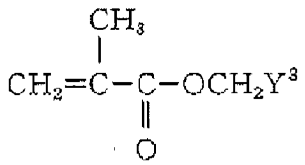 、

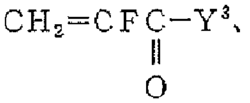 、 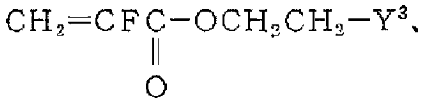 、 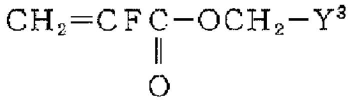 、

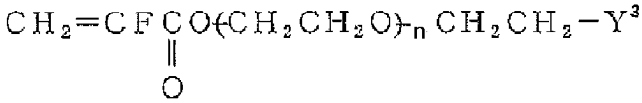 、

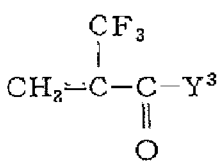 、 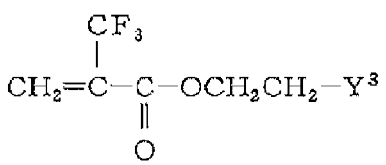 、

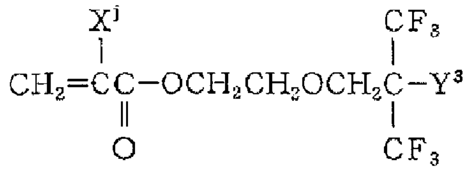 (i)、

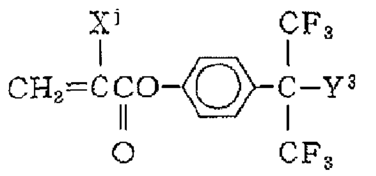 (i i)

wherein $X^j$ and $Y^3$ are as described above; and n is an integer of 1 to 10.

$R^a$ is preferably a divalent group represented by the general formula (r1):

$$-(C=O)_h-(O)_i-CF_2-O-(CX^6{}_2)_e-\{O-CF(CF_3)\}_f-(O)_g- \qquad (r1)$$

wherein $X^6$ is each independently H, F, or $CF_3$; e is an integer of 0 to 3; f is an integer of 0 to 3; g is 0 or 1; h is 0 or 1; and i is 0 or 1,
and is also preferably a divalent group represented by the general formula (r2):

$$-(C=O)_h-(O)_i-CF_2-O-(CX^7{}_2)_e-(O)_g- \qquad (r2)$$

wherein $X^7$ is each independently H, F, or $CF_3$; e is an integer of 0 to 3; g is 0 or 1; h is 0 or 1; and i is 0 or 1.

$-R^a-(CZ^1Z^2)_k-$ in the general formula (4) is also preferably a divalent group represented by the following formula (t1):

$$-(C=O)_h-(O)_i-CF_2-O-(CX^6{}_2)_e-\{O-CF(CF_3)\}_f-(O)_g-CZ^1Z^2- \qquad (t1)$$

wherein $X^6$ is each independently H, F, or $CF_3$; e is an integer of 0 to 3; f is an integer of 0 to 3; g is 0 or 1; h is 0 or 1; i is 0 or 1; and $Z^1$ and $Z^2$ are each independently F or $CF_3$,
and is more preferably a group in which one of $Z^1$ and $Z^2$ is F and the other is $CF_3$ in the formula (t1).

Also, in the general formula (4), $-R^a-(CZ^1Z^2)_k-$ is preferably a divalent group represented by the following formula (t2):

$$-(C=O)_h-(O)_i-CF_2-O-(CX^7{}_2)_e-(O)_q-CZ^1Z^2- \qquad (t2)$$

wherein $X^7$ is each independently H, F, or $CF_3$; e is an integer of 0 to 3; g is 0 or 1; h is 0 or 1; i is 0 or 1; and $Z^1$ and $Z^2$ are each independently F or $CF_3$,
and is more preferably a group in which one of $Z^1$ and $Z^2$ is F and the other is $CF_3$ in the formula (t2).

The compound represented by the general formula (4) also preferably has a C-F bond and does not have a C-H bond, in the portion excluding the hydrophilic group ($Y^3$). In other words, in the general formula (4), $X^i$, $X^j$, and $X^k$ are all F, and $R^a$ is preferably a perfluoroalkylene group having 1 or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The compound represented by the general formula (4) may be partially fluorinated. In other words, the compound represented by the general formula (4) also preferably has at least one hydrogen atom bonded to a carbon atom and at least one fluorine atom bonded to a carbon atom, in the portion excluding the hydrophilic group ($Y^3$).

The compound represented by the general formula (4) is also preferably a compound represented by the following formula (4a):

$$CF_2=CF-O-Rf^0-Y^3 \qquad (4a)$$

wherein $Y^3$ is a hydrophilic group; and $Rf^0$ is a perfluorinated divalent linking group which is perfluorinated and may be a linear or branched, cyclic or acyclic, saturated or unsaturated, substituted or unsubstituted, and optionally contains one or more heteroatoms selected from the group consisting of sulfur, oxygen, and nitrogen.

The compound represented by the general formula (4) is also preferably a compound represented by the

following formula (4b):

$$CH_2=CH-O-Rf^0-Y^3 \qquad (4b)$$

wherein $Y^3$ is a hydrophilic group; and $Rf^0$ is a perfluorinated divalent linking group as defined in the formula (4a).

In a preferable embodiment, $Y^3$ in the general formula (4) is $-OSO_3M$. Examples of the compound represented by the general formula (4) when $Y^3$ is $-OSO_3M$ include $CF_2=CF(OCF_2CF_2CH_2OSO_3M)$, $CF_2=CF(O(CF_2)_4CH_2OSO_3M)$, $CF_2=CF(OCF_2CF(CF_3)CH_2OSO_3M)$, $CF_2=CF(OCF_2CF(CF_3)OCF_2CF_2CH_2OSO_3M)$, $CH_2=CH(O(CF_2)_4CH_2OSO_3M)$, $CF_2=CF(OCF_2CF_2SO_2N(CH_3)CH_2CH_2OSO_3M)$, $CH_2=CH(OCF_2CF_2CH_2OSO_3M)$, and $CF_2=CF(OCF_2CF_2CF_2CF_2SO_2N(CH_3)CH_2CH_2OSO_3M)$. In the formulas, M is as described above.

In a preferred embodiment, in the general formula (4), $Y^3$ is $-SO_3M$. Examples of the compound represented by the general formula (4) when $Y^3$ is $-SO_3M$ include $CF_2=CF(OCF_2CF_2SO_3M)$, $CF_2=CF(O(CF_2)_4SO_3M)$, $CF_2=CF(OCF_2CF(CF_3)SO_3M)$, $CF_2=CF(OCF_2CF(CF_3)OCF_2CF_2SO_3M)$, $CH_2=CH(OCF_2CF_2SO_3M)$, $CF_2=CF(OCF_2CF(CF_3)OCF_2CF_2CF_2CF_2SO_3M)$, $CH_2=CH(O(CF_2)_4SO_3M)$, $CH_2=CH(O(CF_2)_3SO_3M)$. In the formulas, M is as described above.

In a preferable embodiment, $Y^3$ in the general formula (4) is also -COOM. Examples of the compound represented by the general formula (4) when $Y^3$ is -COOM include $CF_2=CF(OCF_2CF_2COOM)$, $CF_2=CF(OCF_2CF_2CF_2COOM)$, $CF_2=CF(O(CF_2)_5COOM)$, $CF_2=CF(OCF_2CF(CF_3)COOM)$, $CF_2=CF(OCF_2CF(CF_3)O(CF_2)_nCOOM)$ (n is greater than 1), $CH_2=CH(OCF_2CF_2COOM)$, $CH_2=CH(O(CF_2)_4COOM)$, $CH_2=CH(O(CF_2)_3COOM)$, $CF_2=CF(OCF_2CF_2SO_2NR'CH_2COOM)$, $CF_2=CF(O(CF_2)_4SO_2NR'CH_2COOM)$, $CF_2=CF(OCF_2CF(CF_3)SO_2NR'CH_2COOM)$, $CF_2=CF(OCF_2CF(CF_3)OCF_2CF_2SO_2NR'CH_2COOM)$, $CH_2=CH(OCF_2CF_2SO_2NR'CH_2COOM)$, $CF_2=CF(OCF_2CF(CF_3)OCF_2CF_2CF_2CF_2SO_2NR'CH_2COOM)$, $CH_2=CH(O(CF_2)_4SO_2NR'CH_2COOM)$, and $CH_2=CH(O(CF_2)_3SO_2NR'CH_2COOM)$. In the formulas, R' is H or a $C_{1-4}$ alkyl group, and M is as described above.

In a preferable embodiment, $Y^3$ in the general formula (4) is also $-OPO_3M$ or $-OP(O)(OM)_2$. Examples of the compound represented by the general formula (4) when $Y^3$ is $-OPO_3M$ or $-OP(O)(OM)_2$ include $CF_2=CF(OCF_2CF_2CH_2OP(O)(OM)_2)$, $CF_2=CF(O(CF_2)_4CH_2OP(O)(OM)_2)$, $CF_2=CF(OCF_2CF(CF_3)CH_2OP(O)(OM)_2)$, $CF_2=CF(OCF_2CF(CF_3)OCF_2CF_2CH_2OP(O)(OM)_2)$, $CF_2=CF(OCF_2CF_2SO_2N(CH_3)CH_2CH_2OP(O)(OM)_2)$, $CF_2=CF(OCF_2CF_2CF_2CF_2SO_2N(CH_3)CH_2CH_2OP(O)(OM)_2)$, $CH_2=CH(OCF_2CF_2CH_2OP(O)(OM)_2$, $CH_2=CH((OCF_2)_4CH_2OP(O)(OM)_2)$, and $CH_2=CH(O(CF_2)_3CH_2OP(O)(OM)_2)$. In the formulas, M is as described above.

In a preferable embodiment, $Y^3$ in the general formula (4) is also $-PO_3M$ or $-P(O)(OM)_2$. Examples of the compound represented by the general formula (4) when $Y^3$ is $-PO_3M$ or $-P(O)(OM)_2$ include $CF_2=CF(OCF_2CF_2P(O)(OM)_2)$, $CF_2=CF(O(CF_2)_4P(O)(OM)_2)$, $CF_2=CF(OCF_2CF(CF_3)P(O)(OM)_2)$, $CF_2=CF(OCF_2CF(CF_3)OCF_2CF_2P(O)(OM)_2)$, $CH_2=CH(OCF_2CF_2P(O)(OM)_2)$, $CH_2=CH(O(CF_2)_4P(O)(OM)_2)$, and $CH_2=CH(O(CF_2)_3P(O)(OM)_2)$, wherein M is as described above.

The compound represented by the general formula (4) is preferably at least one selected from the group consisting of:

a compound represented by the general formula (5):

$$CX_2=CY(-CZ_2-O-Rf-Y^3) \qquad (5)$$

wherein X is the same or different and is -H or -F; Y is -H, - F, an alkyl group, or a fluorine-containing alkyl group; Z is the same or different and -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above;

a compound represented by the general formula (6):

$$CX_2=CY(-O-Rf-Y^3) \qquad (6)$$

wherein X is the same or different and is -H or -F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above; and

a compound represented by the general formula (7):

$$CX_2=CY(-Rf-Y^3) \qquad (7)$$

wherein X is the same or different and is -H or -F; Y is -H, - F, an alkyl group, or a fluorine-containing alkyl group; Rf is a fluorine-containing alkylene group having 1 to 40 carbon atoms or a fluorine-containing alkylene group having 2 to 100

carbon atoms and having an ether bond; and $Y^3$ is as described above.

The fluorine-containing alkylene group having 2 to 100 carbon atoms and having an ether bond is an alkylene group which does not include a structure wherein an oxygen atom is an end and which contains an ether bond between carbon atoms.

In the general formula (5), each X is -H or -F. Both X may be -F, or at least one may be -H. For example, one may be -F and the other may be -H, or both may be -H.

In the general formula (5), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and even more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and even more preferably 3 or less carbon atoms.

Y is preferably -H, -F, or $-CF_3$, and more preferably -F.

In the general formula (5), Z is the same or different and is -H, -F, an alkyl group, or a fluoroalkyl group.

The alkyl group is an alkyl group free from fluorine atoms and may have one or more carbon atoms. The alkyl group preferably has 6 or less carbon atoms, more preferably 4 or less carbon atoms, and even more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and even more preferably 3 or less carbon atoms.

Z is preferably -H, -F, or $-CF_3$, and more preferably -F.

In the general formula (5), at least one of X, Y, and Z preferably contains a fluorine atom. For example, X may be -H, and Y and Z may be -F.

In the general formula (5), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group also preferably has 30 or less carbon atoms, more preferably 20 or less carbon atoms, and even more preferably 10 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

The fluorine-containing alkylene group having an ether bond preferably has 3 or more carbon atoms. The number of carbon atoms of the fluorine-containing alkylene group having an ether bond is preferably 60 or less, more preferably 30 or less, and even more preferably 12 or less.

The fluorine-containing alkylene group having an ether bond is also preferably a divalent group represented by the following formula:

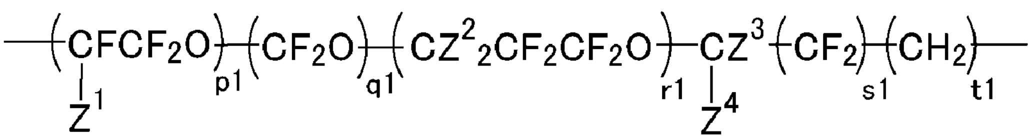

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF(CF_3)CF_2-O-CF(CF_3)-$, $-(CF(CF_3)CF_2-O)_n-CF(CF_3)-$ (wherein n is an integer of 1 to 10), $-CF(CF_3)CF_2-O-CF(CF_3)CH_2-$, $-(CF(CF_3)CF_2-o)_n-CF(CF_3)CH_2-$ (wherein n is an integer of 1 to 10), $-CH_2CF_2CF_2O-CH_2CF_2CH_2-$, $-CF_2CF_2CF_2O-CF_2CF_2-$, $-CF_2CF_2CF_2O-CF_2CF_2CH_2-$, $-CF_2CF_2O-CF_2-$, and $-CF_2CF_2O-CF_2CH_2-$. The fluorine-containing alkylene group having an ether bond is preferably a perfluoroalkylene group.

In the general formula (5), $Y^3$ is -COOM, $-SO_3M$, or $-OSO_3M$, wherein M is H, a metal atom, $NR^{7y}_4$, optionally substituted imidazolium, optionally substituted pyridinium, or optionally substituted phosphonium, wherein $R^{7y}$ is H or an organic group, and may be the same or different, and any two thereof may be bonded to each other to form a ring.

The alkyl group is preferable as the organic group in $R^{7y}$.

$R^{7y}$ is preferably H or a $C_{1-10}$ organic group, more preferably H or a $C_{1-4}$ organic group, and even more preferably H or a $C_{1-4}$ alkyl group.

Examples of the metal atom include alkali metals (Group 1) and alkaline earth metals (Group 2), and Na, K, or Li is preferable.

M is preferably -H, a metal atom, or $NR^7_4$, more preferably -H, an alkali metal (Group 1), an alkaline earth metal (Group 2), or $NR^7_4$, even more preferably -H, -Na, -K, -Li, or $NH_4$, yet more preferably -H, -Na, -K, or $NH_4$, particularly preferably - H,-Na, or $NH_4$, and most preferably -H or $-NH_4$.

$Y^3$ is preferably -COOM or $-SO_3M$, and more preferably - COOM.

The compound represented by the general formula (5) is preferably a compound (5a) represented by the general formula (5a):

$CH_2=CF(-CF_2-O-Rf-Y^3)$ (5a)

wherein Rf and $Y^3$ are as described above.

Specific examples of the compound represented by the general formula (5a) include a compound represented by the following formula:

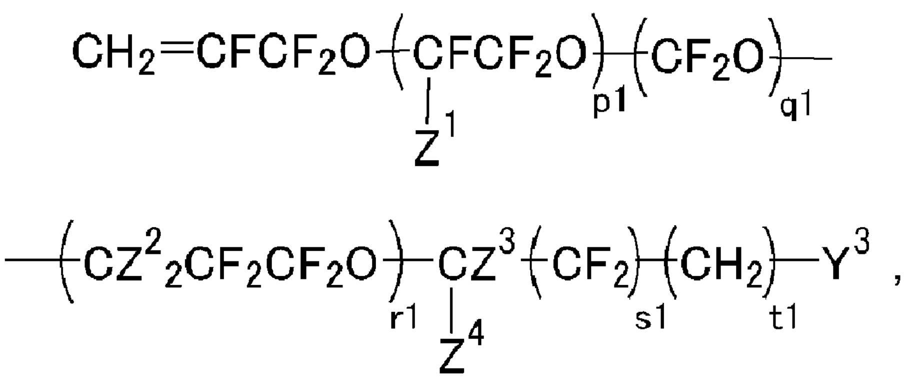

wherein $Z^1$ is F or $CF_3$; $Z^2$ and $Z^3$ are each H or F; $Z^4$ is H, F, or $CF_3$; p1+q1+r1 is an integer of 0 to 10; s1 is 0 or 1; t1 is an integer of 0 to 5; and $Y^3$ is as described above, with the proviso that when $Z^3$ and $Z^4$ are both H, p1+q1+r1+s1 is not 0. More specifically, preferable examples include

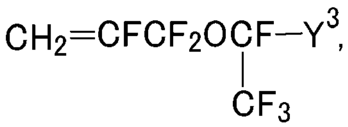 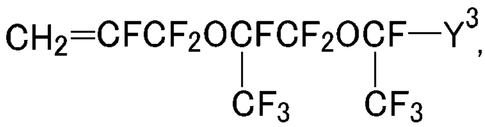

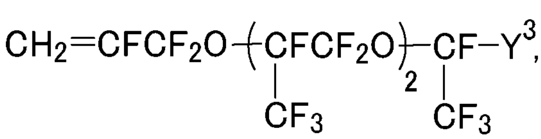 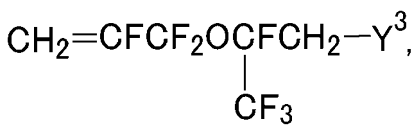

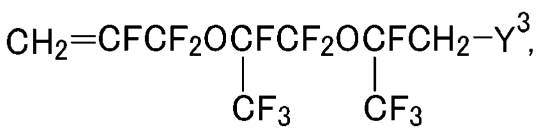 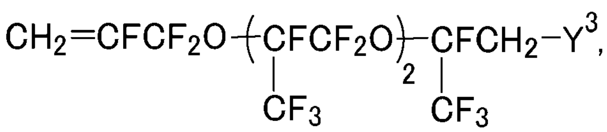

$CH_2=CFCF_2OCH_2CF_2-Y^3$, $CH_2=CFCF_2O(CH_2CF_2CF_2O)CH_2CF_2-Y^3$,

$CH_2=CFCF_2OCH_2CF_2CH_2-Y^3$,

$CH_2=CFCF_2O(CH_2CF_2CF_2O)CH_2CF_2CH_2-Y^3$,

$CH_2=CFCF_2OCF_2CF_2-Y^3$, $CH_2=CFCF_2O(CF_2CF_2CF_2O)CF_2CF_2-Y^3$,

$CH_2=CFCF_2OCF_2CF_2CH_2-Y^3$,

$CH_2=CFCF_2O(CF_2CF_2CF_2O)CF_2CF_2CH_2-Y^3$,

$CH_2=CFCF_2OCF_2-Y^3$, $CH_2=CFCF_2O(CF_2CF_2O)CF_2-Y^3$,

$CH_2=CFCF_2OCF_2CH_2-Y^3$,

$CH_2=CFCF_2O(CF_2CF_2O)CF_2CH_2-Y^3$,

Of these,

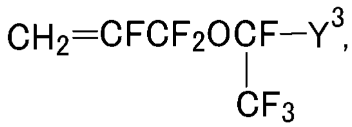
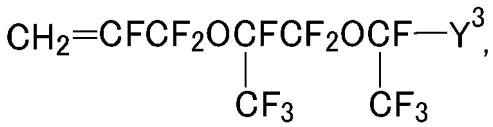

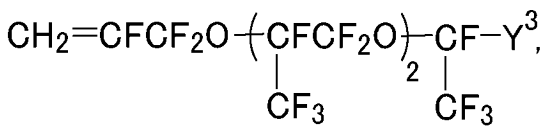
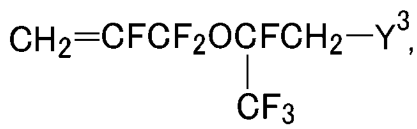

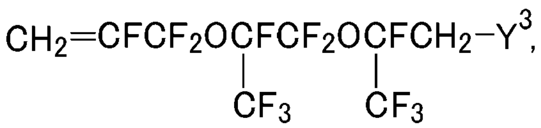
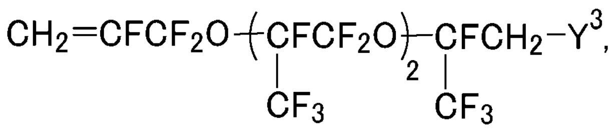

are preferable.

In the compound represented by the general formula (5a), $Y^3$ in the formula (5a) is preferably -COOM. Specifically, the compound represented by the general formula (5a) is preferably at least one selected from the group consisting of $CH_2=CFCF_2OCF(CF_3)COOM$ and $CH_2=CFCF_2OCF(CF_3)CF_2OCF(CF_3)COOM$ (wherein M is as defined above), and more preferably $CH_2=CFCF_2OCF(CF_3)COOM$.

The compound represented by the general formula (5) is preferably a compound (5b) represented by the general formula (5b):

$$CX^2_2=CFCF_2-O-(CF\ (CF_3)CF_2O)_{n5}-CF(CF_3)-Y^3 \qquad (5b)$$

wherein each $X^2$ is the same, and each represent F or H; n5 represents 0 or an integer of 1 to 10, and $Y^3$ is as defined above.

In the formula (5b), n5 is preferably 0 or an integer of 1 to 5, more preferably 0, 1, or 2, and even more preferably 0 or 1 from the viewpoint of stability of the resulting aqueous dispersion. $Y^3$ is preferably -COOM from the viewpoint of obtaining appropriate water-solubility and stability of the aqueous dispersion, and M is preferably H or $NH_4$ from the viewpoint of being less likely to remain as impurities and improving the heat resistance of the resulting molded body.

Examples of the compound represented by the formula (5b) include $CH_2=CFCF_2OCF(CF_3)COOM$ and $CH_2=CFCF_2OCF(CF_3)CF_2OCF(CF_3)COOM$, wherein M is as defined above.

Examples of the compound represented by the general formula (5) further include a compound represented by the general formula (5c):

$$CF_2=CFCF_2-O-Rf-Y^3 \qquad (5c)$$

wherein Rf and $Y^3$ are as described above.

More specific examples thereof include:

$CF_2=CFCF_2OCF_2CF_2CF_2-Y^3$,

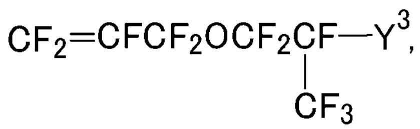

$CF_2=CFCF_2OCF_2CF_2CF_2CH_2-Y^3$,

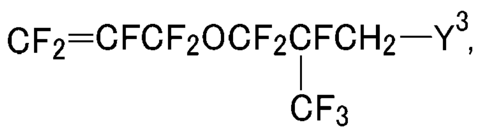

and the like.

In the general formula (6), each X is -H or -F. Both X may be -F, or at least one may be -H. For example, one may be -F and the other may be -H, or both may be -H.

In the general formula (6), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and even more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and even more preferably 3 or less carbon atoms.

Y is preferably -H, -F, or $-CF_3$, and more preferably -F.

In the general formula (6), at least one of X and Y preferably contains a fluorine atom. For example, X may be -H, and Y and Z may be -F.

In the general formula (6), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group preferably has 30 or less carbon atoms, more preferably 20 or less carbon atoms, and even more preferably 10 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, - $CF(CF_3)-$, $-CF(CF_3)CF_2-$, and $-CF(CF_3)CH_2-$. The fluorine-containing alkylene group is preferably a perfluoroalkylene group.

In the general formula (6), $Y^3$ is -COOM, $-SO_3M$, or - $OSO_3M$, wherein M is H, a metal atom, $NR^{7y}{}_4$, optionally substituted imidazolium, optionally substituted pyridinium, or optionally substituted phosphonium, wherein $R^{7y}$ is H or an organic group, and may be the same or different, and any two may be bonded to each other to form a ring.

The alkyl group is preferable as the organic group of $R^{7y}$. $R^{7y}$ is preferably H or a $C_{1-10}$ organic group, more preferably H or a $C_{1-4}$ organic group, and even more preferably H or a $C_{1-4}$ alkyl group.

Examples of the metal atom include alkali metals (Group 1) and alkaline earth metals (Group 2), and Na, K, or Li is preferable.

M is preferably -H, a metal atom, or $NR^7{}_4$, more preferably -H, an alkali metal (Group 1), an alkaline earth metal (Group 2), or $NR^7{}_4$, even more preferably -H, -Na, -K, -Li, or $NH_4$, yet more preferably -H, -Na, -K, or $NH_4$, particularly preferably - H,-Na, or $NH_4$, and most preferably -H or $-NH_4$.

$Y^3$ is preferably -COOM or $-SO_3M$, and more preferably - COOM.

The compound represented by the general formula (6) is preferably at least one selected from the group consisting of compounds represented by the general formulas (6a), (6b), (6c), (6d), and (6e):

$CF_2=CF-O-(CF_2)_{n1}-Y^3$ (6a)

wherein n1 represents an integer of 1 to 10, and $Y^3$ is as defined above;

$CF_2=CF-O-(CF_2C(CF_3)F)_{n2}-Y^3$ (6b)

wherein n2 represents an integer of 1 to 5, and $Y^3$ is as defined above;

$CF_2=CF-O-(CFX^1)_{n3}-Y^3$ (6c)

wherein $X^1$ represents F or $CF_3$; n3 represents an integer of 1 to 10; and $Y^3$ is as defined above;

$$CF_2=CF\text{-}O\text{-}(CF_2CFX^1O)_{n4}\text{-}(CF_2)_{n6}\text{-}Y^3 \quad (6d)$$

wherein n4 represents an integer of 1 to 10; n6 represents an integer of 1 to 3; and $Y^3$ and $X^1$ are as defined above; and

$$CF_2=CF\text{-}O\text{-}(CF_2CF_2CFX^1O)_{n5}\text{-}CF_2CF_2CF_2\text{-}Y^3 \quad (6e)$$

wherein n5 represents an integer of 0 to 10, and $Y^3$ and $X^1$ are the same as defined above.

In the formula (6a), n1 is preferably an integer of 5 or less, and more preferably an integer of 2 or less. $Y^3$ is preferably -COOM or -$SO_3M$ from the viewpoint of obtaining appropriate water-solubility and stability of the aqueous dispersion, and M is preferably H or $NH_4$ from the viewpoint of being less likely to remain as impurities and improving the heat resistance of the resulting molded body.

Examples of the compound represented by the formula (6a) include $CF_2=CF\text{-}O\text{-}CF_2COOM$, $CF_2=CF(OCF_2CF_2COOM)$, $CF_2=CF(OCF_2CF_2CF_2COOM)$, $CF_2=CF\text{-}O\text{-}CF_2SO_3M$, $CF_2=CF(OCF_2CF_2SO_3M)$, and $CF_2=CF(OCF_2CF_2CF_2SO_3M)$, wherein M is as defined above.

In the formula (6b), n2 is preferably an integer of 3 or less from the viewpoint of stability of the resulting aqueous dispersion, $Y^3$ is preferably -COOM or -$SO_3M$ from the viewpoint of obtaining appropriate water-solubility and stability of the aqueous dispersion, and M is preferably H or $NH_4$ from the viewpoint of being less likely to remain as impurities and improving the heat resistance of the resulting molded body.

In the formula (6c), n3 is preferably an integer of 5 or less from the viewpoint of water-solubility, $Y^3$ is preferably -COOM or -$SO_3M$ from the viewpoint of obtaining appropriate water-solubility and stability of the aqueous dispersion, and M is preferably H or $NH_4$ from the viewpoint of improving dispersion stability.

In the formula (6d), $X^1$ is preferably -$CF_3$ from the viewpoint of stability of the aqueous dispersion, n4 is preferably an integer of 5 or less from the viewpoint of water-solubility, $Y^3$ is preferably -COOM or -$SO_3M$ from the viewpoint of obtaining appropriate water-solubility and stability of the aqueous dispersion, and M is preferably H or $NH_4$.

Examples of the compound represented by the formula (6d) include $CF_2=CFOCF_2CF(CF_3)OCF_2CF_2COOM$, $CF_2=CFOCF_2CF(CF_3)OCF_2COOM$, $CF_2=CFOCF_2CF(CF_3)OCF_2CF_2CF_2COOM$, $CF_2=CFOCF_2CF(CF_3)OCF_2CF_2SO_3M$, $CF_2=CFOCF_2CF(CF_3)OCF_2SO_3M$, and $CF_2=CFOCF_2CF(CF_3)OCF_2CF_2CF_2SO_3M$, wherein M represents H, $NH_4$, or an alkali metal.

In the general formula (6e), n5 is preferably an integer of 5 or less in terms of water solubility, $Y^3$ is preferably -COOM or -$SO_3M$ in terms of obtaining appropriate water solubility and stability of the aqueous dispersion, and M is preferably H or $NH_4$.

Examples of the compound represented by general formula (6e) include $CF_2=CFOCF_2CF_2CF_2COOM$, and $CF_2=CFOCF_2CF_2CF_2SO_3M$, wherein M represents H, $NH_4$, or an alkali metal.

In the general formula (7), Rf is preferably a fluorine-containing alkylene group having 1 to 40 carbon atoms. In the general formula (7), at least one of X and Y preferably contains a fluorine atom.

The compound represented by the general formula (7) is preferably at least one selected from the group consisting of:

a compound represented by the general formula (7a):

$$CF_2=CF\text{-}(CF_2)_{n1}\text{-}Y^3 \quad (7a)$$

wherein n1 represents an integer of 1 to 10; and $Y^3$ is as defined above; and
a compound represented by the general formula (7b):

$$CF_2=CF\text{-}(CF_2C(CF_3)F)_{n2}\text{-}Y^3 \quad (7b)$$

wherein n2 represents an integer of 1 to 5; and $Y^3$ is as defined above.
$Y^3$ is preferably -$SO_3M$ or -COOM, and M is preferably H, a metal atom, $NR^{7y}_4$, optionally substituted imidazolium, optionally substituted pyridinium, or optionally substituted phosphonium. $R^{7y}$ represents H or an organic group.

In the general formula (7a), n1 is preferably an integer of 5 or less, and more preferably an integer of 2 or less. $Y^3$ is preferably -COOM or -$SO_3M$ from the viewpoint of obtaining appropriate water-solubility and stability of the aqueous dispersion, and M is preferably H or $NH_4$ from the viewpoint of being less likely to remain as impurities and improving the heat resistance of the resulting molded body.

Examples of the compound represented by the formula (7a) include $CF_2=CFCF_2COOM$, and $CF_2=CFCF_2SO_3M$, wherein M is as defined above.

In the formula (7b), n2 is preferably an integer of 3 or less from the viewpoint of stability of the resulting aqueous dispersion, $Y^3$ is preferably -COOM or $-SO_3M$ from the viewpoint of obtaining appropriate water-solubility and stability of the aqueous dispersion, and M is preferably H or $NH_4$ from the viewpoint of being less likely to remain as impurities and improving the heat resistance of the resulting molded body.

The modifying monomer preferably contains the modifying monomer (A), and preferably contains at least one selected from the group consisting of compounds represented by the general formulas (5a), (5c), (6a), (6b), (6c), and (6d), and more preferably contains a compound represented by the general formula (5a) or (5c).

When the modifying monomer (A) is used as the modifying monomer, the content of the modifying monomer (A) unit is preferably in the range of 0.00001 to 1.0% by mass based on all polymerized units in the TFE polymer (PTFE). The lower limit is more preferably 0.0001% by mass, more preferably 0.0005% by mass, even more preferably 0.001% by mass, and yet more preferably 0.005% by mass. The upper limit is, in the order of becoming preferred, 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

In production of the TFE polymer, the polymer (I) can be used within the use range described for the production method of the present disclosure. The concentration of the polymer (I) is not limited as long as it is within the above range. Too large an amount of the polymer (I) added causes generation of needle-shaped particles having a large aspect ratio and gelling of the aqueous dispersion, impairing the stability. The lower limit of the amount of the polymer (I) used is preferably 0.0001% by mass, more preferably 0.001% by mass, even more preferably 0.01% by mass, and particularly preferably 0.02% by mass, based on the aqueous medium. The upper limit of the amount of the polymer (I) used is preferably 10% by mass and more preferably 5% by mass, based on the aqueous medium.

The polymer (I) may be added to the reaction vessel at once before initiation of the polymerization, may be added at once after initiation of the polymerization, may be added in multiple portions during the polymerization, or may be added continuously during the polymerization.

In production of the TFE polymer, the polymerization initiator used may be an organic peroxide such as a persulfate (e.g., ammonium persulfate), disuccinic acid peroxide, or diglutaric acid peroxide alone or in the form of a mixture thereof. An organic peroxide may be used together with a reducing agent such as sodium sulfite to form a redox system. Moreover, the concentration of radicals in the system can be also regulated by adding a radical scavenger such as hydroquinone or catechol or adding a peroxide decomposer such as ammonium sulfate during polymerization.

The redox polymerization initiator is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of persulfate include ammonium persulfate and potassium persulfate. Examples of sulfites include sodium sulfite and ammonium sulfite. In order to increase the decomposition rate of the initiator, the combination of the redox initiator also preferably contains a copper salt or an iron salt. An example of the copper salt is copper(II) sulfate, and an example of the iron salt is iron(II) sulfate.

Examples of the redox initiator include potassium permanganate/oxalic acid, potassium permanganate/ammonium oxalate, ammonium persulfate/bisulfite/iron sulfate, manganese triacetate/oxalic acid, ammonium cerium nitrate/oxalic acid, and bromate/bisulfite, and potassium permanganate/oxalic acid is preferable. In the case of using a redox initiator, a polymerization tank may be charged with either an oxidizing agent or a reducing agent in advance, followed by continuously or intermittently adding the other to initiate the polymerization. For example, in the case of using potassium permanganate/oxalic acid, preferably a polymerization tank is charged with oxalic acid, and then potassium permanganate is continuously added thereto.

In the production of the TFE polymer, a known chain transfer agent may be used. Examples thereof include saturated hydrocarbons such as methane, ethane, propane, and butane, halogenated hydrocarbons such as chloromethane, dichloromethane, and difluoroethane, alcohols such as methanol, ethanol, and isopropanol, and hydrogen. The chain transfer agent is preferably one in a gas state at a normal temperature and normal pressure.

The amount of the chain transfer agent used is usually 1 to 10,000 mass ppm, preferably 1 to 5,000 mass ppm, based on the total amount of TFE fed.

In production of the TFE polymer, a saturated hydrocarbon that is substantially inert to the reaction, that is in a liquid state under the reaction conditions, and that has 12 or more carbon atoms may be used as a dispersion stabilizer for the reaction system in an amount of 2 to 10 parts by mass based on 100 parts by mass of the aqueous medium. Ammonium carbonate, ammonium phosphate, or the like may be added as a buffer to adjust the pH during the reaction.

When the polymerization for TFE is complete, a polymer dispersion having a solid concentration of 1.0 to 50% by mass and having an average primary particle size of 50 to 500 nm can be obtained.

The lower limit of the solid concentration is preferably 5% by mass and more preferably 8% by mass. The upper limit thereof may be, but is not limited to, 40% by mass or 35% by mass.

The lower limit of the average primary particle size is preferably 100 nm and more preferably 150 nm. The upper limit thereof is preferably 400 nm and more preferably 350 nm.

The average primary particle size can be measured by dynamic light scattering. The average primary particle size may be determined by preparing an aqueous dispersion with a solid concentration being adjusted to 1.0% by mass and using dynamic light scattering at 25°C with 70 measurement processes, wherein the solvent (water) has a refractive index of 1.3328 and the solvent (water) has a viscosity of 0.8878 mPa·s. The dynamic light scattering may use, for example, ELSZ-1000S (manufactured by Otsuka Electronics Co., Ltd.).

Fine powder can be produced by coagulating the aqueous dispersion of the TFE polymer. The aqueous dispersion of the TFE polymer can be formed into fine powder through coagulation, washing, and drying, and the resulting fine powder may be used in various applications. Coagulation of the aqueous dispersion of the TFE polymer is usually performed by diluting the aqueous dispersion obtained by polymerization of polymer latex, for example, with water to a polymer concentration of 5 to 20% by mass, optionally adjusting the pH to a neutral or alkaline, and stirring the polymer more vigorously than during the reaction in a vessel equipped with a stirrer. The coagulation may be performed under stirring while adding a water-soluble organic compound such as methanol or acetone, an inorganic salt such as potassium nitrate or ammonium carbonate, or an inorganic acid such as hydrochloric acid, sulfuric acid, or nitric acid as a coagulating agent. The coagulation may be continuously performed using a device such as an inline mixer.

From the viewpoint of productivity, the concentration of the non-agglomerated TFE polymer in the discharge water generated by the agglomeration is preferably low, more preferably less than 0.4% by mass, and particularly preferably less than 0.3% by mass.

Pigment-containing or filler-containing TFE polymer fine powder in which pigments and fillers are uniformly mixed can be obtained by adding pigments for coloring and various fillers for improving mechanical properties before or during the coagulation.

The wet powder obtained by coagulating the TFE polymer in the aqueous dispersion is usually dried by means of vacuum, high-frequency waves, hot air, or the like while keeping the wet powder in a state in which the wet powder is less fluidized, preferably in a stationary state. Friction between the powder particles especially at high temperature usually has unfavorable effects on the TFE polymer in the form of fine powder. This is because the particles made of such a TFE polymer are easily formed into fibrils even with a small shearing force and lose its original, stable particulate structure.

The drying is performed at a drying temperature of 10 to 300°C, preferably 100 to 300°C.

The resulting fine powder of the TFE polymer is preferred for molding, and suitable applications thereof include tubes for hydraulic systems or fuel systems of aircraft or automobiles, flexible hoses for chemicals or vapors, and electric wire coating.

The aqueous dispersion of the TFE polymer is preferably mixed with a nonionic surfactant to stabilize and further concentrate the aqueous dispersion, and then further mixed with, depending on its purpose, an organic or inorganic filler to form a composition and used in a variety of applications. The composition, when applied to a metal or ceramic substrate, can provide a coating surface having non-stickiness, a low coefficient of friction, and excellent gloss, smoothness, abrasion resistance, weather resistance, and heat resistance, which is suitable for coating of rolls, cooking utensils, and the like, and impregnation processing of glass cloth, and the like.

The aqueous dispersion may also be used to prepare an organosol of the TFE polymer. The organosol may contain the TFE polymer and an organic solvent, and examples of the organic solvent include ether-based solvents, ketone-based solvents, alcohol-based solvents, amide-based solvents, ester-based solvents, aliphatic hydrocarbon-based solvents, aromatic hydrocarbon-based solvents, and halogenated hydrocarbon-based solvents. Suitably used are N-methyl-2-pyrrolidone and dimethylacetamide. The organosol may be prepared by the method disclosed in, for example, International Publication No. WO 2012/002038.

The aqueous dispersion of the TFE polymer or the fine powder of the TFE polymer is also preferably used as a processing aid. When used as a processing aid, the aqueous dispersion or the fine powder is mixed with a host polymer or the like to improve the melt strength of the host polymer in melt processing and to improve the mechanical strength, electric properties, incombustibility, anti-drop performance during combustion, and slidability of the resulting polymer.

The aqueous dispersion of the TFE polymer or the fine powder of the TFE polymer is also preferably used as a binder for batteries or used in dustproof applications.

The aqueous dispersion of the TFE polymer or the fine powder of the TFE polymer is also preferably combined with a resin other than the TFE polymer to form a processing aid before use. The aqueous dispersion or fine powder is suitable as a raw material of the PTFEs disclosed in, for example, Japanese Patent Laid-Open No. 11-49912, U.S. Patent No. 5,804,654, Japanese Patent Laid-Open No. 11-29679, and Japanese Patent Laid-Open No. 2003-2980. Processing aids containing the aqueous dispersion or the fine powder are not inferior in any way to the processing aids disclosed in the publications.

The aqueous dispersion of the TFE polymer is also preferably mixed with an aqueous dispersion of a melt-fabricable fluororesin so that the components coagulate to form co-coagulated powder. The co-coagulated powder is suitable as a processing aid.

Examples of the melt-fabricable fluororesin include FEP, PFA, TFE/perfluoroallyl ether copolymers, ETFE, and ethylene/TFE/HFP copolymers (EFEP), and, in particular, PFA or FEP is preferable.

The aqueous dispersion also preferably contains a melt-processible fluororesin. Examples of the melt-fabricable fluororesin include FEP, PFA, TFE/perfluoroallyl ether copolymers, ETFE, and EFEP. The aqueous dispersion containing the melt-fabricable fluororesin can be used as a coating material. The melt-fabricable fluororesin enables sufficient fusion of the TFE polymer particles, thus improving the film-formability and providing the resulting film with gloss.

The fluorine-free resin to which the co-coagulated powder is added may be in the form of a powder, pellets, or an emulsion. The addition is preferably performed while applying a shear force by a known method such as extrusion kneading or roll kneading from the viewpoint of sufficiently mixing each resin.

The aqueous dispersion of the TFE polymer is also preferably used as a dust suppression treatment agent. The dust suppression treatment agent can be used in a method for suppressing dust of a dust-generating substance by fibrillating a TFE polymer by mixing with a dust-generating substance and applying a compression-shearing action to the mixture at a temperature of 20 to 200°C, for example, methods disclosed in Japanese Patent No. 2827152 and Japanese Patent No. 2538783.

The aqueous dispersion of the TFE polymer can suitably be used for the dust suppression treatment agent composition disclosed in International Publication No. WO 2007/004250, and can also suitably be used for the method of dust suppression treatment disclosed in International Publication No. WO 2007/000812.

The dust suppression treatment agent is suitably used in dust suppression treatment in the fields of building-products, soil stabilizers, solidifying materials, fertilizers, landfill of incineration ash and harmful substance, explosion proof equipment, cosmetics, and sands for pet excretion represented by cat sand.

The aqueous dispersion of the TFE polymer is also preferably used as a material for producing TFE polymer fibers by a dispersion spinning method. The dispersion spinning method is a method in which the aqueous dispersion of the TFE polymer and an aqueous dispersion of a matrix polymer are mixed and the mixture is extruded to form an intermediate fiber structure, and then the intermediate fiber structure is fired to decompose the matrix polymer and sinter the TFE polymer particles, thereby providing TFE polymer fibers.

The high-molecular-weight PTFE powder obtained by polymerization has stretchability and non melt processability, and is also useful as a material for a stretched body (porous body).

When the stretched body of the present disclosure is a film (PTFE stretched film or PTFE porous film), the stretched body can be formed by stretching by a known PTFE stretching method. Stretching allows easy formation of fibrils of high-molecular-weight PTFE, resulting in a PTFE porous body (film) including nodes and fibers.

Preferably, roll-stretching a sheet-shaped or rod-shaped paste extrudate in an extruding direction can provide a uniaxially stretched film.

Moreover, stretching in a transverse direction using, for example, a tenter can provide a biaxially stretched film. Prebaking treatment is also preferably performed before stretching.

This PTFE stretched body is a porous body having a high porosity, and can suitably be used as a filter material for a variety of microfiltration filters such as air filters and chemical filters and a support member for polymer electrolyte films.

The stretched body is also useful as a material of products used in the fields of textiles, of medical treatment, of electrochemistry, of sealants, of air filters, of ventilation/internal pressure adjustment, of liquid filters, and of consumer goods or the like.

Examples of specific applications will now be provided below.

- Electrochemical field

Examples of applications in this field include prepregs for dielectric materials, EMI-shielding materials, and heat conductive materials. More specifically, examples include printed circuit boards, electromagnetic interference shielding materials, insulating heat conductive materials, and insulating materials.

- Sealant field

Examples of applications in this field include gaskets, packings, pump diaphragms, pump tubes, and sealants for aircraft.

- Air filter field

Examples of applications in this field include ULPA filters (for production of semiconductors), HEPA filters (for hospitals and for production of semiconductors), cylindrical cartridge filters (for industries), bag filters (for industries), heat-resistant bag filters (for exhaust gas treatment), heat-resistant pleated filters (for exhaust gas treatment), SINBRAN filters (for industries), catalyst filters (for exhaust gas treatment), adsorbent-attached filters (for HDD embedment), adsorbent-attached vent filters (for HDD embedment), vent filters (for HDD embedment, for example), filters for cleaners (for cleaners), general-purpose multilayer felt materials, cartridge filters for GT (for interchangeable items for GT), and cooling filters (for housings of electronic devices).

- Ventilation/internal pressure adjustment field

Examples of applications in this field include materials for freeze drying such as vessels for freeze drying, ventilation materials for automobiles for electronic circuits and lamps, applications relating to vessels such as vessel caps, protective ventilation for electronic devices, including small devices such as tablet terminals and mobile phone terminals, and ventilation for medical treatment.

- Liquid filter field

Examples of applications in this field include liquid filters for semiconductors (for production of semiconductors), hydrophilic PTFE filters (for production of semiconductors), filters for chemicals (for chemical liquid treatment), filters for pure water production lines (for production of pure water), and back-washing liquid filters (for treatment of industrial discharge water).

- Consumer goods field

Examples of applications in this field include clothes, cable guides (movable wires for motorcycles), clothes for motor cyclists, cast liners (medical supporters), filters for cleaners, bagpipes (musical instruments), cables (such as signal cables for guitars), and strings (for string instrument).

- Textile field

Examples of applications in this field include PTFE fibers (fiber materials), machine threads (textiles), weaving yarns (textiles), and ropes.

- Medical treatment field

Examples of applications in this field include implants (stretched articles), artificial blood vessels, catheters, general surgical operations (tissue reinforcing materials), products for head and neck (dura mater alternatives), oral health (tissue regenerative medicine), and orthopedics (bandages).

Low molecular weight PTFE can also be produced by the production method of the present disclosure.

Low molecular weight PTFE may be produced by polymerization, and can also be produced by reducing the molecular weight of high molecular weight PTFE obtained by polymerization by a known method (thermal decomposition, radiation decomposition, or the like).

A low-molecular-weight PTFE having a molecular weight of 600,000 or less (also referred to as PTFE micropowder) has excellent chemical stability and a very low surface energy, and is less likely to generate fibrils, and is therefore suitably used as an additive for improving the lubricity and the texture of the coating surface in production of plastics, inks, cosmetics, coating materials, greases, parts of office automation equipment, and toners (e.g., see Japanese Patent Laid-Open No. 10-147617).

Further, low molecular weight PTFE may be obtained by dispersing the polymerization initiator and the polymer (I) in an aqueous medium in the presence of a chain transfer agent, and polymerizing TFE or polymerizing TFE and a monomer that is copolymerizable with TFE. In this case, the chain transfer agent is preferably at least one selected from the group consisting of alkanes having 2 to 4 carbon atoms. Specifically, methane, ethane, propane, butane, and isobutane are more preferable, and ethane and propane are still more preferable. In this case, the amount of the chain transfer agent is preferably 10 mass ppm or more or more than 10 mass ppm based on the aqueous medium.

When using the low molecular weight PTFE obtained by polymerization as a powder, powder particles can be obtained by coagulating the aqueous dispersion.

In the present disclosure, high molecular weight PTFE means non melt-processible and fibrillatable PTFE. On the other hand, low molecular weight PTFE means melt-fabricable and non-fibrillatable PTFE.

Being non-melt processible means a property that the melt flow rate cannot be measured at a temperature higher than the crystal melting point in accordance with ASTM D 1238 and D 2116.

The presence or absence of the fibrillation ability can be determined by "paste extrusion", a representative method of molding a "high-molecular-weight PTFE powder" which is a powder made from a polymer of TFE. Usually, high molecular weight PTFE can be paste-extruded when it is fibrillatable. When a non-sintered molded product obtained by

paste extrusion shows substantially no strength or elongation (for example, when it shows an elongation of 0% and is broken when stretched), it can be regarded as non-fibrillatable.

High molecular weight PTFE preferably has a standard specific gravity (SSG) of 2.130 to 2.280. The standard specific gravity is determined by the water replacement method in accordance with ASTM D 792 using a sample molded in accordance with ASTM D 4895-89. The "high molecular weight" in the present disclosure means that the standard specific gravity is within the above range.

The low molecular weight PTFE has a melt viscosity of $1 \times 10^2$ to $7 \times 10^5$ Pa·s at 380°C. The "low molecular weight" herein means that the melt viscosity is within the above range. The melt viscosity is a value measured while maintaining 2 g of a sample, which is heated for 5 minutes at 380°C in advance, at that temperature under a load of 0.7 MPa in accordance with ASTM D 1238 using a flow tester (manufactured by Shimadzu Corporation) and a 2φ-8L die.

High molecular weight PTFE has a melt viscosity significantly higher than that of low molecular weight PTFE, and it is difficult to accurately measure the melt viscosity thereof. On the other hand, the melt viscosity of low molecular weight PTFE is measurable, but it is difficult to obtain a formed article usable in the measurement of standard specific gravity from low molecular weight PTFE, and it is thus difficult to measure the accurate standard specific gravity thereof. Accordingly, in the present disclosure, the standard specific gravity is used as an index of the molecular weight of high molecular weight PTFE, while the melt viscosity is used as an index of the molecular weight of low molecular weight PTFE. It should be noted that there is no known measuring method for directly specifying the molecular weight of either high molecular weight PTFE or low molecular weight PTFE.

High molecular weight PTFE preferably has a peak temperature of 333 to 347°C, and more preferably 335 to 345°C. Low molecular weight PTFE preferably has a peak temperature of 322 to 333°C, and more preferably 324 to 332°C. The peak temperature can be specified as a temperature corresponding to the maximum value appearing in a differential thermal analysis (DTA) curve obtained by raising the temperature of PTFE, which has no history of being heated to a temperature of 300°C or higher, under a condition of 10°C/min using TG-DTA (thermogravimetric - differential thermal analyzer).

The peak temperature of PTFE may be 322 to 347°C.

When PTFE is high molecular weight PTFE, the upper limit of the peak temperature of PTFE may be 347°C or lower, 346°C or lower, 345°C or lower, 344°C or lower, 343°C or lower, 342°C or lower, 341°C or lower, or 340°C or lower.

The lower limit of the peak temperature of PTFE when PTFE is high molecular weight PTFE may be 333°C or higher, or 335°C or higher.

The upper limit of the peak temperature of PTFE when PTFE is low molecular weight PTFE may be 333°C or lower, or 332°C or lower.

The lower limit of the peak temperature of PTFE when PTFE is low molecular weight PTFE may be 322°C or higher, or 324°C or higher.

The average primary particle size of primary particles of low molecular weight PTFE is preferably 10 to 300 nm and more preferably 50 nm or more, even more preferably 100 nm or less, particularly preferably 150 nm or less, and yet more preferably 250 nm or less. The relatively small average primary particle size of primary particles can be obtained by, for example, adding a modifying monomer to the polymerization system at the initial stage of polymerization of TFE.

The average primary particle size of primary particles of the low-molecular-weight PTFE can be measured by dynamic light scattering. The average primary particle size may be determined by preparing an aqueous dispersion of low molecular weight PTFE with a polymer solid concentration being regulated to about 1.0% by mass and using dynamic light scattering at a measurement temperature of 25°C with the number of scans being 70, wherein the solvent (water) has a refractive index of 1.3328 and the solvent (water) has a viscosity of 0.8878 mPa·s. In dynamic light scattering, for example, ELSZ-1000S (manufactured by Otsuka Electronics Co., Ltd.) can be used.

Preferably, the high-molecular-weight PTFE has at least one endothermic peak in a range of 333 to 347°C on a heat-of-fusion curve with a temperature-increasing rate of 10°C/min using a differential scanning calorimeter (DSC) for a PTFE which has never been heated up to 300°C or higher, and has an enthalpy of fusion of 52 mJ/mg or higher at 290 to 350°C calculated from the heat-of-fusion curve. The enthalpy of fusion of PTFE is more preferably 55 mJ/mg or more, even more preferably 58 mJ/mg or more.

The PTFE fine powder obtained as above may also be used to produce unsintered tape (green tape).

(II) Melt-fabricable fluororesin

(1) In the production method of the present disclosure, the polymerization for FEP is preferably performed at a polymerization temperature of 10 to 150°C at a polymerization pressure of 0.3 to 6.0 MPaG.

FEP preferably has a monomer composition ratio (% by mass) of TFE:HFP = (60 to 95):(5 to 40), and more

preferably (85 to 92):(8 to 15).

In addition to TFE and HFP, by polymerizing a further monomer that is copolymerizable with these monomers, a copolymer of TFE, HFP and a further monomer may be obtained as FEP. Examples of the further monomer include the above-described fluorine-containing monomers (excluding TFE and HFP) and fluorine-free monomers described above. One further monomer may be used singly, or multiple further monomers may be used in combination. The further monomer is preferably perfluoro(alkyl vinyl ether). The content of the further-monomer unit in FEP may be 0.1 to 2% by mass based on all monomer units.

In the polymerization of FEP, the polymer (I) can be used within the use range in the production method of the present disclosure, and is usually added in an amount of 0.0001 to 10% by mass based on 100% by mass of the aqueous medium.

In the polymerization for FEP, the chain transfer agent used is preferably cyclohexane, methanol, ethanol, propanol, ethane, propane, butane, pentane, hexane, carbon tetrachloride, chloroform, methylene chloride, methyl chloride, or the like, and the pH buffer used is preferably ammonium carbonate, disodium hydrogen phosphate, or the like.

The aqueous dispersion of FEP obtained by the production method of the present disclosure may optionally be subjected to post-treatment such as concentration, and then the concentrate may be dried and powdered, and the powder may be melt-extruded into pellets. The aqueous medium in the FEP aqueous dispersion may optionally contain an additive such as a nonionic surfactant, and may contain a water-soluble organic solvent such as a water-soluble alcohol or may be free from a water-soluble organic solvent.

The melt extrusion may be performed under any appropriately set extrusion conditions usually capable of providing pellets.

In the production method of the present disclosure, the resulting FEP may contain an end group such as $-CF_3$ or $-CF_2H$ on at least one of the polymer main chain and a polymer side chain, but it is preferable that the content of thermally unstable groups such as -COOH, $-CH_2OH$, -COF, -CF=CF-, $-CONH_2$, or $-COOCH_3$ (hereinafter, referred to as an "unstable end group") is low or absent.

The unstable end group is chemically unstable, and thus not only reduces the heat resistance of the resin but also causes increase in the attenuation of the resulting electric wire.

The production method of the present disclosure is preferably performed in such a way that a polymer in which the total number of unstable end groups and $-CF_2H$ end groups at the completion of the polymerization is 50 or less per $1 \times 10^6$ carbon atoms is produced. The number of such groups is more preferably less than 20, even more preferably 5 or less, per $1 \times 10^6$ carbon atoms. There may also be neither unstable end groups nor $-CF_2H$ end groups, or that is to say, all end groups may be $-CF_3$ end groups.

The unstable end groups and the $-CF_2H$ end groups may be fluorinated and converted to the $-CF_3$ end groups and thereby stabilized. Examples of the fluorination method include, but not limited to, methods of exposing the polymer to a fluorine radical source that generates fluorine radicals under fluorination conditions. Examples of the fluorine radical source include fluorine gas, $CoF_3$, $AgF_2$, $UF_6$, $OF_2$, $N_2F_2$, $CF_3OF$, and halogen fluorides such as $IF_3$ and $ClF_3$. Of these, preferred is a method of bringing fluorine gas and the FEP obtained by the production method of the present disclosure into direct contact with each other. In order to control the reaction, the contact is preferably performed using a diluted fluorine gas having a fluorine gas concentration of 10 to 50% by mass. The diluted fluorine gas is obtainable by diluting fluorine gas with an inert gas such as nitrogen gas or argon gas. The fluorine gas treatment may be performed at a temperature of 100 to 250°C. The treatment temperature is not limited to this range and may be appropriately set in accordance with the situation. The fluorine gas treatment is preferably performed by feeding a diluted fluorine gas into the reactor continuously or intermittently. This fluorination may be performed on dry powder after the polymerization or on melt-extruded pellets.

The FEP obtained by the production method of the present disclosure has good moldability, is less likely to cause forming defects, and, in addition, has properties such as good heat resistance, chemical resistance, solvent resistance, insulation, and electric properties.

The FEP powder may be produced by a method involving drying the FEP obtained by the above-described production method of the present disclosure and reducing the dried FEP to powder.

The powder may be fluorinated. The fluorinated powder may be produced by a method involving feeding a fluorine gas to the powder obtained by the above-described method for producing a powder to fluorinate the powder to obtain a fluorinated powder.

The FEP pellets may be produced by a method involving pelletizing the FEP obtained by the above-described production method of the present disclosure.

The pellets may be fluorinated. The fluorinated pellets may be produced by a method involving feeding a fluorine gas to the pellets obtained by the above-described method for producing pellets to fluorinate the pellets to obtain fluorinated pellets.

Thus, this FEP may be used in production of a variety of formed articles such as coating materials for electric wires, foamed electric wires, cables, and wires, tubes, films, sheets, and filaments.

(2) In the production method of the present disclosure, the polymerization for a TFE/perfluoro(alkyl vinyl ether)

copolymer such as PFA or MFA and a TFE/perfluoroallyl ether copolymer is usually preferably carried out at a polymerization temperature of 10 to 100°C at a polymerization pressure of 0.3 to 6.0 MPaG.

The TFE/perfluoro(alkyl vinyl ether) copolymer preferably has a monomer composition ratio (mol%) of TFE:perfluoro(alkyl vinyl ether) = (90 to 99.7):(0.3 to 10), and more preferably (97 to 99):(1 to 3). The perfluoro(alkyl vinyl ether) used is preferably represented by the formula: $CF_2=CFORf^4$, wherein $Rf^4$ is a perfluoroalkyl group having 1 to 6 carbon atoms.

In addition to TFE and perfluoro(alkyl vinyl ether), by polymerizing a further monomer that is copolymerizable with these monomers, a copolymer of TFE, perfluoro (alkyl vinyl ether), and the further monomer may be obtained as a TFE/perfluoro (alkyl vinyl ether) copolymer. Examples of the further monomer include the fluorine-containing monomers (excluding TFE and perfluoro (alkyl vinyl ether)) and fluorine-free monomers described above. One further monomer may be used singly, or multiple further monomers may be used in combination. The content of the further-monomer unit in the TFE/perfluoro (alkyl vinyl ether) copolymer may be 0.1 to 2% by mass based on all monomer units.

The TFE/perfluoroallyl ether copolymer preferably has a monomer composition ratio (mol%) of TFE:perfluoroallyl ether = (90 to 99.7): (0.3 to 10), and more preferably (97 to 99):(1 to 3). The perfluoroallyl ether used is preferably represented by the formula: $CF_2=CFCF_2ORf^4$, wherein $Rf^4$ is a perfluoroalkyl group having 1 to 6 carbon atoms.

In addition to TFE and perfluoroallyl ether, by polymerizing a further monomer that is copolymerizable with these monomers, a copolymer of TFE, perfluoroallyl ether, and the further monomer may be obtained as a copolymer of TFE/perfluoroallyl ether. Examples of the further monomer include the fluorine-containing monomers (excluding TFE and perfluoroallyl ether) and fluorine-free monomers described above. One further monomer may be used singly, or multiple further monomers may be used in combination. The content of the further-monomer unit in the TFE/perfluoroallyl ether copolymer may be 0.1 to 2% by mass based on all monomer units.

In the polymerization for the TFE/perfluoro(alkyl vinyl ether) copolymer and the TFE/perfluoroallyl ether copolymer, the polymer (I) may be used within the use range in the production method of the present disclosure, and is usually preferably added in an amount of 0.0001 to 10% by mass based on 100% by mass of the aqueous medium.

In the polymerization for the TFE/perfluoro(alkyl vinyl ether) copolymer and the TFE/perfluoroallyl ether copolymer, the chain transfer agent used is preferably cyclohexane, methanol, ethanol, propanol, propane, butane, pentane, hexane, carbon tetrachloride, chloroform, methylene chloride, methyl chloride, methane, ethane, or the like, and the pH buffer used is preferably ammonium carbonate, disodium hydrogen phosphate, or the like.

The aqueous dispersion of the TFE/perfluoro(alkyl vinyl ether) copolymer such as PFA or MFA and the TFE/perfluoroallyl ether copolymer obtained by the production method of the present disclosure may optionally be subjected to post-treatment such as concentration, and then the concentrate may be dried and powdered, and the powder may be melt-extruded into pellets. The aqueous medium in the aqueous dispersion may optionally contain an additive such as a nonionic surfactant, and may contain a water-soluble organic solvent such as a water-soluble alcohol or may be free from a water-soluble organic solvent.

The melt extrusion may be performed under any appropriately set extrusion conditions usually capable of providing pellets.

In order to improve the heat resistance of the copolymer and to enhance a chemical permeation suppression effect of a formed article, the copolymer is preferably subjected to a fluorine gas treatment.

The fluorine gas treatment is carried out by bringing fluorine gas into contact with the copolymer. However, since the reaction with fluorine is extremely exothermic, it is preferable to dilute fluorine with inert gas such as nitrogen. The amount of fluorine in the fluorine gas/inert gas mixture is 1 to 100% by mass, preferably 10 to 25% by mass. The treatment temperature is 150 to 250°C, preferably 200 to 250°C and the fluorine gas treatment duration is 3 to 16 hours, preferably 4 to 12 hours. The fluorine gas treatment is performed at a gas pressure in the range of 1 to 10 atm, preferably atmospheric pressure. In the case of using a reactor at atmospheric pressure, the fluorine gas/inert gas mixture may be continuously passed through the reactor. This results in conversion of unstable ends of the copolymer into - $CF_3$ ends, thermally stabilizing the copolymer.

The copolymer and the composition thereof may be molded by compression molding, transfer molding, extrusion molding, injection molding, blow molding, or the like as in the case of conventional PFA.

Such a molding technique can provide a desired formed article, and examples of the formed article include sheets, films, packings, round bars, square bars, pipes, tubes, round tanks, square tanks, tanks, wafer carriers, wafer boxes, beakers, filter housings, flowmeters, pumps, valves, cocks, connectors, nuts, electric wires, and heat-resistant electric wires.

Preferable among these are tubes, pipes, tanks, connectors, and the like to be used in a variety of chemical reaction devices, semiconductor manufacturing devices, and acidic or alkaline chemical feeding devices or the like each requiring chemical impermeability.

The aqueous dispersion of the TFE/perfluoro(alkyl vinyl ether) copolymer such as PFA or MFA and the TFE/perfluoroallyl ether copolymer may also be appropriately mixed with a nonionic surfactant, and optionally polyethersulfone, polyamide-imide, and/or polyimide, and metal powder are dissolved or dispersed in an organic solvent, and

thereby a primer composition can be obtained. This primer composition may be used in a method for applying a fluororesin to a metal surface, wherein the method includes applying the primer composition to a metal surface, applying a melt-fabricable fluororesin composition to the resulting primer layer, and firing the melt-fabricable fluororesin composition layer together with the primer layer.

(3) In the production method of the present disclosure, the polymerization for ETFE is preferably performed at a polymerization temperature of 10 to 100°C at a polymerization pressure of 0.3 to 2.0 MPaG.

The ETFE preferably has a monomer composition ratio (mol%) of TFE:ethylene = (50 to 99):(50 to 1).

In addition to ethylene and TFE, by polymerizing a further polymer that is copolymerizable with these monomers, a copolymer of ethylene, TFE and a further monomer may be obtained as ETFE. Examples of the further monomer include the fluorine-containing monomers (excluding TFE) and fluorine-free monomers (excluding ethylene) described above. One further monomer may be used singly, or multiple further monomers may be used in combination.

The further monomer is preferably hexafluoropropylene, perfluorobutyl ethylene, perfluorohexyl ethylene, 3,3,4,4,5,5,6,6,7,7,8,8,8-tridecafluorooct-1-ene, 2,3,3,4,4,5,5-heptafluoro-1-pentene ($CH_2=CFCF_2CF_2CF_2H$), or 2-trifluoromethyl-3,3,3-trifluoropropene ($(CF_3)_2CF=CH_2$).

The content of the further-monomer unit in ETFE may be 0 to 20% by mass based on all monomer units. A preferable mass ratio is TFE:ethylene:further monomer=(63-94): (27-2): (1-10).

In the polymerization for the ETFE, the polymer (I) can be used within the use range in the production method of the present disclosure, and is usually added in an amount of 0.0001 to 10% by mass based on 100% by mass of the aqueous medium.

In the polymerization for ETFE, the chain transfer agent used is preferably cyclohexane, methanol, ethanol, propanol, ethane, propane, butane, pentane, hexane, carbon tetrachloride, chloroform, methylene chloride, methyl chloride, or the like.

The aqueous dispersion of ETFE obtained by the production method of the present disclosure may optionally be subjected to post-treatment such as concentration, and then the concentrate may be dried and powdered, and the powder may be melt-extruded into pellets. The aqueous medium in the aqueous dispersion may optionally contain an additive such as a nonionic surfactant, and may contain a water-soluble organic solvent such as a water-soluble alcohol or may be free from a water-soluble organic solvent.

The melt extrusion may be performed under any appropriately set extrusion conditions usually capable of providing pellets.

The ETFE may be extrusion-molded into a sheet. In other words, powder or pellets of ETFE in a molten state may be continuously extruded through a die and then cooled to provide a sheet-shaped formed article. The ETFE may be mixed with an additive.

Known additives may be incorporated as appropriate. Specific examples include ultraviolet absorbers, photostabilizers, antioxidants, infrared absorbers, flame retarders, flame-retardant fillers, organic pigments, inorganic pigments, and dyes. From the viewpoint of excellent weather resistance, inorganic additives are preferable.

The content of the additive in the ETFE sheet is preferably 20% by mass or less, and particularly preferably 10% by mass or less, based on the total mass of the ETFE sheet.

The ETFE sheet has excellent mechanical strength and appearance, and thus can suitably be used for film materials (e.g., roof materials, ceiling materials, outer wall materials, inner wall materials, and coating materials) of film-structured buildings (e.g., sports facilities, gardening facilities, and atriums).

In addition to the film materials of film-structured buildings, the ETFE sheet is also useful for, for example, outdoor boards (e.g., noise-blocking walls, windbreak fences, breakwater fences, roof panels of carports, shopping arcades, footpath walls, and roof materials), shatter-resistant window films, heat-resistant waterproof sheets, building materials (e.g., tent materials of warehouse tents, film materials for shading, partial roof materials for skylights, window materials alternative to glass, film materials for flame-retardant partitions, curtains, outer wall reinforcement, waterproof films, anti-smoke films, non-flammable transparent partitions, road reinforcement, interiors (e.g., lighting, wall surfaces, and blinds), exteriors (e.g., tents and signboards)), living and leisure goods (e.g., fishing rods, rackets, golf clubs, and screens), automobile materials (e.g., hoods, damping materials, and bodies), aircraft materials, shipment materials, exteriors of home appliances, tanks, vessel inner walls, filters, film materials for construction works, electronic materials (e.g., printed circuit boards, circuit boards, insulating films, and release films), surface materials for solar cell modules, mirror protection materials for solar thermal energy, and surface materials for solar water heaters.

(4) The production method of the present disclosure may be used to produce an electrolyte polymer precursor. In the production method of the present disclosure, the polymerization for the electrolyte polymer precursor is preferably performed at a polymerization temperature of 10 to 100°C at a polymerization pressure of 0.1 to 2.0 MPaG. The electrolyte polymer precursor is composed of a monomer containing a functional group represented by $-SO_2X^{151}$, $-COZ^{151}$, or $-POZ^{152}Z^{153}$ (wherein $X^{151}$, $Z^{151}$, $Z^{152}$, and $Z^{153}$ are as will be described below), and can be converted to an ion-exchangeable polymer through hydrolysis treatment.

Examples of the monomer used in the electrolyte polymer precursor include

fluorine-containing monomers represented by general formula (150) : $CF_2=CF-O-(CF_2CFY^{151}-O)_n-(CFY^{152})_m-A^{151}$ wherein $Y^{151}$ represents a fluorine atom, a chlorine atom, an - $SO_2F$ group, or a perfluoroalkyl group; the perfluoroalkyl group optionally contains ether oxygen and an $-SO_2F$ group; n represents an integer of 0 to 3; n $Y^{151}$ groups are optionally the same or different; $Y^{152}$ represents a fluorine atom, a chlorine atom, or an $-SO_2F$ group; m represents an integer of 1 to 5; m $Y^{152}$ groups are optionally the same or different; $A^{151}$ represents $-SO_2X^{151}$,$-COZ^{151}$, or $-POZ^{162}Z^{163}$; $X^{151}$ represents F, Cl, Br, I, $-OR^{151}$, or$-NR^{152}R^{153}$; $Z^{151}$, $Z^{152}$, and $Z^{153}$ are the same or different, and each independently represent $-NR^{154}R^{155}$ or $-OR^{156}$; and $R^{151}$, $R^{152}$, $R^{153}$, $R^{154}$, $R^{155}$, and $R^{156}$ are the same or different, and each represent H, ammonium, an alkali metal, or an alkyl group, aryl group or sulfonyl-containing group optionally containing a fluorine atom. Examples of the monomer used in the electrolyte polymer precursor include the compound containing two fluorosulfonyl groups described in International Publication No. WO 2007/013532, and the perfluoromonomer having an $-SO_2F$ group and a dioxolane ring described in International Publication No. WO 2014/175123. The electrolyte polymer precursor preferably has a monomer composition ratio (mol%) of TFE:vinyl ether = (50 to 99):(50 to 1), and more preferably TFE:vinyl ether = (50 to 93):(50 to 7) .

The electrolyte polymer precursor may be modified with a third monomer within a range of 0 to 20% by mass of all monomers. Examples of the third monomer include multifunctional monomers such as CTFE, vinylidene fluoride, perfluoroalkyl vinyl ether, perfluorobutenyl vinyl ether; cyclic monomers such as perfluoro-2,2-dimethyl-1,3-dioxolane and perfluoro-2-methylene-4-methyl-1,3-dioxole; and divinylbenzene.

The electrolyte polymer precursor thereby obtained may be molded into a film, followed by hydrolysis using an alkali solution and a treatment using a mineral acid, and thereby used as a polymer electrolyte film for fuel cells, electrolysis devices, redox flow batteries, and the like.

The electrolyte polymer precursor may be hydrolyzed using an alkali solution while the dispersed state thereof is maintained, thereby providing an electrolyte polymer dispersion.

This dispersion may be then heated to 120°C or higher in a pressurized vessel and thereby dissolved in, for example, a solvent mixture of water and an alcohol, i.e., converted into a solution state.

The solution thereby obtained may be used as a binder for electrodes and, also, may be combined with a variety of additives and cast to form a film, and the film may be used for antifouling films, organic actuators, or the like.

(5) TFE/VDF copolymer

In the production method of the present disclosure, the polymerization for the TFE/VDF copolymer may be performed at any polymerization temperature, such as 0 to 100°C. The polymerization pressure is determined as appropriate in accordance with the other polymerization conditions such as the polymerization temperature, and may be usually 0 to 9.8 MPaG.

The TFE/VDF copolymer preferably has a monomer composition ratio (mol%) of TFE:VDF = (5 to 90):(95 to 10). The TFE/VDF copolymer may be modified with a third monomer within a range of 0 to 50 mol% of all monomers. The composition ratio thereof is preferably TFE:ethylene:third monomer = (30 to 85):(10 to 69.9):(0.1 to 10).

The third monomer is preferably a monomer represented by

the formula: $CX^{11}X^{12}=CX^{13}(CX^{14}X^{15})_{n11}X^{16}$

wherein $X^{11}$ to $X^{16}$ are the same or different, and each represent H, F, or Cl; n11 represents an integer of 0 to 8, provided that TFE and VDF are excluded; or

a monomer represented by the formula: $CX^{21}X^{22}=CX^{23}-O(CX^{24}X^{25})_{n21}X^{26}$

wherein $X^{21}$ to $X^{26}$ are the same as or different from each other, and each represent H, F, or Cl; and n21 represents an integer of 0 to 8.

The third monomer may be a fluorine-free ethylenic monomer. From the viewpoint of maintaining the heat resistance and the chemical resistance, the fluorine-free ethylenic monomer is preferably selected from ethylenic monomers having 6 or less carbon atoms. Examples include ethylene, propylene, 1-butene, 2-butene, vinyl chloride, vinylidene chloride, alkyl vinyl ethers (e.g., methyl vinyl ether, ethyl vinyl ether, and propyl vinyl ether), maleic acid, itaconic acid, 3-butenoic acid, 4-pentenoic acid, vinylsulfonic acid, acrylic acid, and methacrylic acid.

In the polymerization for the TFE/VDF copolymer, the polymer (I) can be used within the use range in the production method of the present disclosure, and is usually added in an amount of 0.0001 to 5% by mass based on 100% by mass of the aqueous medium.

The TFE/VDF copolymer may be amidated by being brought into contact with a nitrogen compound capable of generating ammonia water, ammonia gas, or ammonia.

The TFE/VDF copolymer obtained by the above-described method may also preferably be used as a material for providing TFE/VDF copolymer fibers by a spinning-drawing method. The spinning-drawing method is a method for obtaining a TFE/VDF copolymer fiber by melt spinning a TFE/VDF copolymer, cooling and solidifying it to obtain an

undrawn yarn, and then running the undrawn yarn in a heating cylinder to draw the undrawn yarn.

The TFE/VDF copolymer may be dissolved in an organic solvent to provide a solution of the TFE/VDF copolymer. Examples of the organic solvent include nitrogen-containing organic solvents such as N-methyl-2-pyrrolidone, N,N-dimethyl acetamide, and dimethyl formamide; ketone-based solvents such as acetone, methyl ethyl ketone, cyclohexanone, and methyl isobutyl ketone; ester-based solvents such as ethyl acetate and butyl acetate; ether-based solvents such as tetrahydrofuran and dioxane; and general-purpose organic solvents having a low boiling point such as solvent mixtures thereof. The solution may be used as a binder for batteries.

The aqueous dispersion of the TFE/VDF copolymer may preferably be used to coat a porous substrate formed from a polyolefin resin to provide a composite porous film. The aqueous dispersion may also preferably contain inorganic particles and/or organic particles dispersed therein and be used to coat a porous substrate to provide a composite porous film. The composite porous film thereby obtained may be used as a separator for lithium secondary batteries.

The powder of the melt-fabricable fluororesin is suitably used as a powdery coating material. When applied to a substrate, the powdery coating material made of the melt-fabricable fluororesin powder can provide a film having a smooth surface. The melt-fabricable fluororesin powder having an average particle size of 1 μm or more and less than 100 μm is particularly suitable as a powdery coating material used for electrostatic coating. The melt-fabricable fluororesin powder having an average particle size of 100 μm or more and 1,000 μm or less is particularly suitable as a powdery coating material used for rotational coating or rotational molding.

The melt-fabricable fluororesin powder can be produced by a method of drying the melt-fabricable fluororesin obtained by the above-described production method of the present disclosure to powder the melt-fabricable fluororesin. The method for producing the melt-fabricable fluororesin powder is also one aspect of the present disclosure.

(III) Fluoroelastomer

In the production method of the present disclosure, the polymerization reaction for the fluoroelastomer is initiated by charging pure water and the polymer (I) into a pressure-resistant reaction vessel equipped with a stirrer, deoxidizing the system, charging the monomers, increasing the temperature to a predetermined level, and adding a polymerization initiator. The pressure decreases as the reaction progresses, and additional monomers are fed continuously or intermittently to maintain the initial pressure. When the amount of the monomers fed reaches a predetermined level, feeding is stopped, and the monomers in the reaction vessel are purged and the temperature is returned to room temperature, whereby the reaction is completed. In this case, polymer latex can be continuously taken out of the reaction vessel.

In particular, in the case of producing the fluoroelastomer, it is also possible to use a method in which fluoropolymer fine particles are synthesized at a high concentration defined as described above and then diluted for further polymerization as disclosed in International Publication No. WO 00/01741, whereby the final polymerization rate can be increased as compared with ordinary polymerization.

The polymerization for the fluoroelastomer may be performed under conditions appropriately selected from the viewpoints of physical properties of the target polymer and control of the polymerization rate, and is performed at a polymerization temperature of usually -20 to 200°C, preferably 5 to 150°C, and a polymerization pressure of usually 0.5 to 10 MPaG, preferably 1 to 7 MPaG. The polymerization medium preferably has a pH usually maintained at 2.5 to 13 using a pH adjuster to be described later by a known method, for example.

Examples of the monomer used in the polymerization for the fluoroelastomer include vinylidene fluoride, as well as fluorine-containing ethylenically unsaturated monomers having fluorine atoms at least as much as the carbon atoms therein and copolymerizable with vinylidene fluoride. Examples of the fluorine-containing ethylenically unsaturated monomers include trifluoropropene, tetrafluoropropene, pentafluoropropene, hexafluoropropene, 2,3,3,3-tetrafluoropropene, hexafluorobutene, and octafluorobutene. Of these, hexafluoropropene or 2,3,3,3-tetrafluoropropene is particularly preferred because of the properties of the elastomer obtained when hexafluoropropene or 2,3,3,3-tetrafluoropropene blocks the crystal growth of the polymer. Examples of the fluorine-containing ethylenically unsaturated monomers also include trifluoroethylene, TFE and CTFE, and fluorine-containing monomers containing one or two or more chlorine and/or bromine substituents may also be used. Perfluoro(alkyl vinyl ethers) such as perfluoro(methyl vinyl ether) may also be used. TFE and HFP are preferable for producing a fluoroelastomer.

The fluoroelastomer preferably has a monomer composition ratio (% by mass) of vinylidene fluoride:HFP:TFE = (20 to 70):(30 to 48):(0 to 36). The fluoroelastomer having this composition ratio exhibits good elastomeric characteristics, chemical resistance, and thermal stability.

In the polymerization for the fluoroelastomer, the polymer (I) can be used within the use range in the production method of the present disclosure, and is usually added in an amount of 0.0001 to 20% by mass based on 100% by mass of the aqueous medium. It is preferably added in an amount of 10% by mass or less, and more preferably 2% by mass or less.

In the polymerization for the fluoroelastomer, the polymerization initiator used may be a known inorganic radical polymerization initiator. Examples of particularly useful inorganic radical polymerization initiators include conventionally known water-soluble inorganic peroxides, such as persulfates, perphosphates, perborates, percarbonates or permanganates of sodium, potassium, and ammonium. The radical polymerization initiator may be further activated with a reducing agent such as sulfite, bisulfite, metabisulfite, hyposulfite, thiosulfate, phosphite, or hypophosphite of sodium, potassium, or ammonium, or an easily oxidizable metal compound such as an iron(I) salt, a copper(I) salt, or a silver salt. A suitable inorganic radical polymerization initiator is ammonium persulfate, and more preferably a combination of ammonium persulfate and sodium bisulfite is used in a redox system.

The concentration of the polymerization initiator added is appropriately determined in accordance with the molecular weight of the target fluoropolymer and the polymerization reaction rate, and is set to 0.0001 to 10% by mass, preferably 0.01 to 5% by mass, based on 100% by mass of the total amount of the monomers.

In the polymerization for the fluoroelastomer, a known chain transfer agent may be used, and examples include hydrocarbons, esters, ethers, alcohols, ketones, chlorine compounds, carbonates, an iodine compound, or the like. Of these, from the viewpoint that the reaction rate is unlikely impaired, isopentane, diethyl malonate, and ethyl acetate are preferable, and diiodine compounds such as $I(CF_2)_4I$, $I(CF_2)_6I$, and $ICH_2I$ are preferable because they can iodize polymer terminals and allow the resulting polymer to be used as a reactive polymer.

The amount of the chain transfer agent used is usually $0.5 \times 10^{-3}$ to $5 \times 10^{-3}$ mol%, preferably $1.0 \times 10^{-3}$ to $3.5 \times 10^{-3}$ mol%, based on the total amount of the monomers fed.

In the polymerization for the fluoroelastomer, a phosphate, sodium hydroxide, potassium hydroxide, or the like may preferably be used as a pH adjuster.

At completion of the polymerization, the aqueous dispersion of the fluoroelastomer obtained by the production method of the present disclosure has a solid concentration of 1.0 to 40% by mass, an average particle size of 0.03 to 1 μm, preferably 0.05 to 0.5 μm, and a number average molecular weight of 1,000 to 2,000,000.

The aqueous dispersion of the fluoroelastomer obtained by the production method of the present disclosure may be subjected to treatment such as coagulation or heating.

The coagulation can be performed by adding an alkaline earth and earth metal salt to the aqueous dispersion. Examples of the alkaline earth and earth metal salt include sulfates, nitrates, hydrochlorides, and acetates of calcium, magnesium, or aluminum.

The coagulated fluorine-containing elastomer may be washed with water to remove a small amount of impurities such as buffer solution and salts present in the fluorine-containing elastomer, followed by drying of the washed fluorine-containing elastomer. The drying temperature is preferably 40 to 200°C, more preferably 60 to 180°C, and even more preferably 80 to 150°C.

Among fluoroelastomers, a perfluoroelastomer can be obtained by polymerizing a perfluoromonomer in an aqueous medium in the presence of the polymer (I).

It is preferable that the perfluoromonomer is at least one selected from the group consisting of:

tetrafluoroethylene (TFE);
hexafluoropropylene (HFP);
a fluoromonomer represented by the general formula: $CF_2=CF-ORf^{13}$,
wherein $Rf^{13}$ represents a perfluoroalkyl group having 1 to 8 carbon atoms;
a fluoromonomer represented by the general formula:

$$CF_2=CFOCF_2ORf^{14},$$

wherein $Rf^{14}$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms including 1 to 3 oxygen atoms; and
a fluoromonomer represented by the general formula:

$$CF_2=CFO(CF_2CF(Y^{15})O)_m(CF_2)_nF,$$

wherein $Y^{15}$ represents a fluorine atom or a trifluoromethyl group, m is an integer of 1 to 4; and n is an integer of 1 to 4.

Also, in the polymerization of the perfluoromonomer, a monomer that provides a crosslinking site may be polymerized together with the perfluoromonomer.

The polymer (I) used in the method for producing a perfluoroelastomer preferably has an ion exchange capacity of 1.50 meq/g or more. The ion exchange capacity of the polymer (I) is, in the order of becoming more preferred, 1.75 meq/g or more, 2.00 meq/g or more, 2.40 meq/g or more, 2.50 meq/g or more, 2.60 meq/g or more, 3.00 meq/g or more, or 3.50 meq/g or more. The ion exchange capacity is the content of ionic groups (anionic groups) in the polymer (I), and can be calculated from the composition of the polymer (I). Precursor groups that become ionic by hydrolysis (for example, $-COOCH_3$) are not considered to be ionic groups, for the purpose of determining the ion exchange capacity. It is presumed

that the higher the ion exchange capacity of the polymer (I), the more anionic groups in the polymer (I), the more stable particles are formed, and also the higher the particle forming ability, resulting in a higher number of particles per unit water volume and a higher polymerization rate.

The polymer (I) is preferably added in an amount of 0.01 to 20% by mass based on 100% by mass of the aqueous medium. When the amount of the polymer (I) added in the polymerization (the amount present) is within the above range, the polymerization reaction of the perfluoromonomer progresses smoothly and the perfluoroelastomer can be produced efficiently.

Since the polymerization reaction of the perfluoromonomer progresses further smoothly, the amount of the polymer (I) added is more preferably 0.1% by mass or more, even more preferably 0.5% by mass or more, particularly preferably 0.75% by mass or more, and most preferably 1.0% by mass or more, based on 100% by mass of the aqueous medium.

In addition, when the amount added is too large, effects commensurate with the amount added cannot be obtained, which is economically disadvantageous, and post-treatment after the completion of the polymerization may become complex. Therefore, the amount of the polymer (I) added is more preferably 15% by mass or less, even more preferably 10% by mass or less, and particularly preferably 5% by mass or less, based on 100% by mass of the aqueous medium.

The polymerization of the perfluoromonomer may be carried out in the presence of a polymerization initiator. The polymerization initiator is as described above. The amount of the polymerization initiator added is preferably 0.0001 to 10% by mass, and more preferably 0.01 to 5% by mass, based on 100% by mass of the perfluoromonomer. When the amount of the polymerization initiator added in the polymerization (the amount present) is within the above range, the polymerization reaction of the perfluoromonomer progresses smoothly, and the perfluoroelastomer can be produced efficiently. When the amount of the polymerization initiator added is too small, a sufficient polymerization rate cannot be obtained or a sufficient yield cannot be obtained.

The polymerization of the perfluoromonomer may be carried out in the presence of a pH adjuster. By carrying out the polymerization in the presence of a pH adjuster, a sufficient number of perfluoroelastomer particles can be generated at a sufficient polymerization rate while further suppressing the adhesion of the perfluoroelastomer to the polymerization tank. The pH adjuster may be added before the initiation of polymerization or may be added after the initiation of polymerization.

The pH adjuster used may be ammonia water, sodium hydroxide, potassium hydroxide, sodium carbonate, potassium carbonate, ammonium carbonate, sodium hydrogen carbonate, potassium hydrogen carbonate, ammonium hydrogen carbonate, sodium phosphate, potassium phosphate, disodium hydrogen phosphate, sodium dihydrogen phosphate, potassium hydrogen phosphate, potassium dihydrogen phosphate, sodium citrate, potassium citrate, ammonium citrate, sodium gluconate, potassium gluconate, or ammonium gluconate.

Among the fluoroelastomers, a partially fluorinated elastomer can be obtained by polymerizing a fluoromonomer in an aqueous medium in the presence of the polymer (I).

The fluoromonomer for obtaining a partially fluorinated elastomer is preferably at least one selected from the group consisting of vinylidene fluoride (VdF), tetrafluoroethylene (TFE), hexafluoropropylene (HFP), a perfluoro(alkyl vinyl ether) (PAVE), chlorotrifluoroethylene (CTFE), trifluoroethylene, trifluoropropylene, tetrafluoropropylene, pentafluoropropylene, trifluorobutene, tetrafluoroisobutene, hexafluoroisobutene, vinyl fluoride, an iodine-containing fluorinated vinyl ether, and a fluorine-containing monomer (2) represented by the general formula: $CHX^1=CX^2Rf$, wherein one of $X^1$ and $X^2$ is H and the other is F, and Rf is a linear or branched fluoroalkyl group having 1 to 12 carbon atoms.

In the method for producing a partially fluorinated elastomer, it is preferable to polymerize at least vinylidene fluoride or tetrafluoroethylene as the fluoromonomer, and it is more preferable to polymerize vinylidene fluoride.

The polymer (I) is preferably added in an amount of 0.01 to 20% by mass based on 100% by mass of the aqueous medium. When the amount of the polymer (I) added in the polymerization (the amount present) is within the above range, the polymerization reaction of the fluoromonomer progresses smoothly, and the partially fluorinated elastomer can be produced efficiently. When the amount of the polymer (I) added is too small, a sufficient polymerization rate cannot be obtained or a sufficient yield cannot be obtained.

Since the polymerization reaction of the fluoromonomer progresses further smoothly, the amount of the polymer (I) added is more preferably 0.0001% by mass or more, even more preferably 0.0005% by mass or more, yet more preferably 0.001% by mass or more, particularly preferably 0.005% by mass or more, and most preferably 0.01% by mass or more, based on 100% by mass of the aqueous medium.

In addition, when the amount added is too large, effects commensurate with the amount added cannot be obtained, which is economically disadvantageous, and therefore, the amount of the polymer (I) added is more preferably 2% by mass or less, even more preferably 1% by mass or less, and particularly preferably 0.5% by mass or less, based on 100% by mass of the aqueous medium.

The polymerization of the fluoromonomer may be carried out in the presence of a polymerization initiator. The polymerization initiator is as described above. The amount of the polymerization initiator is determined as appropriate in

accordance with the types of the monomers, the molecular weight of the target partially fluorinated elastomer, and the reaction rate. The amount of the polymerization initiator is appropriately determined in accordance with the molecular weight of the target partially fluorinated elastomer and the polymerization reaction rate, and is preferably 0.00001 to 10% by mass, and more preferably 0.0001 to 1% by mass, based on 100% by mass of the total amount of the monomers.

The fluoroelastomer may be either a partially fluorinated elastomer or a perfluoroelastomer.

The partially fluorinated elastomer preferably contains a methylene group ($-CH_2-$) in the main chain. The partially fluorinated elastomer containing $-CH_2-$ in the main chain is not limited as long as it contains the chemical structure represented by $-CH_2-$, and examples include partially fluorinated elastomers containing the structure of $-CH_2-CF_2-$, $-CH_2-CH(CH_3)-$, $-CH_2-CH_2-$, $-CH_2-CF(CF_3)-$, or the like, which for example can be introduced into the main chain of the partially fluorinated elastomer by polymerizing vinylidene fluoride, propylene, ethylene, 2,3,3,3-tetrafluoropropylene, or the like. The content of the tetrafluoroethylene unit in the partially fluorinated elastomer (the content of the polymerized unit derived from tetrafluoroethylene based on all polymerized units of the partially fluorinated elastomer) may be less than 40 mol%.

The partially fluorinated elastomer preferably contains a monomer unit derived from at least one monomer selected from the group consisting of, for example, tetrafluoroethylene (TFE), vinylidene fluoride (VdF), and a perfluoroethylenically unsaturated compound (such as hexafluoropropylene (HFP) or perfluoro(alkyl vinyl ether) (PAVE)) represented by the general formula: $CF_2=CF-Rf^a$, wherein $Rf^a$ is $-CF_3$ or $-ORf^b$ (where $Rf^b$ is a perfluoroalkyl group having 1 to 5 carbon atoms). In particular, the partially fluorinated elastomer preferably contains a VdF unit or a TFE unit.

Examples of the partially fluorinated elastomer include vinylidene fluoride (VdF)-based fluoroelastomers, tetrafluoroethylene (TFE)/propylene (Pr)-based fluoroelastomers, tetrafluoroethylene (TFE)/propylene/vinylidene fluoride (VdF)-based fluoroelastomers, ethylene/hexafluoropropylene (HFP)-based fluoroelastomers, ethylene/hexafluoropropylene (HFP)/vinylidene fluoride (VdF)-based fluoroelastomers, ethylene/hexafluoropropylene (HFP)/tetrafluoroethylene (TFE)-based fluoroelastomers, and Et/TFE/PAVE-based fluoroelastomer. Of these, the partially fluorinated elastomer is preferably at least one selected from the group consisting of vinylidene fluoride-based fluoroelastomers and tetrafluoroethylene/propylene-based fluoroelastomers.

The vinylidene fluoride-based fluoroelastomer is preferably a copolymer comprising 45 to 85 mol% of vinylidene fluoride and 55 to 15 mol% of at least one other monomer copolymerizable with vinylidene fluoride. The vinylidene fluoride-based fluoroelastomer is more preferably a copolymer containing 50 to 80 mol% of vinylidene fluoride and 50 to 20 mol% of at least one other monomer copolymerizable with vinylidene fluoride.

Examples of the at least one other monomer copolymerizable with vinylidene fluoride include monomers such as tetrafluoroethylene (TFE), hexafluoropropylene (HFP), fluoroalkyl vinyl ethers, chlorotrifluoroethylene (CTFE), trifluoroethylene, trifluoropropylene, pentafluoropropylene, trifluorobutene, tetrafluoroisobutene, hexafluoroisobutene, vinyl fluoride, a fluoromonomer represented by the general formula (100): $CHX^{101}=CX^{102}Rf^{101}$ (wherein one of $X^{101}$ and $X^{102}$ is H and the other is F, and $Rf^{101}$ is a linear or branched fluoroalkyl group having 1 to 12 carbon atoms), a fluoromonomer represented by the general formula (170): $CH_2=CH-(CF_2)_n-X^{171}$ (wherein $X^{171}$ is H or F, and n is an integer of 3 to 10), and a monomer that provides a crosslinking site; and non-fluorinated monomers such as ethylene, propylene, and alkyl vinyl ethers. One of these may be used singly, or any combination thereof may be used. Of these, preferable is at least one selected from the group consisting of TFE, HFP, 2,3,3,3-tetrafluoropropene, fluoroalkyl vinyl ether, and CTFE. The fluoroalkyl vinyl ether is preferably a fluoromonomer represented by the general formula (160).

Specific examples of the vinylidene fluoride-based fluoroelastomers include VdF/HFP-based rubber, VdF/HFP/TFE-based rubber, VdF/CTFE-based rubber, VdF/CTFE/TFE-based rubber, rubber based on VdF and a fluoromonomer represented by the general formula (100), rubber based on VdF, a fluoromonomer represented by the general formula (100), and TFE, rubber based on VdF and perfluoro(methyl vinyl ether) (PMVE), VdF/PMVE/TFE-based rubber, and VdF/PMVE/TFE/HFP-based rubber. The rubber based on VdF and a fluoromonomer represented by the general formula (100) is preferably VdF/$CH_2=CFCF_3$-based rubber. The rubber based on VdF, a fluoromonomer represented by the general formula (100), and TFE is preferably VdF/TFE/$CH_2=CFCF_3$-based rubber.

The vinylidene fluoride-based fluoroelastomer is more preferably a VdF/HFP copolymer or a VdF/HFP/TFE copolymer, and particularly preferably one with the compositional features of VdF/HFP/TFE being (32 to 85)/(10 to 34)/(0 to 40) (mol%). The VdF/HFP/TFE composition is more preferably (32 to 85)/(15 to 34)/(0 to 34) (mol%), and even more preferably (47 to 81)/(17 to 32)/(0 to 28) (mol%).

For example, in the VdF/HFP copolymer, the compositional features of VdF/HFP are preferably (45 to 85)/(15 to 55) (mol%), more preferably (50 to 83)/(17 to 50) (mol%), even more preferably (55 to 81)/(19 to 45) (mol%), and particularly preferably (60 to 80)/(20 to 40) (mol%).

The VdF/$CH_2=CFCF_3$-based rubber is preferably a copolymer containing 40 to 99.5 mol% of VdF and 0.5 to 60 mol% of $CH_2=CFCF_3$, more preferably a copolymer containing 50 to 85 mol% of VdF and 20 to 50 mol% of $CH_2=CFCF_3$.

The VdF/TFE/PMVE-based rubber is preferably a copolymer having a VdF/TFE/PMVE ratio of (32 to 85)/(3 to 40)/(10 to 34) mol%, and more preferably a copolymer having a VdF/TFE/PMVE ratio of (45 to 81)/(4 to 30)/(16 to 28) mol%.

The Et/TFE/PAVE-based fluoroelastomer preferably has an Et/TFE/PAVE ratio of (10 to 40)/(32 to 60)/(20 to 40) (mol%), more preferably of (20 to 40)/(40 to 50)/(20 to 30) (mol%). PAVE is preferably PMVE.

The tetrafluoroethylene/propylene-based fluoroelastomer is preferably a copolymer containing 45 to 70 mol% of tetrafluoroethylene, 55 to 30 mol% of propylene, and 0 to 5 mol% of a fluoromonomer that provides a crosslinking site.

The fluoroelastomer may be a perfluoroelastomer. The perfluoroelastomer is preferably at least one selected from the group consisting of perfluoroelastomers containing TFE, such as a copolymer containing TFE and a fluoromonomer represented by the general formula (160), (130), or (140) and a copolymer containing TFE, a fluoromonomer represented by the general formula (160), (130), or (140), and a monomer that provides a crosslinking site.

In the case of the TFE/PMVE copolymer, the composition ratio thereof is preferably 45 to 90/10 to 55 (mol%), more preferably 55 to 80/20 to 45, and even more preferably 55 to 70/30 to 45.

In the case of the copolymer of TFE, PMVE, and a monomer that provides a crosslinking site, the composition ratio thereof is preferably 45 to 89.9/10 to 54.9/0.01 to 4 (mol%), more preferably 55 to 77.9/20 to 49.9/0.1 to 3.5, and even more preferably 55 to 69.8/30 to 44.8/0.2 to 3.

In the case of the copolymer of TFE and a fluoromonomer represented by the general formula (160), (130), or (140) having 4 to 12 carbon atoms, the composition ratio thereof is preferably 50 to 90/10 to 50 (mol%), more preferably 60 to 88/12 to 40, and even more preferably 65 to 85/15 to 35.

In the case of the copolymer of TFE, a fluoromonomer represented by the general formula (160), (130), or (140) having 4 to 12 carbon atoms, and a monomer that provides a crosslinking site, the composition ratio thereof is preferably 50 to 89.9/10 to 49.9/0.01 to 4 (mol%), more preferably 60 to 87.9/12 to 39.9/0.1 to 3.5, and even more preferably 65 to 84.8/15 to 34.8/0.2 to 3.

When these copolymers have a composition ratio outside these ranges, the properties as a rubber elastic body are lost, and the properties tend to be close to those of a resin.

The perfluoroelastomer is preferably at least one selected from the group consisting of copolymers of TFE, a fluoromonomer represented by the general formula (140), and a fluoromonomer that provides a crosslinking site, copolymers of TFE and a perfluorovinyl ether represented by the general formula (140), copolymers of TFE and a fluoromonomer represented by the general formula (160), and copolymers of TFE, a fluoromonomer represented by the general formula (160), and a monomer that provides a crosslinking site.

Examples of the perfluoroelastomer further include the perfluoroelastomers disclosed in documents such as International Publication No. WO97/24381, Japanese Patent Publication No. 61-57324, Japanese Patent Publication No. 04-81608, and Japanese Patent Publication No. 05-13961.

From the viewpoint of achieving an excellent compression set at high temperature, the fluoroelastomer preferably has a glass transition temperature of -70°C or higher, more preferably -60°C or higher, and even more preferably -50°C or higher. From the viewpoint of achieving good low-temperature resistance, the glass transition temperature is preferably 5°C or lower, more preferably 0°C or lower, and even more preferably -3°C or lower.

The glass transition temperature is determined as follows: using a differential scanning calorimeter (DSC822e, manufactured by Mettler Toledo), a DSC curve is obtained by heating 10 mg of a sample at 10 °C/min; and the glass transition temperature is read at the point of the maximum value in the differential curve of the DSC curve at the time of secondary transition.

From the viewpoint of achieving good heat resistance, the fluoroelastomer preferably has a Mooney viscosity ML(1+20) at 170°C of 30 or higher, more preferably 40 or higher, and even more preferably 50 or higher. From the viewpoint of achieving good processability, the Mooney viscosity is preferably 150 or lower, more preferably 120 or lower, and even more preferably 110 or lower.

From the viewpoint of achieving good heat resistance, the fluoroelastomer preferably has a Mooney viscosity ML(1+20) at 140°C of 30 or higher, more preferably 40 or higher, and even more preferably 50 or higher. From the viewpoint of achieving good processability, the Mooney viscosity is preferably 180 or lower, more preferably 150 or lower, and even more preferably 110 or lower.

From the viewpoint of achieving good heat resistance, the fluoroelastomer preferably has a Mooney viscosity ML(1+10) at 100°C of 10 or higher, more preferably 20 or higher, and even more preferably 30 or higher. From the viewpoint of achieving good processability, the Mooney viscosity is preferably 120 or lower, more preferably 100 or lower, and even more preferably 80 or lower.

The Mooney viscosity can be determined using a Mooney viscometer MV2000E manufactured by Alpha Technologies Inc. at 170°C, 140°C, or 100°C in accordance with JIS K 6300.

The fluoroelastomer obtained by the production method of the present disclosure may be in any form as long as it is obtainable by the polymerization. The fluoroelastomer may be in the form of an aqueous dispersion as polymerized, or may be used in the form of a gum or a crumb obtained by conventionally known coagulation, drying, and any other treatment on the aqueous dispersion as polymerized. The polymer (I) used in the production method of the present disclosure can improve the stability of the aqueous dispersion, and is more preferably used in a polymerization method in which substances insoluble in water such as an initiator, including an organic peroxide, and a chain transfer agent,

including an iodine or bromine compound, are added during the polymerization defined as described above.

The gum is a small particulate mass of the fluoroelastomer. The crumb is an amorphous mass of the fluoroelastomer resulting from fusion of particles that cannot maintain the form of small particles as gum at room temperature.

The fluoroelastomer may be mixed with an additive such as a curing agent and a filler to be processed into a fluoroelastomer composition.

Examples of the curing agent include polyols, polyamines, organic peroxides, organotins, bis(aminophenol) tetraamine, and bis(thioaminophenol).

The fluoroelastomer may be molded to form a fluoroelastomer molded body. The molding may be performed by any method without limitation such as a known method using the above-described curing agent. Examples of the molding method include, but are not limited to, compression molding, cast molding, injection molding, injection molding, extrusion molding, and molding by Rotocure.

When the fluoroelastomer composition contains a curing agent (cross-linking agent), by crosslinking the fluoroelastomer composition, a crosslinked product can be obtained as the fluoroelastomer molded body. As for the crosslinking method, steam crosslinking, crosslinking by heating, radiation crosslinking, and other methods can be adopted, and among them, steam crosslinking and crosslinking by heating are preferable. Non-limiting specific crosslinking conditions may be determined as appropriate in accordance with the types of crosslinking accelerator, cross-linking agent, acid acceptor, and others, usually within a temperature range of 140 to 250°C and a crosslinking time of 1 minute to 24 hours.

The fluoroelastomer molded body is suitable for seals, gaskets, electric wire coatings, hoses, tubes, laminated products, and accessories, particularly parts for semiconductor manufacturing devices and automobile parts.

In the production method of the present disclosure, when the fluoropolymer is subjected to coagulation, washing, drying, or the like, discharge water or off gas is generated. The polymer (I), decomposition products and by-products by-produced from the polymer (I), residual monomers, and the like may be collected from discharge water generated in the coagulation or the washing and/or from off gas generated in the drying, and then purified to reuse the polymer (I), the decomposition products and by-products by-produced from the polymer (I), the residual monomers, and the like. Although the method for carrying out the above collection and purification is not limited, it may be carried out by a known method. For example, they may be performed by the methods disclosed in National Publication of International Patent Application No. 2011-520020. Examples thereof further include the methods disclosed in U.S. Patent Application Publication No. 2007/15937, U.S. Patent Application Publication No. 2007/25902, and U.S. Patent Application Publication No. 2007/27251. Specific examples of the methods are as follows.

An example of the method of collecting the polymer (I), the decomposition products and by-products of the polymer (I) by-produced from the polymer (I), the residual monomers, and the like from discharge water is a method in which the discharge water is brought into contact with adsorbent particles formed of ion exchange resin, activated carbon, silica gel, clay, zeolite, or the like, so that the particles are allowed to adsorb the polymer (I) and the others, and the discharge water and the adsorbent particles are then separated. Incinerating the adsorbent particles having adsorbed the polymer (I) and the like can prevent emission of the polymer (I) and the like into the environment.

Alternatively, the polymer (I) and the others may be removed and eluted by a known method from the ion exchange resin particles having adsorbed the polymer (I) and the others, and collected. For example, in the case of using anion exchange resin particles as the ion exchange resin particles, the polymer (I) and the others can be eluted by bringing a mineral acid into contact with an anion exchange resin. When a water-soluble organic solvent is added to the resulting eluate, the mixture is usually separated into two phases. Since the lower phase contains the polymer (I) and the others, it is possible to collect the polymer (I) and the others by collecting and neutralizing the lower phase. Examples of the water-soluble organic solvent include polar solvents such as alcohols, ketones, and ethers.

Other methods of collecting the polymer (I) and the others from ion exchange resin particles include a method of using an ammonium salt and a water-soluble organic solvent and a method of using an alcohol and, if necessary, an acid. In the latter method, ester derivatives of the polymer (I) and the others are generated, and thus, they can easily be separated from the alcohol by distillation.

When the discharge water contains fluoropolymer particles and other solids, they are preferably removed before the discharge water and the adsorbent particles are brought into contact with each other. Examples of methods of removing the fluoropolymer particles and other solids include a method of adding an aluminum salt, for example, to deposit these components, and then separating the discharge water and the deposits, and an electrocoagulation method. The components may also be removed by a mechanical method, and examples thereof include a crossflow filtration method, a depth filtration method, and a precoat filtration method.

From the viewpoint of productivity, the discharge water preferably contains the fluoropolymer in a non-agglomerated form in a low concentration, more preferably less than 0.4% by mass, and particularly preferably less than 0.3% by mass.

An example of the method of collecting the polymer (I) and the others from the off gas is a method in which a

scrubber is brought into contact with deionized water, an alkaline aqueous solution, an organic solvent such as a glycol ether solvent, or the like to provide a scrubber solution containing the polymer (I) and the others. When the alkaline aqueous solution used is a highly concentrated alkaline aqueous solution, the scrubber solution can be collected in a state where the polymer (I) and the others are phase-separated, and thus the polymer (I) and the others can be easily collected and reused. Examples of the alkali compound include alkali metal hydroxides and quaternary ammonium salts.

The scrubber solution containing the polymer (I) and the others may be concentrated using a reverse osmosis membrane, for example. The concentrated scrubber solution usually contains fluoride ions. Still, the fluoride ions may be removed by adding alumina after the concentration so that the polymer (I) and the others can easily be reused. Alternatively, the scrubber solution may be brought into contact with adsorbent particles so that the adsorbent particles can adsorb the polymer (I) and the others, and thereby the polymer (I) and the others may be collected by the aforementioned method.

The polymer (I) and the others collected by any of the methods may be reused in the production of fluoropolymer.

While embodiments have been described above, it will be understood that various changes in form and detail can be made without departing from the gist and scope of the claims.

<1> The first aspect of the present disclosure provides
a method for producing a fluoropolymer aqueous dispersion, the method comprising:

polymerizing a fluoromonomer in an aqueous medium in the presence of a polymer (I) containing a polymerization unit (I) derived from a monomer (I) represented by the general formula (I) to obtain a polymerization dispersion containing a fluoropolymer excluding the polymer (I), the polymer (I), and the aqueous medium, then
mixing the polymerization dispersion, a nonionic surfactant, and a fluorine-free water-soluble electrolyte to prepare an unconcentrated composition, and
concentrating the unconcentrated composition to thereby obtain an aqueous dispersion containing the fluoropolymer:

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

<2> The second aspect of the present disclosure provides
the production method according to the first aspect, wherein a surface tension of an aqueous solution containing 0.1% by mass of the fluorine-free water-soluble electrolyte is larger than 60 mN/m.
<3> The third aspect of the present disclosure provides
the production method according to the first or second aspect, wherein the fluorine-free water-soluble electrolyte is at least one selected from the group consisting of monovalent to trivalent acids and a salt thereof.
<4> The fourth aspect of the present disclosure provides
the production method according to any of the first to third aspects, wherein the fluorine-free water-soluble electrolyte is at least one selected from the group consisting of carbonic acid, carbonate, sulfuric acid, sulfate, oxalic acid, oxalate, a carboxylic acid represented by the general formula (11) and a salt thereof, and a sulfonic acid represented by the general formula (12) and a salt thereof:

the general formula (11): $R^1\text{-}(COOH)_n$

wherein $R^1$ is a monovalent to trivalent organic group having 1 to 10 carbon atoms, and n is an integer of 1 to 3,

the general formula (12): $R^2\text{-}(SO_3H)_z$

wherein $R^2$ is a monovalent to trivalent organic group having 1 to 10 carbon atoms, and z is an integer of 1 to 3.
<5> The fifth aspect of the present disclosure provides
the production method according to the fourth aspect, wherein pyrolysis temperatures of the carboxylic acid represented by the general formula (11) and the salt thereof, and the sulfonic acid represented by the general formula (12) and the salt thereof are lower than 220°C.
<6> The sixth aspect of the present disclosure provides
the production method according to any of the first to fifth aspects, wherein the fluorine-free water-soluble electrolyte is at least one selected from the group consisting of sulfuric acid, citric acid, succinic acid, carbonic acid, tartaric acid,

maleic acid, malic acid, oxalic acid, malonic acid, and a salt thereof.

<7> The seventh aspect of the present disclosure provides

the production method according to any of the first to sixth aspects, wherein the fluorine-free water-soluble electrolyte is at least one selected from the group consisting of ammonium sulfate and ammonium citrate.

<8> The eighth aspect of the present disclosure provides

the production method according to any of the first to seventh aspects, wherein a content of the fluorine-free water-soluble electrolyte in the unconcentrated composition is 0.01% by mass or more and 5.0% by mass or less based on the fluoropolymer.

<9> The nineth aspect of the present disclosure provides

the production method according to any of the first to eighth aspects, wherein the nonionic surfactant is at least one selected from the group consisting of a nonionic surfactant represented by the general formula (i) and a nonionic surfactant represented by the general formula (ii):

$$R^6\text{-O-}A^1\text{-H} \qquad (i)$$

wherein $R^6$ is a linear or branched primary or secondary alkyl group having 8 to 18 carbon atoms, and $A^1$ is a polyoxyalkylene chain; and

$$R^7\text{-}C_6H_4\text{-O-}A^2\text{-H} \qquad (ii)$$

wherein $R^7$ is a linear or branched alkyl group having 4 to 12 carbon atoms, and $A^2$ is a polyoxyalkylene chain.

<10> The tenth aspect of the present disclosure provides

the production method according to any of the first to nineth aspects, wherein the unconcentrated composition is concentrated by phase separation concentration.

<11> The eleventh aspect of the present disclosure provides

the production method according to any of the first to tenth aspects, wherein the fluoromonomer is polymerized substantially in the absence of a fluorine-containing surfactant.

<12> The twelfth aspect of the present disclosure provides

the production method according to any of the first to eleventh aspects, wherein the fluoropolymer is a polytetrafluoroethylene.

<13> The thirteenth aspect of the present disclosure provides

the production method according to any of the first to twelfth aspects, wherein

the polymer (I) is a polymer (1) containing a polymerization unit (1) derived from a monomer represented by the general formula (1),

the nonionic surfactant is a nonionic surfactant represented by the general formula (i),

a content of the nonionic surfactant in the unconcentrated composition is 1.0 to 40% by mass based on the fluoropolymer,

the fluorine-free water-soluble electrolyte is at least one selected from the group consisting of ammonium sulfate and ammonium citrate,

a content of the fluorine-free water-soluble electrolyte in the unconcentrated composition is 0.2% by mass or more and 5.0% by mass or less based on the fluoropolymer,

the fluoropolymer is a polytetrafluoroethylene,

a content of the fluoropolymer in the unconcentrated composition is 8 to 50% by mass, and

the unconcentrated composition is concentrated by phase separation concentration:

$$CX_2\text{=CY(-}CZ_2\text{-O-Rf-A)} \qquad (1)$$

wherein X is the same or different and is -H or -F; Y is -H, - F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, $-SO_3M$, $-OSO_3M$, or $-C(CF_3)_2OM$, wherein M is -H, a metal atom,- $NR^7_4$, optionally substituted imidazolium, optionally substituted pyridinium, or optionally substituted phosphonium, and $R^7$ is H or an organic group; provided that at least one of X, Y, and Z contains a fluorine atom,

$$R^6\text{-O-}A^1\text{-H} \qquad (i)$$

wherein $R^6$ is a linear or branched primary or secondary alkyl group having 8 to 18 carbon atoms, and $A^1$ is a

polyoxyalkylene chain.

<14> The fourteenth aspect of the present disclosure provides

a fluoropolymer aqueous dispersion comprising
a polymer (I) comprising a polymerization unit (I) derived from a monomer (I) represented by the general formula (I) ;
a fluoropolymer;
a nonionic surfactant; and
an aqueous medium,

wherein

a content of the polymer (I) is 500 mass ppm or less based on the fluoropolymer aqueous dispersion,
the fluoropolymer aqueous dispersion has a viscosity at 25°C of 100 mPa·s or less,
an anionic charge density of a polymer particle of the fluoropolymer is 8.0 to 40 μeq/g,
a content of the fluoropolymer is 50% by mass or more and 75% by mass or less based on the fluoropolymer aqueous dispersion, and
a content of the nonionic surfactant is 1.0% by mass or more and 12% by mass or less based on the fluoropolymer:

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

<15> The fifteenth aspect of the present disclosure provides
the fluoropolymer aqueous dispersion according to the fourteenth aspect, wherein a range of decrease in pH after 6 months from initial pH of the fluoropolymer aqueous dispersion is less than 1.0.

## EXAMPLES

Next, embodiments of the present disclosure will now be described by way of Examples, but the present disclosure is not limited only to the Examples.

Various numerical values in the Examples were measured by the following methods.

<PTFE solid concentration (content) in aqueous dispersion>

The PTFE solid concentration (P% by mass) in an aqueous dispersion was calculated from the formula: P= [Z/X]×100 (% by mass) from the heating residue (Y g) obtained by heating about 1 g (X g) of a sample in an aluminum cup having a diameter of 5 cm at 110°C for 30 minutes and the heating residue (Z g) obtained by heating the obtained heating residue (Y g) at 300°C for 30 minutes.

<Content of nonionic surfactant>

The content (N% by mass) of the nonionic surfactant in the aqueous dispersion based on PTFE was calculated from the formula : N=[(Y-Z)/Z]×100 (% by mass) from the heating residue (Y g) obtained by heating about 1 g (X g) of a sample in an aluminum cup having a diameter of 5 cm at 110°C for 30 minutes and the heating residue (Z g) obtained by heating the obtained heating residue (Y g) at 300°C for 30 minutes.

<Standard specific gravity (SSG)>

Using a sample molded in accordance with ASTM D 4895-89, the SSG was determined by the water replacement method in accordance with ASTM D 792.

<Content of polymer (I) in supernatant phase>

A predetermined amount of sodium trifluoroacetate was added to the supernatant phase, and $^{19}F$ NMR

measurement was performed. From the peak area values of sodium trifluoroacetate and the polymer (I), the content ($T_S$% by mass) of the polymer (I) in the supernatant phase was determined.

<Content of polymer (I) in PTFE aqueous dispersion>

The content ($T_D$% by mass) of the polymer (I) in the PTFE aqueous dispersion based on PTFE was determined by the following formula:

$$T_D = T_A - W_S \times T_S / W_A$$

$T_A$ (% by mass): Content of polymer (I) in PTFE aqueous dispersion obtained in each Production Example based on PTFE
$T_S$ (% by mass): Content of polymer (I) in supernatant phase
$W_S$ (g): Mass of supernatant phase
$W_A$ (g): Mass of PTFE in aqueous dispersion before concentration

(i.e., mass of PTFE in condensed phase)

<Viscosity>

Using a B-type rotary viscometer (manufactured by Toki Sangyo Co., Ltd., rotor No. 1), the viscosity at 25°C was measured under conditions of a rotation speed of 60 rpm and a measurement time of 120 seconds.

<pH>

The pH was measured at 25°C in accordance with JIS K6893.

<Surface tension>

Using a surface tensiometer DY-300 manufactured by Kyowa Interface Science Co., Ltd., the surface tension of a 0.1% aqueous solution was measured by the Wilhelmy method at 25°C.

<Anionic charge density of polymer particle>

The anionic charge density was measured using a charge meter for particles (manufactured by BTG, PCD-06). Specifically, an aqueous dispersion was diluted with water such that a PTFE solid concentration was 0.2% by mass. A measurement container containing 10 mL of the diluted sample was loaded in the charge meter for particles, and a cationic polymer electrolyte solution (diallyl dimethyl ammonium chloride) was added dropwise thereto to determine the anionic charge density.
The surfactants used in the Examples are as follows.

Surfactant (a): Polyoxyethylene alkyl ether $C_{13}H_{27}$-O-$(C_2H_4O)_n$-H (cloud point 56°C)
Surfactant (b): Polyoxyethylene tridecyl alcohol $C_{13}H_{27}$-O-$(C_2H_4O)_n$-H (cloud point >100°C)

The polymers (I) used in the Examples are as follows.

Polymer H: Homopolymer of monomer D represented by formula: $CH_2$=CF($CF_2$OCFC$F_3$COOH) (number average molecular weight $12.2\times10^4$, weight-average molecular weight $46.0\times10^4$)
The number average molecular weight and the weight average molecular weight were determined by performing measurement by gel permeation chromatography (GPC) using GPC HLC-8020 manufactured by Tosoh Corporation, using Shodex columns manufactured by SHOWA DENKO K.K. (one GPC KF-801, one GPC KF-802, and two GPC KF-806M connected in series), and allowing tetrahydrofuran (THF) to flow at a flow rate of 1 ml/min as the solvent, and by calculating the molecular weights using monodisperse polystyrene as the standard.

Production Example 1

To an SUS reactor having an internal volume of 6 L and equipped with a stirrer, 3,448 g of deionized water, 180 g of

paraffin wax, and 70 g of a 5.0% by mass aqueous solution of polymer H were added. Aqueous ammonia was added to regulate the pH to 8.7. Then, the contents of the reactor were suctioned while being heated to 70°C and, at the same time, the reactor was purged with TFE to remove oxygen in the reactor, and the contents were stirred. After adding 2.4 g of HFP and 0.001 g of the surfactant (b) to the reactor, TFE was added until the pressure reached 0.73 MPaG. Then, 32.2 mg of ammonium persulfate (APS) and 537 mg of disuccinic peroxide (DSP) dissolved in 20 g of deionized water were added, and the reactor was pressurized to 0.83 MPaG. The total amount of water added to the reactor is 3,580 g. After the initiator was added, the pressure dropped, and the initiation of polymerization was observed. TFE was added to the reactor to maintain a constant pressure of 0.78 MPaG. When TFE consumed in the reaction reached about 180 g, the supply of TFE and stirring were stopped. Subsequently, the gas in the reactor was slowly released until the pressure of the reactor reached 0.02 MPaG. Thereafter, TFE was supplied until the pressure of the reactor was 0.78 MPaG, and stirring was started again to continue the reaction. When TFE consumed in the reaction reached about 1,540 g, the feeding of TFE was stopped, stirring was stopped, and thus the reaction was terminated. Thereafter, the reactor was evacuated until the pressure in the reactor reached normal pressure, and the contents were taken out from the reactor and cooled. The supernatant paraffin wax was removed to obtain a PTFE aqueous dispersion.

The solid concentration of the PTFE aqueous dispersion was 30.0% by mass. The polymer H content in the PTFE aqueous dispersion B was 0.23% by mass based on PTFE.

The PTFE aqueous dispersion was diluted with deionized water to have a solid concentration of about 10% by mass and coagulated under a high-speed stirring condition. The resulting wet powder was dried at 210°C for 18 hours. The resulting PTFE powder had an SSG of 2.201.

Example 1

To the PTFE aqueous dispersion prepared in Production Example 1 were added 14 parts by mass of a surfactant (a) and 0.3 parts by mass of ammonium citrate (surface tension: 73 mN/m, pyrolysis temperature: 145°C) based on 100 parts by mass of PTFE, then water was added such that the solid concentration was 25% by mass, and the mixture was added to a capped test tube. The test tube was heated in a constant-temperature water bath at 56°C. When it was confirmed that the contents of the test tube reached 56°C, and the mixture was allowed to stand still to start concentration, phase separation began (divided into a supernatant phase and a condensed phase). The time required for the solid concentration of the condensed phase to exceed 60% by mass was 15 minutes. The solid concentration of the condensed phase during the course of concentration is a value converted from the liquid levels of the supernatant phase and the condensed phase. Heating was terminated 60 minutes after the beginning of concentration, and the supernatant phase and the condensed phase were recovered to give a supernatant phase 1 and a PTFE aqueous dispersion 1, respectively. The resulting PTFE aqueous dispersion 1 had a solid concentration of 69.3% by mass and a surfactant (a) content of 2.9% by mass based on PTFE. Moreover, the resulting PTFE aqueous dispersion 1 had a polymer H content of 0.04% by mass (400 mass ppm) based on PTFE. Also, the polymer H content was 280 mass ppm based on the PTFE aqueous dispersion 1.

Preparation Example 1

Individual components were stirred and mixed according to the following composition to obtain a PTFE aqueous dispersion 1-1.

PTFE aqueous dispersion 1

4.4 parts by mass of surfactant (a)/100 parts by mass of PTFE
1.1 parts by mass of surfactant (b)/100 parts by mass of PTFE
0.1 parts by mass of decanoic acid/100 parts by mass of PTFE
Water
Ammonia water was added so as to attain pH 10.

The resulting PTFE aqueous dispersion 1-1 had a solid concentration of 60.0% by mass and a nonionic surfactant content of 5.7% by mass based on PTFE. The viscosity at 25°C was 30.1 mPa·s, the pH was 10.1, and the anionic charge density of the polymer particle was 11.2 μeq/g.

The resulting PTFE aqueous dispersion 1-1 was allowed to stand still at 40°C, and the pH of the PTFE aqueous dispersion 1-1 was measured. The results are shown below.

pH immediately after preparation: 10.1
pH after 1 month: 10.1 (amount of change: 0)
pH after 6 months: 10.0 (amount of change: -0.1)

Example 2

Concentration was performed by the same procedures as Example 1 except that the amount of ammonium citrate added was changed to 1.5 parts by mass. The time required for the solid concentration of the condensed phase to exceed 60% by mass was 10 minutes. Heating was terminated 60 minutes after the beginning of concentration, and the supernatant phase and the condensed phase were recovered to give a supernatant phase 2 and a PTFE aqueous dispersion 2, respectively. The resulting PTFE aqueous dispersion 2 had a solid concentration of 68.9% by mass and a surfactant (a) content of 3.0% by mass based on PTFE.

Example 3

Concentration was performed by the same procedures as Example 1 except that the amount of the surfactant (a) added was changed to 12 parts by mass; and 1.0 part by mass of ammonium sulfate (surface tension: 72 mN/m, pyrolysis temperature: 120°C) was used instead of 0.3 parts by mass of ammonium citrate. The time required for the solid concentration of the condensed phase to exceed 60% by mass was 10 minutes. Heating was terminated 60 minutes after the beginning of concentration, and the supernatant phase and the condensed phase were recovered to give a supernatant phase 3 and a PTFE aqueous dispersion 3, respectively. The resulting PTFE aqueous dispersion 3 had a solid concentration of 69.9% by mass and a surfactant (a) content of 2.7% by mass based on PTFE.

Example 4

Concentration was performed by the same procedures as Example 1 except that 0.4 parts by mass of ammonium carbonate (surface tension: 73 mN/m) were used instead of 0.3 parts by mass of ammonium citrate. The time required for the solid concentration of the condensed phase to exceed 60% by mass was 10 minutes. Heating was terminated 60 minutes after the beginning of concentration, and the supernatant phase and the condensed phase were recovered to give a supernatant phase 4 and a PTFE aqueous dispersion 4, respectively. The resulting PTFE aqueous dispersion 4 had a solid concentration of 70.3% by mass and a surfactant (a) content of 3.1% by mass based on PTFE.

Example 5

Concentration was performed by the same procedures as Example 1 except that 0.4 parts by mass of succinic acid (surface tension: 73 mN/m, pyrolysis temperature: 167°C) were used instead of 0.3 parts by mass of ammonium citrate. The time required for the solid concentration of the condensed phase to exceed 60% by mass was 10 minutes. Heating was terminated 60 minutes after the beginning of concentration, and the supernatant phase and the condensed phase were recovered to give a supernatant phase 5 and a PTFE aqueous dispersion 5, respectively. The resulting PTFE aqueous dispersion 5 had a solid concentration of 70.0% by mass and a surfactant (a) content of 3.1% by mass based on PTFE.

Example 6

Concentration was performed by the same procedures as Example 1 except that 0.4 parts by mass of maleic acid (surface tension: 73 mN/m, pyrolysis temperature: 121°C) were used instead of 0.3 parts by mass of ammonium citrate. The time required for the solid concentration of the condensed phase to exceed 60% by mass was 10 minutes. Heating was terminated 60 minutes after the beginning of concentration, and the supernatant phase and the condensed phase were recovered to give a supernatant phase 6 and a PTFE aqueous dispersion 6, respectively. The resulting PTFE aqueous dispersion 6 had a solid concentration of 70.1% by mass and a surfactant (a) content of 3.1% by mass based on PTFE.

Comparative Example 1

Concentration was performed by the same procedures as Example 1 except that no ammonium citrate was added. The time required for the solid concentration of the condensed phase to exceed 60% by mass was 120 minutes. Heating was terminated 240 minutes after the beginning of concentration, and the supernatant phase and the condensed phase were recovered to give a supernatant phase C1 and a PTFE aqueous dispersion C1, respectively. The resulting PTFE aqueous dispersion C1 had a solid concentration of 66.0% by mass and a surfactant (a) content of 3.5% by mass

based on PTFE. Moreover, the resulting PTFE aqueous dispersion C1 had a polymer H content of 0.10% by mass (1000 mass ppm) based on PTFE. Also, the polymer H content was 660 mass ppm based on the aqueous dispersion C1.

Preparation Example 2 for comparison

Individual components were stirred and mixed according to the following composition to obtain a PTFE aqueous dispersion C1-1.

PTFE aqueous dispersion C1

4.4 parts by mass of surfactant (a)/100 parts by mass of PTFE
1.1 parts by mass of surfactant (b)/100 parts by mass of PTFE
0.1 parts by mass of decanoic acid/100 parts by mass of PTFE
Water
Ammonia water was added so as to attain pH 10.

The resulting PTFE aqueous dispersion C1-1 had a solid concentration of 60.0% by mass and a nonionic surfactant content of 5.8% by mass based on PTFE. The viscosity at 25°C was 32.3 mPa·s, the pH was 10.1, and the anionic charge density of the polymer particle was 6.9 μeq/g.

The resulting PTFE aqueous dispersion C1-1 was allowed to stand still at 40°C, and the pH of the PTFE aqueous dispersion C1-1 was measured. The results are shown below.

pH immediately after preparation: 10.1
pH after 1 month: 9.7 (amount of change: -0.4)
pH after 6 months: 8.9 (amount of change: -1.2)

As is evident from these results, the addition of a fluorine-free water-soluble organic electrolyte and a nonionic surfactant to a fluoropolymer aqueous dispersion can promptly increase the concentration of the fluoropolymer in the fluoropolymer aqueous dispersion, and in addition, the resulting fluoropolymer aqueous dispersion is unlikely to undergo decrease in pH even if stored over a long period.

## Claims

**1.** A method for producing a fluoropolymer aqueous dispersion, the method comprising:

polymerizing a fluoromonomer in an aqueous medium in the presence of a polymer (I) containing a polymerization unit (I) derived from a monomer (I) represented by the general formula (I) to obtain a polymerization dispersion containing a fluoropolymer excluding the polymer (I), the polymer (I), and the aqueous medium, then
mixing the polymerization dispersion, a nonionic surfactant, and a fluorine-free water-soluble electrolyte to prepare an unconcentrated composition, and
concentrating the unconcentrated composition to thereby obtain an aqueous dispersion containing the fluoropolymer:

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

**2.** The production method according to claim 1, wherein a surface tension of an aqueous solution containing 0.1% by mass of the fluorine-free water-soluble electrolyte is larger than 60 mN/m.

**3.** The production method according to claim 1 or 2, wherein the fluorine-free water-soluble electrolyte is at least one selected from the group consisting of monovalent to trivalent acids and a salt thereof.

4. The production method according to any of claims 1 to 3, wherein the fluorine-free water-soluble electrolyte is at least one selected from the group consisting of carbonic acid, carbonate, sulfuric acid, sulfate, oxalic acid, oxalate, a carboxylic acid represented by the general formula (11) and a salt thereof, and a sulfonic acid represented by the general formula (12) and a salt thereof:

the general formula (11): $R^1\text{-}(COOH)_n$

wherein $R^1$ is a monovalent to trivalent organic group having 1 to 10 carbon atoms, and n is an integer of 1 to 3,

the general formula (12): $R^2\text{-}(SO_3H)_z$

wherein $R^2$ is a monovalent to trivalent organic group having 1 to 10 carbon atoms, and z is an integer of 1 to 3.

5. The production method according to claim 4, wherein pyrolysis temperatures of the carboxylic acid represented by the general formula (11) and the salt thereof, and the sulfonic acid represented by the general formula (12) and the salt thereof are lower than 220°C.

6. The production method according to any of claims 1 to 5, wherein the fluorine-free water-soluble electrolyte is at least one selected from the group consisting of sulfuric acid, citric acid, succinic acid, carbonic acid, tartaric acid, maleic acid, malic acid, oxalic acid, malonic acid, and a salt thereof.

7. The production method according to any of claims 1 to 6, wherein the fluorine-free water-soluble electrolyte is at least one selected from the group consisting of ammonium sulfate and ammonium citrate.

8. The production method according to any of claims 1 to 7, wherein a content of the fluorine-free water-soluble electrolyte in the unconcentrated composition is 0.01% by mass or more and 5.0% by mass or less based on the fluoropolymer.

9. The production method according to any of claims 1 to 8, wherein the nonionic surfactant is at least one selected from the group consisting of a nonionic surfactant represented by the general formula (i) and a nonionic surfactant represented by the general formula (ii):

$R^6\text{-}O\text{-}A^1\text{-}H$ (i)

wherein $R^6$ is a linear or branched primary or secondary alkyl group having 8 to 18 carbon atoms, and $A^1$ is a polyoxyalkylene chain; and

$R^7\text{-}C_6H_4\text{-}O\text{-}A^2\text{-}H$ (ii)

wherein $R^7$ is a linear or branched alkyl group having 4 to 12 carbon atoms, and $A^2$ is a polyoxyalkylene chain.

10. The production method according to any of claims 1 to 9, wherein the unconcentrated composition is concentrated by phase separation concentration.

11. The production method according to any of claims 1 to 10, wherein the fluoromonomer is polymerized substantially in the absence of a fluorine-containing surfactant.

12. The production method according to any of claims 1 to 11, wherein the fluoropolymer is polytetrafluoroethylene.

13. The production method according to any of claims 1 to 12, wherein

the polymer (I) is a polymer (1) containing a polymerization unit (1) derived from a monomer represented by the general formula (1),
the nonionic surfactant is a nonionic surfactant represented by the general formula (i),
a content of the nonionic surfactant in the unconcentrated composition is 1.0 to 40% by mass based on the fluoropolymer,
the fluorine-free water-soluble electrolyte is at least one selected from the group consisting of ammonium sulfate and ammonium citrate,

a content of the fluorine-free water-soluble electrolyte in the unconcentrated composition is 0.2% by mass or more and 5.0% by mass or less based on the fluoropolymer,
the fluoropolymer is polytetrafluoroethylene,
a content of the fluoropolymer in the unconcentrated composition is 8 to 50% by mass, and
the unconcentrated composition is concentrated by phase separation concentration:

$$CX_2=CY(-CZ_2-O-Rf-A) \qquad (1)$$

wherein X is the same or different and is -H or -F; Y is -H, - F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, $-SO_3M$, $-OSO_3M$, or $-C(CF_3)_2OM$, wherein M is -H, a metal atom,- $NR^7_4$, optionally substituted imidazolium, optionally substituted pyridinium, or optionally substituted phosphonium, and $R^7$ is H or an organic group; provided that at least one of X, Y, and Z contains a fluorine atom,

$$R^6-O-A^1-H \qquad (i)$$

wherein $R^6$ is a linear or branched primary or secondary alkyl group having 8 to 18 carbon atoms, and $A^1$ is a polyoxyalkylene chain.

**14.** A fluoropolymer aqueous dispersion comprising

a polymer (I) comprising a polymerization unit (I) derived from a monomer (I) represented by the general formula (I) ;
a fluoropolymer;
a nonionic surfactant; and
an aqueous medium,

wherein

a content of the polymer (I) is 500 mass ppm or less based on the fluoropolymer aqueous dispersion,
the fluoropolymer aqueous dispersion has a viscosity at 25°C of 100 mPa·s or less,
an anionic charge density of a polymer particle of the fluoropolymer is 8.0 to 40 μeq/g,
a content of the fluoropolymer is 50% by mass or more and 75% by mass or less based on the fluoropolymer aqueous dispersion, and
a content of the nonionic surfactant is 1.0% by mass or more and 12% by mass or less based on the fluoropolymer:

$$CX^1X^3=CX^2R(-CZ^1Z^2-A^0)^m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

**15.** The fluoropolymer aqueous dispersion according to claim 14, wherein a range of decrease in pH after 6 months from initial pH of the fluoropolymer aqueous dispersion is less than 1.0.

**INTERNATIONAL SEARCH REPORT**

International application No.
**PCT/JP2024/020079**

**A. CLASSIFICATION OF SUBJECT MATTER**

***C08F 14/18***(2006.01)i; ***C08F 2/30***(2006.01)i; ***C08F 214/18***(2006.01)i; ***C08F 259/02***(2006.01)i; ***C08F 259/08***(2006.01)i; ***C08L 27/12***(2006.01)i
FI: C08F14/18; C08F2/30; C08F214/18; C08F259/02; C08F259/08; C08L27/12

According to International Patent Classification (IPC) or to both national classification and IPC

**B. FIELDS SEARCHED**

Minimum documentation searched (classification system followed by classification symbols)

C08F14/18; C08F2/30; C08F214/18; C08F259/02; C08F259/08; C08L27/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>A | WO 2022/191286 A1 (DAIKIN INDUSTRIES, LTD.) 15 September 2022 (2022-09-15) claims, examples, paragraphs [0052], [0064], [0427], [0430] | 1, 3-4, 8-12, 14-15<br><br>2, 5-7, 13 |
| A | WO 2012/133655 A1 (DAIKIN INDUSTRIES, LTD.) 04 October 2012 (2012-10-04) claims, examples | 1-15 |
| A | JP 10-7863 A (DAIKIN INDUSTRIES, LTD.) 13 January 1998 (1998-01-13) claims, examples | 1-15 |
| A | JP 2012-214766 A (DAIKIN INDUSTRIES, LTD.) 08 November 2012 (2012-11-08) claims, examples | 1-15 |
| A | WO 2020/218618 A1 (DAIKIN INDUSTRIES, LTD.) 29 October 2020 (2020-10-29) claims, examples | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 August 2024** | **27 August 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/020079**

**C. DOCUMENTS CONSIDERED TO BE RELEVANT**

| Category* | Citation of document, with indication, where appropriate, of the relevant passages | Relevant to claim No. |
|---|---|---|
| A | JP 2009-528164 A (E.I. DU PONT DE NEMOURS AND COMPANY) 06 August 2009 (2009-08-06)<br>claims, examples | 1-15 |
| A | JP 2007-509223 A (3M INNOVATIVE PROPERTIES COMPANY) 12 April 2007 (2007-04-12)<br>claims, examples | 1-15 |

Form PCT/ISA/210 (second sheet) (July 2022)

**INTERNATIONAL SEARCH REPORT**
**Information on patent family members**

International application No.
**PCT/JP2024/020079**

| Patent document cited in search report | Publication date (day/month/year) | Patent family member(s) | Publication date (day/month/year) |
|---|---|---|---|
| WO 2022/191286 A1 | 15 September 2022 | US 2023/0416421 A1<br>claims, examples, paragraphs [0094], [0106], [0510], [0513]<br>CN 116940604 A | |
| WO 2012/133655 A1 | 04 October 2012 | US 9080035 B2<br>claims, examples<br>CN 103443196 A | |
| JP 10-7863 A | 13 January 1998 | (Family: none) | |
| JP 2012-214766 A | 08 November 2012 | US 9080035 B2<br>claims, examples<br>CN 103443196 A | |
| WO 2020/218618 A1 | 29 October 2020 | US 2022/0213277 A1<br>claims, examples<br>EP 3960774 A1<br>CN 113710709 A | |
| JP 2009-528164 A | 06 August 2009 | US 2007/0207273 A1<br>claims, examples<br>EP 1989154 A1<br>CN 101395098 A | |
| JP 2007-509223 A | 12 April 2007 | US 2005/0090601 A1<br>claims, examples<br>EP 1529785 A1<br>CN 1871267 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011014715 A
- WO 2004050719 A
- WO 2002532583 A
- JP 55120630 A
- JP 2013146950 A
- JP 2013146947 A
- US 7897682 B, Brothers
- US 7977438 B, Brothers
- US 20070015864
- US 20070015865
- US 20070015866
- US 20070276103
- US 20070117914
- US 2007142541
- US 20080015319
- US 3250808 A
- US 3271341 A
- JP 2003119204 A
- WO 2005042593 A
- WO 2008060461 A
- WO 2007046377 A
- JP 2007119526 A
- WO 2007046482 A
- WO 2007046345 A
- US 20140228531
- WO 2013189824 A
- WO 2013189826 A
- JP 61049327 A
- JP 2005527652 A
- WO 2012002038 A
- JP 11049912 A
- US 5804654 A
- JP 11029679 A
- JP 2003002980 A
- JP 2827152 B
- JP 2538783 B
- WO 2007004250 A
- WO 2007000812 A
- JP 10147617 A
- WO 2007013532 A
- WO 2014175123 A
- WO 0001741 A
- WO 9724381 A
- JP 61057324 A
- JP 4081608 A
- JP 5013961 A
- US 200715937
- US 200725902
- US 200727251


### Non-patent literature cited in the description


- Alkyl polygylcoside, Rompp, Lexikon Chemie. Georg Thieme Verlag, 1999
- **KASAI**. *J. Appl. Polymer Sci.*, 1995, vol. 57, 797